Europäisches Patentamt
European Patent Office
Office européen des brevets

(11) Publication number: **0 068 813**
**B1**

# (12) EUROPEAN PATENT SPECIFICATION

(45) Date of publication of patent specification: **25.09.85**

(21) Application number: **82303281.8**

(22) Date of filing: **23.06.82**

(51) Int. Cl.⁴: **C 07 F 7/08,** C 07 F 7/18, A 01 N 55/00

(54) **Fungicidal 1,2,4-triazole and imidazole derivatives.**

(30) Priority: **24.06.81 US 276986**
**16.02.82 US 349261**
**12.05.82 US 377122**
**24.06.81 US 276987**
**16.02.82 US 349262**
**12.05.82 US 377121**

(43) Date of publication of application:
**05.01.83 Bulletin 83/01**

(45) Publication of the grant of the patent:
**25.09.85 Bulletin 85/39**

(84) Designated Contracting States:
**AT BE CH DE FR GB IT LI LU NL SE**

(56) References cited:
**FR-A-1 360 395**
**FR-A-2 269 532**
**US-A-3 692 798**

(73) Proprietor: **E.I. DU PONT DE NEMOURS AND COMPANY**
**1007 Market Street**
**Wilmington Delaware 19898 (US)**

(72) Inventor: **Moberg, William Karl**
**1921 Kynwyd Road**
**Wilmington Delaware 19810 (US)**

(74) Representative: **Hildyard, Edward Martin et al**
**Frank B. Dehn & Co. European Patent Attorneys**
**Imperial House 15-19 Kingsway**
**London WC2B 6UZ (GB)**

(56) References cited:

**CHEMICAL ABSTRACTS, vol. 86, no. 23, 6th June 1977, page 567, no. 171534g, Columbus Ohio (USA); V.D. SHELUDYAKOV et al.: "Synthesis of silicon-containing derivatives of 3,5-dimethylpyrazole, imidazole, and benzimidazole"**

**CHEMICAL ABSTRACTS, vol. 78, no. 5, 5th February 1973, page 523, no. 29989a, Columbus Ohio (USA);**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 068 813 B1

**Description**

Background of the Invention

The present invention relates to silylmethyltriazoles and imidazoles such as, for example, dimethyl(phenyl)(1H-1,2,4-triazol-1-ylmethyl)silane and (1,1'-biphenyl-4-yl)dimethyl(1H-imidazol-1-ylmethyl)-silane, and to the use of these new compounds, in controlling fungus diseases, particularly diseases of living plants.

U.S.-A-3,692,798 discloses compounds of the formula:

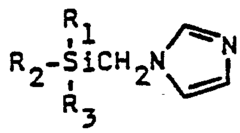

wherein $R_1$, $R_2$ and $R_3$ can be lower alkyl and phenyl. These compounds are structurally distinct from those of the present invention. It is stated that these compounds are useful as antimicrobial agents. No activity is taught against fungi which are pathogenic to living plants.

EP-A2-29,993 discloses compounds of the formula:

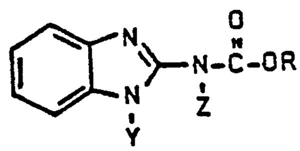

wherein R can be $C_1$—$C_4$ alkyl and Y and Z can be H or $SiR_1R_2R_3$, wherein $R_1$, $R_2$, and $R_3$ can be alkyl, haloalkyl, alkenyl, alkynyl, or substituted phenyl. It is taught that the compounds are useful as agricultural fungicides.

US-A-3,256,308 and 3,337,598 disclose compounds of the formula:

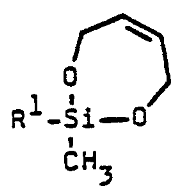

wherein $R_1$ can be methyl, ethyl, vinyl, or phenyl. Their use to control fungi is also taught.

BE-A-785,127 discloses quaternary ammonium salts such as:

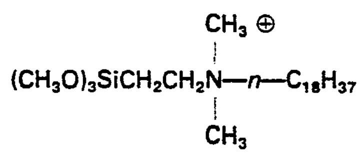

and their use as fungicides.

Research Disclosure 17,652 discloses silyl ethers of the formula:

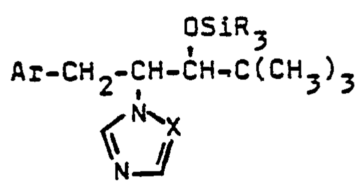

wherein Ar can be substituted phenyl, X can be CH or N, and R can be alkyl. It is taught that the compounds are useful as agricultural fungicides.

DE-A2-3,000,140 discloses silyl ethers of the formula:

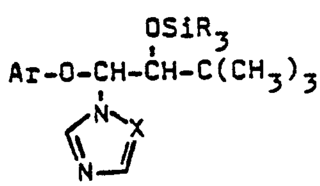

wherein Ar can be substituted phenyl, X can be CH or N, and R can be phenyl or lower alkyl. It is taught that these compounds are useful as agricultural fungicides.

US-A-4,248,992 discloses a class of organosilicon compounds having in a molecule at least one monovalent guanidine group represented by the general formula:

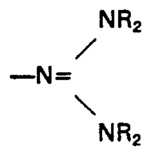

in which R is a hydrocarbon atom or a monovalent hydrocarbon group. These guanidine-containing organosilicon compounds are described as useful as anti-fungal agents for molded plastics and rubbers, particularly silicone rubbers.

U.S.S.R.-A-346,306 discloses silylmethylazoles of the formula:

$$(R_1)_n(R_2O)_{3-n}SiCH_2Az$$

wherein $R_1$ and $R_2$ are alkyl groups, n is 0-3, and Az is a pyrazole, imidazole, or benzimidazole ring, optionally substituted.

U.S.S.R.-A-271,552 discloses silylethylazoles of the formula:

$$(R_1)_n(R_2O)_{3-n}SiCH_2CH_2Az$$

wherein $R_1$, $R_2$, n, and Az are as described in the previous reference.

Summary of the Invention

This invention relates to silylmethyltriazoles of Formula I and to silylmethylimidazoles of Formula II and to agriculturally useful compositions of these compounds.

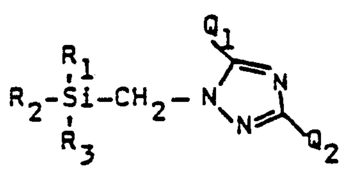

I

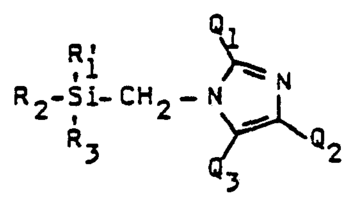

II

wherein

$Q_1$, $Q_2$ and $Q_3$ are independently H or $CH_3$;

$R_1$ is $C_2$—$C_{18}$ alkyl, $C_3$—$C_6$ cycloalkyl, naphthyl, or

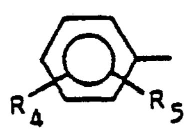 ;

$R'_1$ is $C_6$—$C_{18}$ alkyl, $C_3$—$C_6$ cycloalkyl, naphthyl or

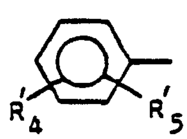 ;

where

$R_4$ and $R_5$ are independently —H; halogen; —$OCH_3$; —$OCF_3$; —$SCH_3$; —$SO_2CH_3$; phenyl; phenyl substituted with halogen and/or $C_1$—$C_4$ alkyl and/or —$CF_3$; phenoxy; phenoxy substituted with halogen and/or $C_1$—$C_4$ alkyl and/or —$CF_3$; —$CF_3$; $C_1$—$C_4$ alkyl; or cyclohexyl; $R'_4$ and $R'_5$ are as defined for $R_4$ and $R_5$ except that both may not simultaneously be H; and

$R_2$ and $R_3$ are independently $C_1$—$C_6$ alkyl, $C_3$—$C_6$ cycloalkyl, $OR_6$, or

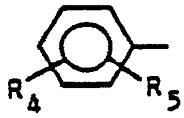 ;

where $R_4$ and $R_5$ are as defined above and $R_6$ is $C_1$—$C_4$ alkyl, or one $R_6$ group may be H and/or one $R_6$ group may be

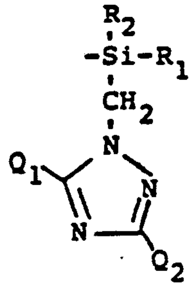

and $R_2$ and $R_3$ together may be a 1,2- or 1,3- or 1,4-glycol bridge or a 1,4-unsaturated glycol bridge substituted by up to four alkyl groups $R_7$—$R_{10}$ that have a total of up to four carbon atoms:

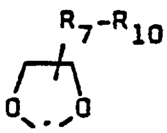 or 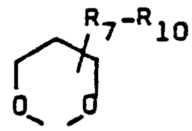 or

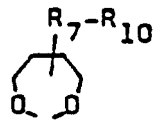 or 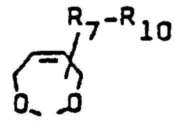

This invention also relates to a method for controlling fungus diseases, particularly fungus diseases of living plants which comprises applying to the locus to be protected an effective amount of a compound of formula I or formula II as defined above.

When $R_2$ or $R_3$ is OH, Formula I and Formula II are understood to include the disiloxane:

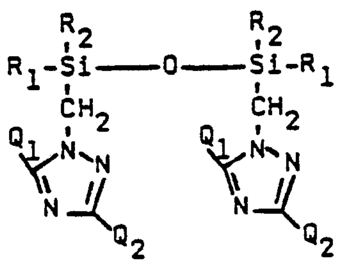 or 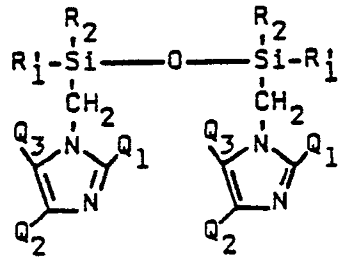

This invention also relates to salts of compounds of Formula I and Formula II with protic acids and complexes with metal ions.

Preferred for their high activity and/or favorable ease of synthesis are compounds of the generic scope wherein

$$Q_1 = Q_2 = H.$$

More preferred for their higher activity and/or more favorable ease of synthesis are compounds of the preferred scope wherein

$R_1$ and $R'_1$ are 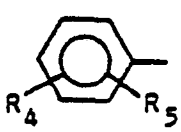 or 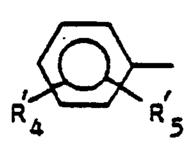 ; and

$R_2$ is $C_1$—$C_4$ alkyl or 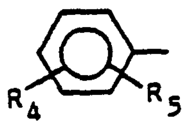 ; and

$R_3$ is $C_1$—$C_4$ alkyl.

Most preferred for their highest activity and/or most favorable ease of synthesis are compounds of the more preferred scope wherein

$R_1$ and $R'_1$ are 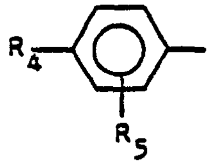 or 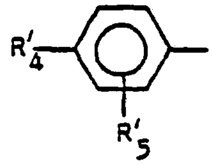

where

$R_4$ and $R'_4$ are at the para positions of $R_1$ or $R'_1$, and are H, F, Cl, Br, or phenyl,

$R_5$ is H, F, Cl, or Br; $R'_5$ is F, Cl, Br or may be H if $R'_4$ is not H; and $R_2$ is

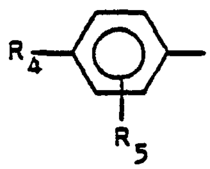

or $C_1$—$C_4$ alkyl; and

$R_3$ is $C_1$—$C_4$ alkyl.

Specifically preferred for their excellent activity and/or most favorable ease of synthesis are the following compounds of Formula I:

(Dimethyl)phenyl(1H-1,2,4-triazol-1-ylmethyl)silane;
Dimethyl(4-methylphenyl)(1H-1,2,4-triazol-1-ylmethyl)silane;
(4-Bromophenyl)dimethyl(1H-1,2,4-triazol-1-ylmethyl)silane;
(1,1'-Biphenyl-4-yl)dimethyl(1H-1,2,4-triazol-1-ylmethyl)silane;
(4-Chlorophenyl)dimethyl(1H-1,2,4-triazol-1-ylmethyl)silane;
(2,4-Dichlorophenyl)dimethyl(1H-1,2,4-triazol-1-ylmethyl)silane;
Butyl(4-chlorophenyl)methyl(1H-1,2,4-triazol-1-ylmethyl)silane;
bis(4-Chlorophenyl)methyl(1H-1,2,4-triazol-1-ylmethyl)silane;
Methyl(diphenyl)(1H-1,2,4-triazol-1-ylmethyl)silane;
[bis(4-Fluorophenyl)]methyl(1H-1,2,4-triazol-1-ylmethyl)silane;
(4-Fluorophenyl)dimethyl(1H-1,2,4-triazol-1-ylmethyl)silane;
Butyl(2,4-dichlorophenyl)methyl(1H-1,2,4-triazol-1-ylmethyl)silane;
[bis(2,4-Dichlorophenyl)]methyl(1H-1,2,4-triazol-1-ylmethyl)silane;
2,4-Dichlorophenyl(methyl)phenyl(1H-1,2,4-triazol-1-ylmethyl)silane;
4-Chlorophenyl(methyl)phenyl(1H-1,2,4-triazol-1-ylmethyl)silane;
4-Fluorophenyl(methyl)phenyl(1H-1,2,4-triazol-1-ylmethyl)silane;
Butyl(methyl)phenyl(1H-1,2,4-triazol-1-ylmethyl)silane;
Butyl(4-fluorophenyl)methyl(1H-1,2,4-triazol-1-ylmethyl)silane;
[bis(1,1'-Biphenyl-4-yl)]methyl(1H-1,2,4-triazol-1-ylmethyl)silane;
(1,1'-Biphenyl-4-yl)butyl(methyl)(1H-1,2,4-triazol-1-ylmethyl)silane;
(1,1'-Biphenyl-4-yl)methyl(phenyl)(1H-1,2,4-triazol-1-ylmethyl)silane.

Especially preferred compounds, methods, and compositions of Formula II are those compounds wherein at least one group $R_1$, $R_2$ or $R_3$ is other than lower alkyl ($C_1$—$C_4$) or phenyl. In particular, the following compounds of Formula II are specifically preferred for their excellent activity and/or most favorable ease of synthesis:

(1,1'-Biphenyl-4-yl)dimethyl(1H-imidazol-1-ylmethyl)-silane;
(2,4-Dichlorophenyl)dimethyl(1H-imidazol-1-ylmethyl)-silane;
Butyl(2,4-dichlorophenyl)(1H-imidazol-1-ylmethyl)methylsilane;
[bis(4-Fluorophenyl)](1H-imidazol-1-ylmethyl)methylsilane;
[bis(2,4-Dichlorophenyl)](1H-imidazol-1-ylmethyl)methylsilane;
(2,4-Dichlorophenyl)(1H-imidazol-1-ylmethyl)methyl(phenyl)silane;
(4-Chlorophenyl)(1H-imidazol-1-ylmethyl)methyl(phenyl)silane;
(4-Fluorophenyl)(1H-imidazol-1-ylmethyl)methyl(phenyl)silane;
(1,1'-Biphenyl-4-yl)butyl(1H-imidazol-1-ylmethyl)methylsilane;
(1,1'-Biphenyl-4-yl)(1H-imidazol-1-ylmethyl)methyl(phenyl)silane;
[bis(1,1-Biphenyl-4-yl)](1H-imidazol-1-ylmethyl)methylsilane;
Butyl(4-chlorophenyl)(1H-imidazol-1-ylmethyl)methylsilane;

(4-Chlorophenyl)dimethyl(1H-imidazol-1-ylmethyl)silane;
Dimethyl(4-fluorophenyl)(1H-imidazol-1-ylmethyl)silane; and
Butyl(4-fluorophenyl)(1H-imidazol-1-ylmethyl)methylsilane.

When $Q_1$ and $Q_2$ are both H or both $CH_3$, the process for preparing the triazole derivatives of Formula I will ordinarily produce a mixture of two triazole isomers:

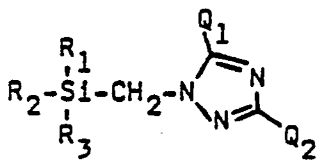

Formula IA

and

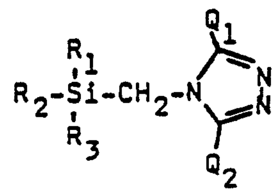

Formula IB

Three isomers are possible when one triazole substituent is H and the other is $CH_3$:

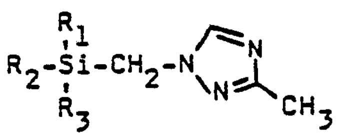

Formula IC

and

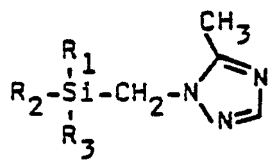

Formula ID

and

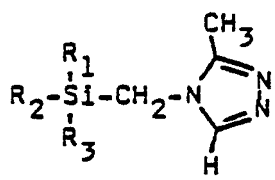

Formula IE

The mixture will contain predominately the isomers of Formula IA or Formula IC; however, the isomers of Formula IB, ID, and IE also have fungicidal activity, and separation of the isomers is not required.

For the imidazole derivatives of Formula II, isomers are produced when $Q_2$ and $Q_3$ are not the same:

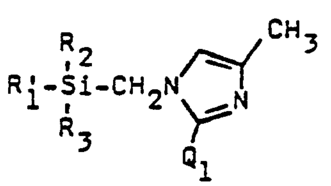

Formula IIA

and

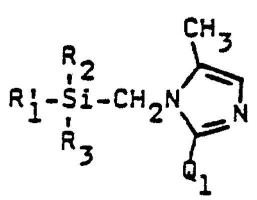

Formula IIB

The isomers of Formula IIA will generally predominate; however, the isomer of Formula IIB also has fungitoxic activity and separation of the isomers is not required.

Detailed Description of the Invention

In the following discussion, $R_1$ is understood to represent both $R_1$ and $R_1'$, since all values of $R_1'$ are included in the definition of $R_1$. Further, the term "azole" will be used to refer to appropriately substituted 1,2,4-triazoles and imidazoles.

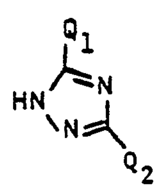

and

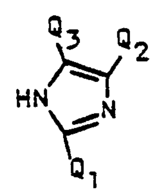

where $Q_1$, $Q_2$ and $Q_3$ may be H or $CH_3$. In drawing structural formulas, the part-structure

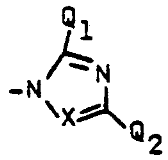

where X is N or $CQ_3$ will be used to denote both triazole and imidazole ring systems.

## Synthesis

The compounds of this invention can be prepared from chloromethylsilanes and 1,2,4-triazole or imidazole sodium salt or their methylated homologs:

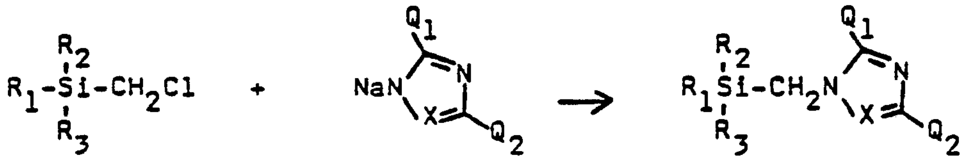

Lithium and potassium azole salts may also be used. Bromomethylsilanes, iodomethylsilanes, or arylsulfonyloxymethylsilanes may be used instead of chloromethylsilanes. Roughly equimolar amounts of the reagents are used (except when $R_3 = OR_6$; see below), with the azole salt often taken in 5—10% excess of theory. In addition, 1,2,4-triazole or imidazole themselves can be used if an acid acceptor is added. Suitable acceptors include excess azole alkali metal alkoxides such as sodium methoxide or potassium *tert*-butoxide, inorganic bases such as potassium carbonate, or sodium hydride, and tertiary amines such as triethylamine. When the acid acceptor is a good nucleophile, such as sodium methoxide, an excess should be avoided to prevent undesired side reactions. Suitable solvents include polar aprotic solvents such as dimethylformamide, dimethyl sulfoxide, or acetonitrile; ethers such as tetrahydrofuran or 1,2-dimethoxyethane; and ketones such as 2-butanone. The reaction temperature can vary between 0° and 200°C, preferably between 25° and 100°C. The reaction can be conducted under elevated pressure, but it is generally preferable to operate at atmospheric pressure. The optimum temperature and reaction time will vary with the concentration and choice of reagents, and especially with the choice of solvent. For example, 1,2,4-triazole and sodium methoxide at roughly 2 molar concentration in dimethylformamide gives good conversion in approximately 2 hours at 80—90°C, whereas 1,2,4-triazole and potassum carbonate at roughly 1 molar concentration in 2-butanone requires 8—12 hours at reflux. The imidazole reactions are generally more rapid. In general, reaction times of 1 to 24 hours are required. Progress of the reaction can be followed by working up aliquots for nmr analysis and following the intensities of the starting material $SiCH_2Cl$ singlet near 2.9 and the product $SiCH_2N$ singlets, which are near 3.8 for compounds of Formula I and near 3.7 for compounds of Formula II.

With respect to the triazole derivatives of Formula I, the 1H-imidazol-1-ylmethyl compound as prepared above is accompanied by a minor amount of the isomeric 4H-1,2,4-triazol-4-ylmethyl compound:

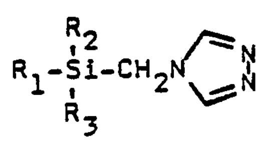

The ratio of isomers varies with values of R and reaction conditions, with a 1-substituted to 4-substituted ratio of roughly 10:1 often observed. The mono- and dimethyltriazoles give similar 4H-isomers as minor products:

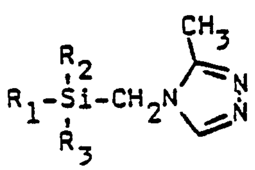

or

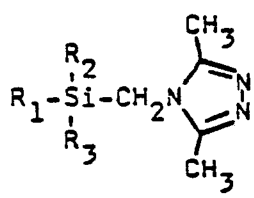

When the unsubstituted silylmethyltriazole is available, metalation-methylation provides an alternate synthesis of the methylated homologs:

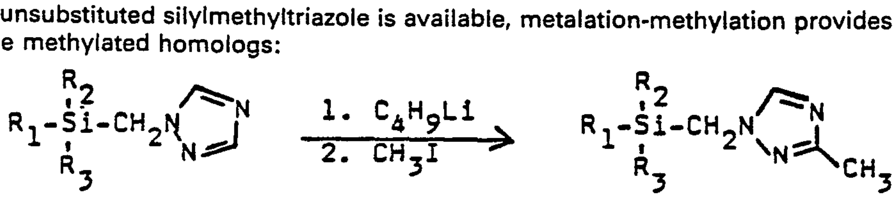

With respect to the imidazole derivatives of Formula II, isomers are possible only when $Q_2$ and $Q_3$ are not the same. Two isomers result:

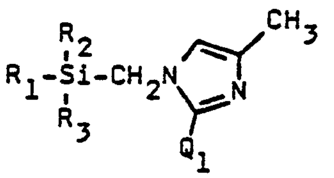

and

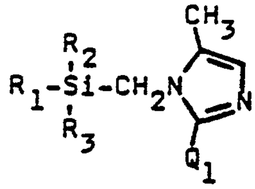

Formula IIA Formula IIB

The product of Formula IIA will generally predominate. If desired, the isomers may be separated by standard techniques such as crystallization, distillation, or chromatography.

For the case where $R_3 = OR_6$ in the triazole or imidazole product, the chlorines of a chloro(chloromethyl)silane can be replaced in one of two ways. In one method, at least two equivalents of the azole sodium salt can be used. An intermediate containing a very reactive silicon-azole bond forms, and reaction with water or an alcohol gives the desired oxygenated compounds:

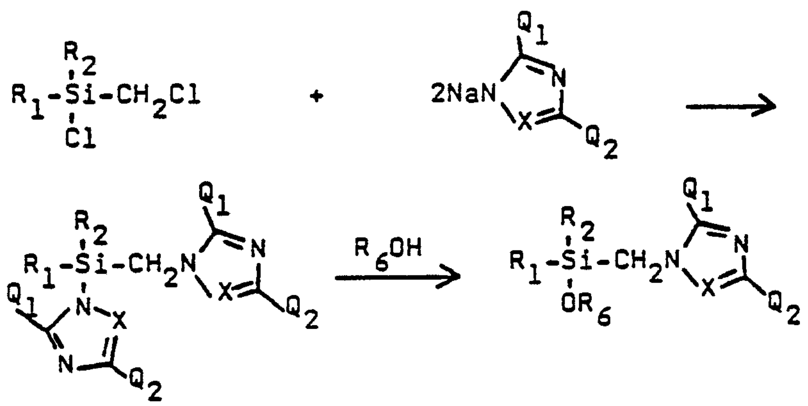


Suitable solvents and reaction conditions are the same as those outlined above for azole displacements. The temperature of alcoholysis is not critical, and warming to 50—100°C can be used to ensure complete reaction when $R_6 = C_1$—$C_4$ alkyl. For $R_6$ = H, however, hydrolysis is best conducted near room temperature to minimize disiloxane formation, recognizing that silanol-disiloxane equilibrium is possible whenever $R_6$ = H:

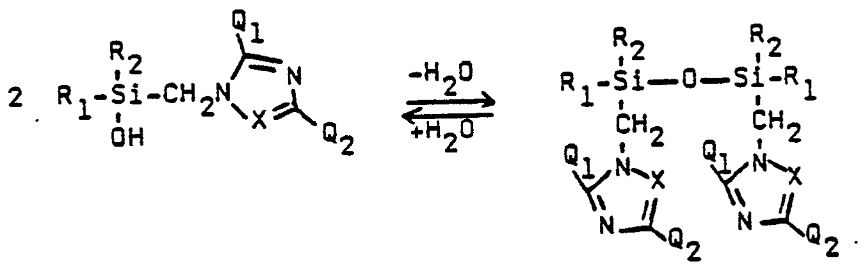


The position of equilibrium and the rate at which it is established will vary with the values of $R_1$ and $R_2$, solvent, temperature, and the presence or absence of acidic or basic catalysts.

In the second method, the silicon-oxygen bond is formed first, followed by azole displacement as described earlier:

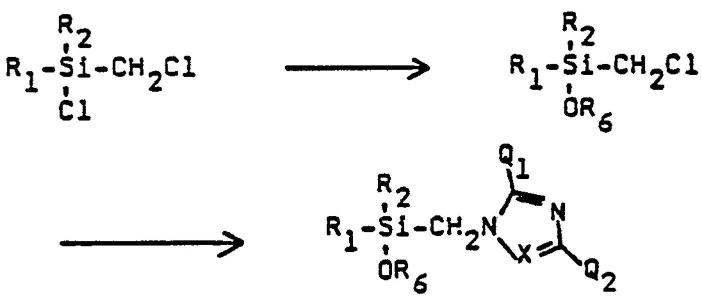

Reaction of the chlorosilane with $R_6OH$ may be conducted in almost any non-hydroxylic solvent, with ethers such as diethyl ether, 1,2-dimethoxyethane, and tetrahydrofuran or dipolar aprotic solvents such as dimethylformamide and acetonitrile being preferred. Although an acid acceptor is not required, it is preferred to add a tertiary amine such as triethylamine or pyridine. The reaction temperature may vary from 0° to 100°C, and $R_6OH$ is often taken in excess of theory. The combination of 2 equivalents of $R_6OH$, 1.1 equivalents of triethylamine, and equivalent of imidazole in dimethylformamide at 80° for two hours has been broadly applicable.

Extending these methods to (chloromethyl)di-chlorosilanes provides dioxygenated silanes:

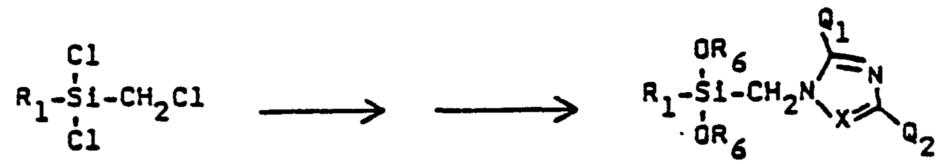

Glycol derivatives are formed similarly, using a diol instead of two molecules of $R_6OH$.

An alternative synthesis for alkoxy(chloromethyl)silanes involves selective replacement of one alkoxy group of a dialkoxysilane with an organometallic reagent:

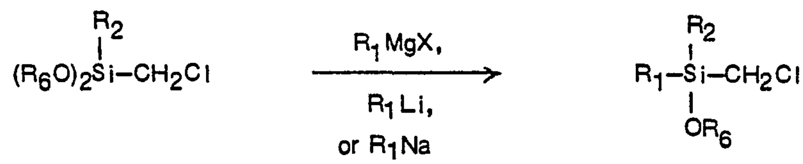


Conditions for this displacement are as described in the next paragraph, with the added stipulation that the organometallic should be added to the dialkoxysilane.

The required chloromethylsilane starting materials are made from commercially available chloro(chloromethyl)dimethylsilane, chloromethyl(dichloro)methylsilane, or chloromethyltrichlorosilane:

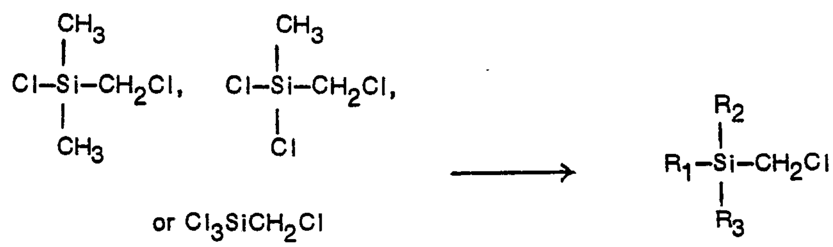


The Si—Cl bonds in these compounds react with organolithium, organosodium, or Grignard reagents to introduce alkyl and/or aryl groups according to literature procedures, leaving the C—Cl bond intact. For the silanes containing two or three Si—Cl bonds, stepwise replacements are possible, giving considerable flexibility to the values of $R_1$—$R_3$. Bromosilanes, iodosilanes, or alkoxysilanes may be substituted for chlorosilanes in these reactions. Preferred solvents for these reactions include ethers such as tetrahydrofuran, 1,2-dimethoxyethane, and diethyl ether, or hydrocarbons such as hexane and toluene. The preferred temperature will vary between −80° and 40° depending on the nature of the organometallic reagent, how it was generated, and the solvent. For example, when aryllithium reagents are generated in tetrahydrofuran from aryl bromides using butyllithium, the mixture should be held below roughly −40° to avoid side reactions involving the bromobutane produced. If the organometallic solution is stable at higher temperatures, however, reactions may be run at −20° to 25° without competing reaction of the $CH_2Cl$ group. The reaction is rapid at all temperatures, and only a short period, for example 30 to 60 minutes, is required after the reagents are combined to ensure complete reaction.

Reactions of $ClSi(CH_3)_2CH_2Cl$ with Grignard reagents are described by C. Eaborn and J. C. Jeffrey, *J. Chem. Soc., 1954,* 4266; and a recent review on synthesis of aryltrimethylsilanes from $ClSi(CH_3)_3$, which contains experimental procedures useful for $ClSi(CH_3)_2CH_2Cl$ reactions, is that of D. Habich and F. Effenberger, *Synthesis, 1979,* 841. Selective introduction of one new alkyl group into $Cl_2Si(CH_3)CH_2Cl$ is described by V. P. Kuznetsova and R. M. Sokolovaskaya, *Zh. Obshch. Khim., 1969,* 1977; *Chem. Abstr., 72,* 31897 p; and one aryl group may be introduced selectively as well:

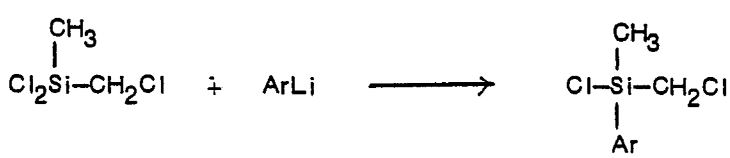

In both cases the organometallic reagent should be added to the dichlorosilane at low temperature with good mixing for best yields.

Reactions of $Cl_3SiCH_2Cl$ with Grignard reagents re described by A. A. Zhdanov, V. I. Pakhomov, and T. Bazhanova, *Zh. Obshch. Khim., 1973,* 1280; *Chem. Abstr., 79,* 66452 m. Adding organometallic reagents to the trichlorosilane is recommended even when three identical groups are being introduced, because adding $Cl_3SiCH_2Cl$ to an organometallic reagent is not usually successful. A single aryl grup may also be introduced:

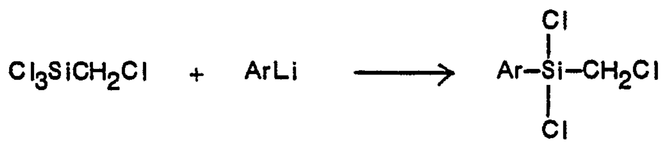

A useful modification of literature procedures, applicable when $R_1$ or $R'_1$ is an aryl group, has been developed in the present work. Instead of preforming an organolithium reagent and then combining it with a chlorosilane, it has been found that an aryl bromide and a chlorosilane such as $ClSi(CH_3)_2CH_2Cl$ may be combined in an inert solvent such as tetrahydrofuran and treated at −80 to −40° with butyllithium. Bromine-lithium exchange proceeds selectively, and the resulting aryllithium reacts with the Si—Cl bond as it is formed:

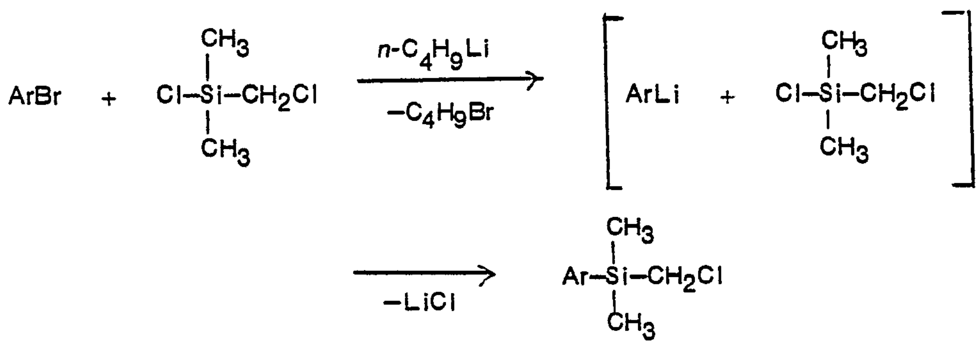


This reaction works equally well for aryl-substituted chlorosilanes such as $ClSi(CH_3)(C_6H_5)CH_2Cl$, and it can be used to introduce two aryl groups into $Cl_2Si(CH_3)CH_2Cl$. In a further extension, an aryl and an $n$-butyl group may be introduced in one step:

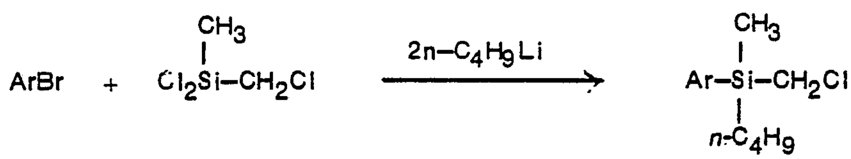


Substitution of other alkyllithiums RLi for $n$-butyllithium provides a general route to $Ar(CH_3)Si(R)CH_2Cl$.

In the following examples, temperatures are reported in degrees Celsius. Abbreviations for nuclear magnetic resonance (nmr) spectra are s = singlet, d = doublet, t = triplet, q = quartet, m = multiplet; peak positions are reported as parts per million downfield from internal tetramethylsilane. Infrared (ir) peak positions are given in reciprocal centimeters ($cm^{-1}$). Hexanes refers to the mixture of isomers boiling 68—69°, and ether refers to diethyl ether.

### Example 1

*Preparation of (1,1'-Biphenyl-4-yl)(chloromethyl)dimethylsilane*

A solution of 9.9 g (0.042 mol) of 4-bromobiphenyl in 50 ml of dry tetrahydrofuran was cooled to −78° under nitrogen and stirred while 26.5 ml (0.042 mol) of 1.6 molar $n$-butyllithium in hexane was added dropwise over 15 minutes. A thick slurry formed, and 35 ml of tetrahydrofuran was added to facilitate stirring. With continued cooling, 5.9 ml (6.7 g, 0.046 mol) of chloro(chloromethyl)dimethylsilane was added over 10 minutes, giving a clear solution that was allowed to warm to room temperature. Addition of 300 ml of ether, filtration to remove precipitated lithium chloride, and evaporation of the filtrate left 13.2 g of semisolid. Redissolution in ether, filtration, and evaporation of the filtrate left 11.0 g (100% crude) of the title compound as a colorless solid, m.p. 30—40°, suitable for further reaction. Trace impurities could be removed by sublimation at 30°/0.1 mm, (13 Pa), leaving the title compound unsublimed in 83% recovery: m.p. 37—40°; ir (Nujol[R]) 1585, 1240, 1110, 830, 810, 750, 690 $cm^{-1}$; nmr ($CDCl_3$) 0.4 (6H, s), 2.9 (2H, s), 7.3—7.7 (9H, m).

Example 2

*Preparation of (4-Bromophenyl)(chloromethyl)dimethylsilane*

4-Bromophenylmagnesium bromide was prepared from 11.8 g (0.050 mol) of 1,4-dibromobenzene and 1.2 g (0.050 g-atom) of magnesium turnings in 75 ml of ether according to G. P. Schiemenz, *Org. Syn.*, Coll. Vol. *5*, 496 (1973). The resulting mixture was chilled in ice under a nitrogen atmosphere while a solution of 6.6 ml (7.2 g, 0.050 mol) of chloro(chloromethyl)dimethylsilane in 10 ml of ether was added dropwise. The reaction mixture was then stirred overnight at room temperature, quenched carefully with saturated aqueous ammonium chloride, and filtered. The ether phase of the filtrate was washed with brine, dried over magnesium sulfate, and evaporated to leave 9.8 g of an oil. Distillation gave 3.8 g (29%) of the title compound as a colorless liquid: bp 97° (1 mm; 133 Pa); ir (neat) 2950, 1575, 1475, 1370, 1250, 1065, 1010, 840, 805, 720 $cm^{-1}$; nmr ($CDCl_3$) 0.4 (rH, s), 2.9 (2H, s), 7.3—7.7 (4H, m).

Example 3

*Preparation of Chloromethyl(4-chlorophenyl)dimethylsilane*

A solution of 9.6 g (0.050 mol) of 4-bromochlorobenzene and 6.6 ml (7.2 g, 0.050 mol) of chloro(chloromethyl)dimethylsilane in 75 ml of tetrahydrofuran was stirred at −78° under nitrogen while 31 ml (0.050 mol) of 1.6 molar *n*-butyllithium in hexane was added dropwise. The resulting clear solution was allowed to warm to room temperature, diluted with ether until no more lithium chloride precipitated, and filtered. Evaporation of the filtrate left 10.6 g of a light yellow liquid, which was distilled to give 6.0 g (55%) of the title compound as a colorless liquid: bp 54-58°C (0.05 mm; 7 Pa); ir (neat) 2910, 1560, 1470, 1370, 1250, 1080, 1010, 840, 805, 790, 740 $cm^{-1}$; nmr ($CDCl_3$) 0.4 (6H, s), 2.9 (2H, s), 7.1—7.6 (4H, q).

The *in situ* aryllithium generation described in this example is also useful for preparing the product of Example 1. If the reaction is run at 0.5—0.7 molar in 4-bromobiphenyl and the temperature is held at −65 to −55°C during butyllithium addition, little or no solid precipitates.

Example 4

*Preparation of Chloromethyl(2,4-dichlorophenyl)dimethylsilane*

A solution of 17.0 g (0.075 mol) of 2,4-dichlorobromobenzene and 10.8 ml (11.8 g, 0.082 mol) of chloro(chloromethyl)dimethylsilane in 100 ml of dry tetrahydrofuran was chilled to −70° under nitrogen and stirred while 49 ml (0.079 mol) of 1.6 molar *n*-butyllithium in hexane was added dropwise at a rate that held the mixture below −70°. The resulting cloudy reaction mixture was allowed to warm to room temperature, poured into 400 ml of hexanes, filtered, and evaporated to leave 20.5 g of yellow liquid. Distillation gave 12.6 g (66%) of the title compound as a colorless liquid: bp 83° (0.02 mm; 3 Pa); $n_D^{24}$ 1.5522; ir (neat) 1565, 1455, 1360, 1255, 1120, 1100, 1040, 825 $cm^{-1}$; nmr ($CDCl_3$) 0.5 (6H, s) 3.1 (2H, s), 7.0—7.5 (3H, m).

Example 5

*Preparation of Chloromethyl(2,6-dimethoxyphenyl)dimethylsilane*

A solution of 25.0 g (0.181 mol) of 1,3-dimethoxybenzene in 250 ml of tetrahydrofuran was stirred at room temperature under nitrogen while 125 ml (0.200 mol) of 1.6 molar *n*-butyllithium in hexane was added dropwise over 30 minutes. The resulting mixture was refluxed 1.5 hour, giving an orange-brown solution that was cooled to 5° and stirred while 27 ml (29.4 g, 0.205 mol) of chloro(chloromethyl) dimethylsilane was added dropwise over 15 minutes. The resulting white suspension was allowed to warm to room temperature, stirred there 1 hour, diluted with ethyl acetate, poured into water, and extracted with ether. The organic layers were washed with brine, dried over magnesium sulfate, and distilled to give 37.0 g (84%) of the title compound as a colorless liquid: bp 98—110° (0.1 mm; 13 Pa); nmr ($CDCl_3$) 0.4 (6H, s), 3.1 (2H, s), 3.7 (6H, s), 6.3 (2H, d), 7.1 (1H, m).

By varying the organolithium or Grignard reagent, the procedures of Examples 1—5 can be used to prepare the compounds of Table I. Closely related procedures are also known in the literature, for example the use of arylmagnesium chlorides by C. Eaborn and J. C. Jeffrey, *J. Chem. Soc., 1954*, 4266. For compounds where $R_1$ is a phenyl ring bearing a 2-halo substituent, an alternative to the *in situ* procedure of Example 4 is the special arylmagnesium iodide method of C. Eaborn, K. L. Jaura, and D. R. M. Walton, *J. Chem. Soc., 1964,* 1198.

TABLE I

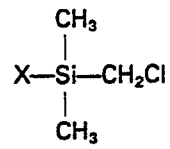

| $X = R_1$ or $R'_1$ | |
|---|---|
| $C_2H_5$ | bp 127—128° |
| $n$-$C_4H_9$ | bp 172° |
| $n$-$C_{12}H_{25}$ | $n_D^{23}$ 1.4510 |
| $n$-$C_{18}H_{37}$ | $n_D^{22}$ 1.4556 |
| cyclopropyl | |
| cyclopentyl | |
| cyclohexyl | bp 120—130° (10 mm; 1330 Pa) |
| 1-naphthyl | bp 112° (0.08 mm; 11 Pa) |
| 2-naphthyl | |
| phenyl | bp 85—86° (3 mm; 399 Pa) |
| 4-fluorophenyl | bp 59—60° (0.1 mm; 13 Pa) |
| 4-methoxyphenyl | bp 80° (0.05 mm; 7 Pa) |
| 4-phenoxyphenyl | bp 122° (0.03 mm; 4 Pa) |
| 4-(4-chlorophenoxy)phenyl | $n_D^{22}$ 1.5773 |
| 4-(4-fluorophenoxy)phenyl | |
| 4-(4-trifluoromethylphenoxy)phenyl | |
| 4-(4-methylphenoxy)phenyl | |
| 4-methylthiophenyl | bp 92—93° (0.05 mm; 7 Pa) |
| 4-trifluoromethylphenyl | $n_D^{23}$ 1.4686 |
| 4-methylphenyl | bp 96° (7 mm; 931 Pa) |
| 4-*i*-propylphenyl | |
| 4-*t*-butylphenyl | $n_D^{23}$ 1.5056 |
| 4-methylsulfonylphenyl | m.p. 64—68° |
| 4-cyclohexylphenyl | $n_D^{21}$ 1.5424 |
| 4-trifluoromethoxyphenyl | bp 55—57° (0.15 mm; 20 Pa) |
| 4-(4-chlorophenyl)phenyl | |
| 4-(4-bromophenyl)phenyl | |
| 4-(4-methylphenyl)phenyl | |
| 4-(4-trifluoromethylphenyl)phenyl | |
| 4-(4-fluorophenyl)phenyl | |
| 3-phenylphenyl | $n_D^{20}$ 1.5862 |
| 3-trifluoromethylphenyl | bp 59—62° (0.3 mm; 40 Pa) |
| 3-chlorophenyl | bp 73° (0.15 mm; 20 Pa) |
| 2-trifluoromethylphenyl | $n_D^{23}$ 1.4826 |
| 2-phenylphenyl | $n_D^{20}$ 1.5772 |
| 2-chlorophenyl | bp 78—80° (0.3 mm; 40 Pa) |
| 2-methoxyphenyl | $n_D^{21}$ 1.5164 |
| 2,3-dimethylphenyl | |
| 2,3-dimethoxyphenyl | $n_D^{22}$ 1.5254 |
| 2,4-difluorophenyl | |
| 2-fluoro-4-chlorophenyl | |
| 2-chloro-4-phenylphenyl | |
| 2-fluoro-4-phenylphenyl | |
| 2-methyl-5-chlorophenyl | |
| 2,6-dimethylphenyl | |
| 3,4-dichlorophenyl | bp 98° (0.6 mm; 80 Pa) |
| 3-methyl-4-fluorophenyl | |
| 3,5-dichlorophenyl | bp 94—95° (0.25 mm; 33 Pa) |

Example 6

*Preparation of (1,1'-Biphenyl-4-yl)butyl(chloromethyl)methylsilane*

The title compound can be prepared by the procedure of Example 1 by substituting (butyl)chloro(chloromethyl)methylsilane for chloro(chloromethyl)dimethylsilane.

Related compounds can be prepared by the procedures of Examples 1—5, using the appropriate organolithium or Grignard reagent and $Cl(R_2)Si(CH_3)CH_2Cl$. The required chloromethylsilane starting materials are made from $R_2MgCl$ or $R_2Li$ and $Cl_2Si(CH_3)CH_2Cl$ according to Examples 14 and 15, and literature procedures such as V. P. Kuznetsova and R. M. Sokolovaskaya, *Zh. Obschch. Khim., 1969,* 1997.

Alternatively, both the biphenyl and butyl groups can be introduced simultaneously as follows: A solution of 23.3 g (0.10 mol) of 4-bromobiphenyl and 12.7 ml (16.4 g, 0.10 mol) of chloromethyl(dichloro)methylsilane in 150 ml of dry tetrahydrofuran was chilled under nitrogen to −70° and stirred while 125 ml (0.20 mol) of 1.6 molar *n*-butyllithium in hexane was added at a rate that held the mixture below −60°C. The resulting thin slurry was allowed to warm to room temperature, treated cautiously with 10 ml of ethyl acetate, and poured into 300 ml of water. The organic layer was separated, the aqueous phase was washed with another 100 ml of hexanes, and the combined organic phases were washed three times with water, once with brine, dried over magnesium sulfate, and evaporated to leave 33.9 g of a viscous yellow oil. Distillation gave 9.5 g (31%) of the title compound: bp 135-158° (0.1 mm; 13 Pa); $n_D^{22}$ 1.5743; ir (neat) 3060, 3015, 2960, 2920, 2870, 1600, 1485, 1390, 1380, 1250, 1120, 1075, 1005, 875, 810, 800, 760, 700 $cm^{-1}$; nmr ($CDCl_3$): 0.4 (3H, s), 0.6—1.8 (9H, m), 2.9 (2H, s) and 7.0—7.7 (9H, m).

Example 7

*Preparation of Butyl(chloromethyl)(4-chlorophenyl)-methylsilane*

A solution of 14.4 g (0.075 mol) of 4-bromochlorobenzene and 9.5 ml (12.3 g, 0.075 mol) of chloromethyl(dichloro)methylsilane in 150 ml of tetrahydrofuran was cooled to −60° under nitrogen and stirred while 94 ml (0.15 mol) of 1.6 molar *n*-butyllithium in hexane was added dropwise at a rate that held the mixture between −65 and −55°. The resulting slurry was allowed to warm to room temperature, giving a solution that was diluted with hexanes until no more lithium chloride precipitated. Filtration, evaporation of the filtrate, dissolution of the residue in hexanes, refiltration, and evaporation left 19.8 g of a pale orange liquid. Distillation gave first 1.8 g (12%) of chloromethyl(dibutyl)methylsilane, bp 45°C (0.05 mm; 7 Pa), followed by 6.8 g (35%) of the title compound as a colorless liquid: bp 90°C (0.05 mm); $n_D^{21}$ 1.5246; ir (neat) 2925, 1580, 1380, 1260, 1090, 1015, 820, 740 $cm^{-1}$; nmr ($CDCl_3$) 0.4 (3H, s), 0.6—1.5 (9H, m), 2.9 (2H, s), 7.0—7.4 (4H, q).

Example 8

*Preparation of Chloromethyl(2,4-dichlorophenyl)methyl(phenyl)silane*

A solution of 13.6 g (0.060 mol) of 2,4-dichlorobromobenzene and 12.3 g (0.060 mol) of chloro(chloromethyl)methyl(phenyl)silane (prepared as in Example 14) in 85 ml of dry tetrahydrofuran was chilled to −60° under nitrogen and stirred while 38 ml (0.060 mol) of 1.6 molar *n*-butyllithium in hexane was added dropwise at a rate that held the mixture below −55°. The resulting red solution was allowed to warm to room temperature, treated with 5 ml of ethyl acetate to quench any unreacted organolithium reagent, and poured into 170 ml of water. The organic layer was separated, the aqueous phase was washed with 50 ml of hexanes, and the combined organic phases were washed three times with water and once with brine, dried over magnesium sulfate, and evaporated to leave 19.0 g of bright yellow oil. Distillation gave 8.6 g (45%) of the title compound as a colorless liquid: b.p. 125—130° (0.05 mm ; 7 Pa); $n_D^{21}$ 1.5978; ir (neat) 3080, 3060, 2960, 2930, 1570, 1540, 1460, 1430, 1365, 1260, 1120, 1100, 1040, 820, 745, 735, 705 $cm^{-1}$; nmr ($CDCl_3$) 0.8 (3H, s), 3.4 (2H, s), 7.2—7.9 (8H, m).

Example 9

*Preparation of Chloromethyl[bis(4-chlorophenyl)]methylsilane*

A solution of 19.1 g (0.10 mol) of 4-chlorobromobenzene in 200 ml of dry tetrahydrofuran was chilled to −60° under nitrogen and stirred while 63 ml (0.10 mol) of 1.6 molar *n*-butyllithium in hexane was added dropwise at a rate that held the mixture below −55°. Stirring and cooling were continued while 6.3 ml (8.2 g, 0.05 mol) of chloromethyl(dichloro)methylsilane was added dropwise at a rate that held the mixture below −50°. The resulting orange solution was allowed to warm to room temperature, and workup as in Example 8 provided 16.5 g of a pale yellow oil. Kugelrohr distillation at 0.05 mm (7 Pa) and an airbath temperature of 130—150°C gave 9.5 g (60%) of the title compound as a colorless liquid: $n_D^{24}$ 1.5913; ir (neat) 3080, 3040, 3020, 2960, 2930, 1580, 1490, 1380, 1260, 1085, 1015, 805, 790, 775, 740 $cm^{-1}$; nmr ($CDCl_3$) 0.7 (3H, s), 3.1 (2H, s), 7.2—7.7 (8H, m); analysis for $C_{14}H_{13}Cl_3Si$ (mw 315.70):

| | | | |
|---|---|---|---|
| Calculated: | C, 53.26; | H, 4.15; | Cl, 33.69. |
| Found: | C, 53.4; | H, 4.4; | Cl, 34.2. |
| | 53.5; | 4.4; | 34.1. |

### Example 10

*Preparation of (Chloromethyl)bis(4-fluorophenyl)methylsilane*

A solution of 35 g (0.20 mol) of 4-fluorobromobenzene in 300 ml of dry tetrahydrofuran was chilled to −60° under nitrogen and stirred while 126 ml (0.20 mol) of 1.6 molar *n*-butyllithium in hexane was added dropwise at a rate that held the mixture below −55°. Stirring and cooling were continued while 12.6 ml (16.4 g, 0.10 mol) of chloromethyl(dichloro)methylsilane was added dropwise at a rate that held the mixture below −50°. The resulting solution was allowed to warm to room temperature, and workup as in Example 8 provided 26.4 g of a clear yellow liquid. Distillation gave 20.6 g (73%) of the title compound as a colorless liquid: bp 107—127° (0.1 mm; 13 Pa); $n_D^{22}$ 1.5481; nmr ($CDCl_3$): 0.7 (3H, s), 3.2 (2H, s), 7.1 (4H, t, J = 9) and 7.6 (4H, d of d, J = 6 and 9).

Repeating this reaction using chloromethyl(diethoxy)methylsilane instead of the dichlorosilane gave the title compound in 58% yield after distillation: bp 115—138° (0.2 mm); $n_D^{21}$ 1.5464; nmr as above.

### Example 11

*Preparation of Chloromethyl(2-chlorophenyl)(4-chlorophenyl)methylsilane*

A solution of 6.3 ml (8.2 g, 0.05 mol) of chloromethyl(dichloro)methylsilane and 8.1 g (0.05 mol) of 2-bromochlorobenzene in 75 ml of dry tetrahydrofuran was chilled to −60° under $N_2$ and stirred while 31 ml (0.05 mol) of 1.6 molar *n*-butyllithiumhexane solution was added at a rate that held the mixture below −55°. With continued cooling and stirring, 8.1 g (0.05 mol) of 4-bromochlorobenzene was added as a solid, followed by another 31 ml portion of the 1.6 molar *n*-butyllithium solution at a rate that held the mixture below −55°C. The resulting thin slurry was allowed to warm to room temperature, treated cautiously with 10 ml of ethyl acetate, and worked up as in Example 8 to give 15.0 g of a clear yellow oil. Distillation provided 5.9 g (37%) of the title compound: bp 150—165° (0.7 mm; 93 Pa); $n_D^{20}$ 1.5916; ir (neat) 3060, 3020, 2960, 2920, 2870, 1580, 1560, 1490, 1420, 1380, 1255, 1125, 1115, 1085, 1035, 1015, 805, 750 $cm^{-1}$; nmr ($CDCl_3$) 0.8 (3H, s), 3.3 (2H, s), 7.2—7.7 (8H, m).

The compounds of Table II are made by stepwise replacement of the Si-Cl bonds of $Cl_2Si(CH_3)CH_2Cl$, according to the procedures of Examples 6—11.

TABLE II

$$X-\underset{R_2}{\overset{CH_3}{\underset{|}{\overset{|}{Si}}}}-CH_2Cl$$

| $X = R_1, R_1'$ | $R_2$ | |
|---|---|---|
| $C_2H_5$ | $C_2H_5$ | |
| $i$-$C_3H_7$ | cyclohexyl | |
| $n$-$C_4H_9$ | $n$-$C_4H_9$ | bp 45° (0.05 mm; 7 Pa) |
| $n$-$C_1O_0H_{21}$ | cyclopropyl | |
| $n$-$C_{18}H_{37}$ | 3-methylbutyl | |
| cyclopropyl | $n$-$C_6H_{13}$ | |
| cyclohexyl | cyclohexyl | |
| 1-naphthyl | $t$-$C_4H_9$ | |
| 2-naphthyl | $n$-$C_5H_{11}$ | |
| phenyl | $n$-$C_3H_7$ | |
| phenyl | $n$-$C_4H_9$ | bp 82—90° (0.1 mm; 13 Pa) |
| phenyl | 1,1-dimethylpropyl | |
| 4-phenylphenyl | $C_2H_5$ | |
| 4-bromophenyl | $i$-$C_3H_7$ | |

TABLE II (continued)

| X = $R_1$, $R_1'$ | $R_2$ | |
|---|---|---|
| 4-fluorophenyl | $n$-$C_4H_9$ | bp 90—92° (0.1 mm; 13 Pa) |
| 4-phenoxyphenyl | $t$-$C_4H_9$ | |
| 4-$t$-butylphenyl | cyclopentyl | |
| 3-trifluoromethylphenyl | $s$-$C_4H_9$ | |
| 3-chlorophenyl | $n$-$C_5H_{11}$ | |
| 2-methylthiophenyl | cyclobutyl | |
| 2-phenylphenyl | $i$-$C_4H_9$ | |
| 2,4-dichlorophenyl | $n$-$C_4H_9$ | bp 109—112° (0.1 mm; 13 Pa) |
| 2,4-dichlorophenyl | cyclopropyl | |
| 2,3-dimethylphenyl | $n$-$C_3H_7$ | |
| 2-methyl-5-fluorophenyl | cyclopentyl | |
| 2,5-dimethoxyphenyl | 4-methylpentyl | |
| 2,6-dimethylphenyl | 1-methylbutyl | |
| 3,5-dichlorophenyl | $n$-$C_4H_9$ | |
| 3,5-dichlorophenyl | cyclohexyl | |
| 3-methyl-4-chlorophenyl | cyclopropyl | |
| phenyl | phenyl | bp 104—110° (0.2 mm; 27 Pa) |
| 4-fluorophenyl | phenyl | $n_D^{22}$ 1.5624 |
| 4-chlorophenyl | phenyl | bp 140—148° (0.1 mm; 13 Pa) |
| 4-bromophenyl | phenyl | bp 145—155° (0.1 mm; 13 Pa) |
| 4-phenylphenyl | phenyl | bp 173—178° (0.1 mm; 13 Pa) |
| 4-$t$-butylphenyl | phenyl | |
| 4-methylthiophenyl | phenyl | |
| 4-phenoxyphenyl | phenyl | |
| 4-trifluoromethoxyphenyl | phenyl | |
| 4-methylsulfonylphenyl | phenyl | |
| 4-cyclohexylphenyl | phenyl | |
| 4-(4-fluorophenyl)phenyl | phenyl | |
| 3-trifluoromethylphenyl | phenyl | |

TABLE II (continued)

| X = $R_1$, $R_1'$ | $R_2$ | |
|---|---|---|
| 2-chlorophenyl | phenyl | bp 132—135° (0.1 mm; 13 Pa) |
| 2-methoxyphenyl | phenyl | |
| 2-chloro-4-phenylphenyl | phenyl | |
| 2-fluoro-4-phenylphenyl | phenyl | |
| 3,5-dichlorophenyl | phenyl | |
| 2,5-dimethoxyphenyl | phenyl | |
| 2,6-dimethoxyphenyl | phenyl | |
| 4-bromophenyl | 4-bromophenyl | bp 160—170° (0.1 mm; 13 Pa) |
| 4-phenylphenyl | 4-phenylphenyl | m.p. 115—117° |
| 4-methoxyphenyl | 4-methoxyphenyl | bp 166—171° (0.1 mm; 13 Pa) |
| 3-trifluoromethylphenyl | 3-trifluoromethylphenyl | |
| 2-methoxyphenyl | 2-methoxyphenyl | |
| 2-chlorophenyl | 2-chlorophenyl | bp 135—140° (0.1 mm; 13 Pa) |
| 2,4-dichlorophenyl | 2,4-dichlorophenyl | $n_D^{21}$ 1.5956 |
| 3,5-dichlorophenyl | 3,5-dichlorophenyl | |
| 2-chlorophenyl | 4-fluorophenyl | |
| 4-phenylphenyl | 4-chlorophenyl | |
| 4-phenylphenyl | 4-fluorophenyl | |
| 4-phenylphenyl | 2,4-dichlorophenyl | |
| 4-fluorophenyl | 2,4-dichlorophenyl | |
| 4-chlorophenyl | 2,4-dichlorophenyl | |
| 1-naphthyl | 2,6-dimethoxyphenyl | |
| 4-phenoxyphenyl | 3,4-dichlorophenyl | |

### Example 12

*Preparation of (1,1'-Biphenyl-1-yl) (chloromethyl)-diethylsilane*

The title compound can be prepared by the procedure of Example 1, using chlorochloromethyldiethylsilane instead of chlorochloromethyldimethylsilane.

Similar compounds can be prepared by applying the procedures of Examples 1—5 to the appropriate organolithium or Grignard reagent and $Cl(R_2)Si(R_3)CH_2Cl$. The required chlorochloromethyldialkylsilanes are made from $Cl_3SiCH_2Cl$, using two equivalents of $R_2MgCl$ or $R_2Li$ when $R_2 = R_3$ (see, for example, A. A. Zhdanov, V. I. Pakhomov, and T. Bazhanova, *Zh. Obshch. Khim., 1973,* 1280), or using one equivalent of $R_2MgCl$ or $R_2Li$ followed by one equivalent of $R_3MgCl$ or $R_3Li$ when $R_2$ is not equal to $R_3$.

Example 13

*Preparation of (Chloromethyl)triphenylsilane*

A solution of 12.6 ml (18.4 g, 0.10 mol) of (chloromethyl)trichlorosilane in 150 ml of dry ether was stirred under nitrogen and chilled in ice while 162 ml (0.30 mol) of 1.85 molar phenyllithium in cyclohexane-ether 70:30 was added dropwise at a rate that held the mixture below 15°C. The resulting slurry was stirred overnight at room temperature, treated carefully with 10 ml of ethyl acetate to quench any remaining phenyllithium, washed with water and brine, dried over magnesium sulfate, and evaporated to leave 33 g of sticky solid. Recrystallization from 30 ml of cyclohexane provided 15.8 g (51%) of the title compound as an off white solid: m.p. 112—115°C; ir (Nujol[R]) 1420, 1110, 735, 730, 705, 695 $cm^{-1}$; nmr ($CDCl_3$) 3.5 (2H, s), 7.0—7.8 (15H, m).

The compounds of Table III are made by stepwise replacement of the Si-Cl bonds of $Cl_3SiCH_2Cl$, according to the procedures of Examples 12—13.

TABLE III

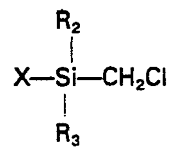

| X = $R_1$, $R_1'$ | $R_2$ | $R_3$ |
|---|---|---|
| $C_2H_5$ | $C_2H_5$ | $C_2H_5$ |
| *i*-$C_3H_7$ | *i*-$C_3H_7$ | *i*-$C_3H_7$ |
| *n*-$C_4H_9$ | *n*-$C_4H_9$ | *n*-$C_4H_9$ |
| *n*-$C_8H_{17}$ | $C_2H_5$ | cyclopentyl |
| *n*-$C_{14}H_{29}$ | cyclopropyl | 1-methylbutyl |
| *n*-$C_{18}H_{37}$ | *n*-$C_6H_{13}$ | *n*-$C_6H_{13}$ |
| cyclopropyl | $C_2H_5$ | *s*-$C_4H_9$ |
| cyclohexyl | *n*-$C_3H_7$ | *n*-$C_3H_7$ |
| 1-naphthyl | *n*-$C_4H_9$ | *n*-$C_4H_9$ |
| 2-naphthyl | *n*-$C_4H_9$ | cyclobutyl |
| phenyl | cyclopropyl | *n*-$C_6H_{13}$ |
| 4-phenylphenyl | *n*-$C_4H_9$ | *n*-$C_4H_9$ |
| 4-phenylphenyl | *n*-$C_6H_{13}$ | *n*-$C_6H_{13}$ |
| 4-phenylphenyl | cyclohexyl | cyclohexyl |
| 4-chlorophenyl | *n*-$C_4H_9$ | *n*-$C_4H_9$ |
| 4-fluorophenyl | *n*-$C_3H_7$ | *n*-$C_3H_7$ |
| 4-phenoxyphenyl | *n*-$C_4H_9$ | cyclohexyl |
| 4-(4-chlorophenoxy)phenyl | *n*-$C_4H_9$ | *n*-$C_4H_9$ |
| 4-*t*-butylphenyl | *s*-$C_4H_9$ | *i*-$C_4H_9$ |
| 3-methoxyphenyl | $C_2H_5$ | *t*-$C_4H_9$ |
| 3-trifluoromethylphenyl | *s*-$C_4H_9$ | *s*-$C_4H_9$ |

TABLE III (continued)

| X = $R_1$, $R_1'$ | $R_2$ | $R_3$ |
|---|---|---|
| 2-methylthiophenyl | $i$-$C_3H_7$ | 3-methylbutyl |
| 2-phenylphenyl | cyclohexyl | cyclohexyl |
| 2,4-dichlorophenyl | $n$-$C_4H_9$ | $n$-$C_4H_9$ |
| 2,6-dimethylphenyl | $t$-$C_4H_9$ | $t$-$C_4H_9$ |
| 3,5-dichlorophenyl | cyclopentyl | cyclopentyl |
| 3-methyl-4-chlorophenyl | $s$-$C_4H_9$ | $s$-$C_4H_9$ |
| $C_2H_5$ | phenyl | phenyl |
| cyclohexyl | phenyl | phenyl |
| $n$-$C_{18}H_{37}$ | phenyl | phenyl |
| $n$-$C_4H_9$ | 4-chlorophenyl | 4-chlorophenyl |
| $n$-$C_{12}H_{25}$ | 4-chlorophenyl | 4-chlorophenyl |
| 1-naphthyl | 4-fluorophenyl | 4-fluorophenyl |
| cyclopropyl | phenyl | 4-$t$-butylphenyl |
| $n$-$C_4H_9$ | phenyl | 4-phenylphenyl |
| $t$-$C_4H_9$ | phenyl | 2,4-dichlorophenyl |
| $n$-$C_3H_7$ | phenyl | 3-trifluoromethylphenyl |
| $i$-$C_4H_9$ | phenyl | 3,5-dichlorophenyl |
| cyclopentyl | phenyl | 2,6-dimethoxyphenyl |
| $n$-$C_{14}H_{29}$ | 4-chlorophenyl | 2-fluorophenyl |
| $n$-$C_4H_9$ | 4-fluorophenyl | 4-phenylphenyl |
| 4-chlorophenyl | 4-chlorophenyl | 4-chlorophenyl |
| 4-fluorophenyl | 4-fluorophenyl | 4-fluorophenyl |
| 4-phenylphenyl | 4-phenylphenyl | 4-phenylphenyl |
| 2,4-dichlorophenyl | 2,4-dichlorophenyl | 2,4-dichlorophenyl |
| phenyl | 4-fluorophenyl | 4-fluorophenyl |
| phenyl | 4-chlorophenyl | 4-chlorophenyl |
| phenyl | 4-phenylphenyl | 4-phenylphenyl |
| phenyl | 2,4-dichlorophenyl | 2,4-dichlorophenyl |
| 2-naphthyl | 4-methylthiophenyl | 4-methylthiophenyl |
| 4-chlorophenyl | 2-methoxyphenyl | 2-methoxyphenyl |

TABLE III (continued)

| X = $R_1$, $R_1'$ | $R_2$ | $R_3$ |
|---|---|---|
| 4-chlorophenyl | 3-chlorophenyl | 3-chlorophenyl |
| phenyl | 2-chlorophenyl | 4-fluorophenyl |
| phenyl | 4-chlorophenyl | 4-phenylphenyl |
| 1-naphthyl | 4-bromophenyl | 3-methylphenyl |
| 4-phenoxyphenyl | 3,5-dimethylphenyl | 3,4-dichlorophenyl |

Example 14

*Preparation of Chloro(chloromethyl)methyl(phenyl)silane*

A solution of 12.7 ml (16.4 g, 0.10 mol) of chloromethyl(dichloro)methylsilane in 200 ml of ether was chilled to −70° under nitrogen and stirred vigorously while a mixture of 55 ml (0.10 mol) of 1.8 molar phenyllithium in 30:70 ether-cyclohexane and 55 ml of ether was added dropwise at a rate that kept the mixture below −70°. The resulting slurry was stirred and warmed to room temperature, then allowed to stand overnight. Filtration and evaporation of the filtrate left 20.4 g of a golden oil, which was distilled to give 14.6 g (71%) of the title compound as a colorless liquid: bp 71—74° (0.6 mm: 80 Pa); $n_D^{23}$ 1.5337; ir (neat) 3080, 3060, 2980, 2930, 1590, 1430, 1260, 1120, 820, 790, 740, 700 $cm^{-1}$; nmr ($CDCl_3$) 0.8 (3H, s), 3.1 (2H, s), 7.3—7.6 (3H, m), 7.6—7.8 (2H, m).

Example 15

*Preparation of (1,1'-Biphenyl-4-yl)chloro(chloromethyl)methylsilane*

The title compound can be prepared by reaction of equimolar quantities of 4-bromobiphenyl, chloromethyldichloro(methyl)silane, and *n*-butyllithium according to the procedure of Example 3.

The compounds of Table IV can be prepared using the procedures of Examples 14 and 15.

TABLE IV

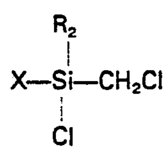

| X = $R_1$, $R_1'$ | $R_2$ |
|---|---|
| $C_2H_5$ | $CH_3$ |
| *t*-$C_4H_9$ | $CH_3$ |
| *n*-$C_4H_9$ | $CH_3$ |
| *n*-$C_{12}H_{25}$ | $C_2H_5$ |
| *n*-$C_{18}H_{37}$ | *n*-$C_6H_{13}$ |
| cyclopropyl | $CH_3$ |
| cyclohexyl | $CH_3$ |
| 1-naphthyl | *i*-$C_3H_7$ |
| 2-naphthyl | cyclobutyl |
| phenyl | *t*-$C_4H_9$ |
| 4-phenylphenyl | *n*-$C_4H_9$ |

TABLE IV (continued)

| X = $R_1$, $R_1'$ | $R_2$ |
|---|---|
| 4-phenylphenyl | $n$-$C_6H_{13}$ |
| 4-chlorophenyl | $n$-$C_4H_9$ |
| 4-chlorophenyl | $CH_3$ |
| 4-fluorophenyl | $n$-$C_6H_{13}$ |
| 4-phenoxyphenyl | cyclohexyl |
| 4-$t$-butylphenyl | $n$-$C_3H_7$ |
| 4-trifluoromethoxyphenyl | $CH_3$ |
| 4-(4-fluorophenyl)phenyl | $CH_3$ |
| 3-trifluoromethylphenyl | $t$-$C_4H_9$ |
| 2-methylthiophenyl | cyclopentyl |
| 2,4-dichlorophenyl | $CH_3$ |
| 2,4-dichlorophenyl | $n$-$C_4H_9$ |
| 2-chloro-4-phenylphenyl | $CH_3$ |
| 2,3-dimethylphenyl | cyclopropyl |
| 2-methyl-5-fluorophenyl | $s$-$C_4H_9$ |
| 2,6-dimethoxyphenyl | 1,1-dimethylpropyl |
| 3-methyl-4-chlorophenyl | $C_2H_5$ |
| 3,5-dichlorophenyl | $n$-$C_5H_{11}$ |
| $n$-$C_{12}H_{25}$ | 2,4-dichlorophenyl |
| $n$-$C_{18}H_{37}$ | phenyl |
| 1-naphthyl | phenyl |
| phenyl | phenyl |
| 4-fluorophenyl | phenyl |
| 4-chlorophenyl | phenyl |
| 4-phenylphenyl | phenyl |
| 4-$t$-butylphenyl | phenyl |
| 3-fluorophenyl | phenyl |
| 2-methoxyphenyl | phenyl |
| 2-chlorophenyl | phenyl |
| 2,4-dichlorophenyl | phenyl |
| 3,5-dichlorophenyl | phenyl |

TABLE IV (continued)

| X = $R_1$, $R_1'$ | $R_2$ |
|---|---|
| 4-fluorophenyl | 4-fluorophenyl |
| 4-chlorophenyl | 4-chlorophenyl |
| 4-phenylphenyl | 4-phenylphenyl |
| 2,4-dichlorophenyl | 2,4-dichlorophenyl |
| 3-trifluoromethylphenyl | 3-trifluoromethylphenyl |
| 2-methoxyphenyl | 2-methoxyphenyl |
| 2-chlorophenyl | 4-fluorophenyl |
| 3-trifluoromethylphenyl | 4-*t*-butylphenyl |
| 2-fluoro-4-chlorophenyl | 4-bromophenyl |
| 2,3-dimethylphenyl | 4-methylthiophenyl |
| 2,6-dimethoxyphenyl | 4-methoxyphenyl |
| 3,4-dichlorophenyl | 4-methylphenyl |

Example 16

*Preparation of Chloromethyl(methoxy)methyl(phenyl)silane*

A solution of 1.6 ml (1.3 g, 0.040 mol) of methanol and 3.0 ml (2.2 g, 0.022 mol) of triethylamine in 100 ml of ether was stirred while a solution of 4.1 g (0.020 mol) of chloro(chloromethyl)methyl(phenyl)silane in 10 ml of ether was added dropwise. The resulting slurry was refluxed for 2 hours, cooled, washed with water, 0.1 *N* aqueous HCl, saturated aqueous $NaHCO_3$, water, and brine, dried over magnesium sulfate, and evaporated to leave 3.2 g of a pale yellow liquid. Distillation provided 1.7 g (42%; of the title compound as a colorless liquid: bp 46—49° (0.05 mm; 7 Pa); $n_D^{22}$ 1.5207; nmr ($CDCl_3$): 0.5 (3H, s), 3.0 (2H, s), 3.5 (3H, s) and 7.3—7.8 (5H, m).

Example 17

*Preparation of Chloromethyl(1,1-dimethylethoxy)methyl(phenyl)silane*

A mixture of 15.4 g (0.075 mol) of chloro(chloromethyl)methyl(phenyl)silane, 14 ml (11.1 g, 0.15 mol) of *t*-butanol, 11.5 ml (8.3 g, 0.082 g) of triethylamine, and 0.5 g (0.008 mol) of imidazole in 60 ml of dimethylformamide was stirred at 80° for 2 hours. The resulting slurry was cooled, poured into 200 ml of water, and extracted with ether. The ether extracts were washed three times with water, followed by 0.1 *N* aqueous HCl, saturated aqueous $NaHCO_3$, and brine, dried over magnesium sulfate, and evaporated to leave 14.0 g of a pale orange oil. Distillation provided 11.9 g (65%) of the title compound: bp 78—82° (0.2 mm; 27 Pa); $n_D^{21}$ 1.5010; ir (neat) 3080, 3060, 2990, 2940, 1600, 1435, 1395, 1370, 1260, 1245, 1195, 1125, 1060, 1030, 815, 790, 740, 725, 705, 650 $cm^{-1}$; nmr ($CDCl_3$): 0.5 (3H, s), 1.3 (9H, s), 2.9 (2H, s) and 7.3—7.8 (5H, m).

Example 18

*Preparation of Chloromethyl(ethoxy)methyl(phenyl)silane*

A solution of 18.2 ml (18.2 g, 0.10 mol) of chloromethyl(diethoxy)methylsilane in 200 ml of dry ether was stirred vigorously under $N_2$ and chilled while 56 ml (0.10 mol) of 1.8 molar phenyllithium in 70:30 cyclohexane-ether was added at a rate that held the mixture below −50°. The resulting slurry was allowed to warm to room temperature, treated cautiously with 10 ml of ethyl acetate, washed with water and brine, dried over magnesium sulfate, and evaporated to leave 16.8 g of a golden yellow liquid. Distillation provided 9.5 g (44%) of the title compound as a colorless liquid: bp 80—84° (0.1 mm; 13 Pa); $n_D^{20}$ 1.5144; nmr ($CDCl_3$) 0.5 (3H, s), 1.2 (3H, t, J = 7), 3.0 (2H, s), 3.8 (2H, q, J = 7), 7.2—7.8 (5H, m).

The compounds of Table V can be prepared using the procedures of Examples 16—18.

TABLE V

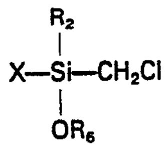

| $X = R_1, R_1'$ | $R_2$ | $R_6$ | |
|---|---|---|---|
| $C_2H_5$ | $CH_3$ | $CH_3$ | |
| $t$-$C_4H_9$ | $CH_3$ | $t$-$C_4H_9$ | |
| $n$-$C_4H_9$ | $CH_3$ | $C_2H_5$ | |
| $n$-$C_{12}H_{25}$ | $C_2H_5$ | $CH_3$ | |
| $n$-$C_{18}H_{37}$ | $n$-$C_6H_{13}$ | $CH_3$ | |
| cyclopropyl | $CH_3$ | $s$-$C_4H_9$ | |
| cyclohexyl | $CH_3$ | $CH_3$ | |
| 1-naphthyl | $i$-$C_3H_7$ | $i$-$C_3H_7$ | |
| 2-naphthyl | cyclobutyl | $n$-$C_3H_7$ | |
| phenyl | $CH_3$ | H | |
| phenyl | $CH_3$ | $i$-$C_3H_7$ | bp 72—76° (0.1 mm; 13 Pa) |
| phenyl | $t$-$C_4H_9$ | H | |
| 4-phenylphenyl | $n$-$C_4H_9$ | $CH_3$ | |
| 4-phenylphenyl | $t$-$C_4H_9$ | H | |
| 4-phenylphenyl | $CH_3$ | $C_2H_5$ | |
| 4-phenylphenyl | $CH_3$ | $n$-$C_4H_9$ | |
| 4-chlorophenyl | $n$-$C_4H_9$ | $n$-$C_4H_9$ | |
| 4-chlorophenyl | $CH_3$ | $CH_3$ | |
| 4-chlorophenyl | $CH_3$ | $C_2H_5$ | |
| 4-fluorophenyl | $n$-$C_6H_{13}$ | $n$-$C_3H_7$ | |
| 4-fluorophenyl | $CH_3$ | $C_2H_5$ | |
| 4-phenoxyphenyl | cyclohexyl | $i$-$C_4H_9$ | |
| 4-$t$-butylphenyl | $n$-$C_3H_7$ | $s$-$C_4H_9$ | |
| 3-trifluoromethylphenyl | $t$-$C_4H_9$ | H | |
| 2-methylthiophenyl | cyclopentyl | $C_2H_5$ | |
| 2,4-dichlorophenyl | $CH_3$ | $CH_3$ | |
| 2,4-dichlorophenyl | $CH_3$ | $C_2H_5$ | |
| 2,4-dichlorophenyl | $CH_3$ | $t$-$C_4H_9$ | |

TABLE V (continued)

| X = $R_1$, $R_1'$ | $R_2$ | $R_6$ |
|---|---|---|
| 2,4-dichlorophenyl | $n$-$C_4H_9$ | $C_2H_5$ |
| 2,3-dimethylphenyl | cyclopropyl | $i$-$C_3H_7$ |
| 2-methyl-5-fluorophenyl | $s$-$C_4H_9$ | $n$-$C_3H_7$ |
| 2,6-dimethoxyphenyl | 1,1-dimethylpropyl | H |
| 3-methyl-4-chlorophenyl | $C_2H_5$ | $CH_3$ |
| 3,5-dichlorophenyl | $n$-$C_5H_{11}$ | $C_2H_5$ |
| $n$-$C_{12}H_{25}$ | 2,4-dichlorophenyl | $t$-$C_4H_9$ |
| $n$-$C_{18}H_{37}$ | phenyl | $CH_3$ |
| 1-naphthyl | phenyl | $C_2H_5$ |
| phenyl | phenyl | $t$-$C_4H_9$ |
| 4-fluorophenyl | phenyl | $CH_3$ |
| 4-chlorophenyl | phenyl | $n$-$C_3H_7$ |
| 4-phenylphenyl | phenyl | $C_2H_5$ |
| 4-phenylphenyl | phenyl | $s$-$C_4H_9$ |
| 4-$t$-butylphenyl | phenyl | $s$-$C_4H_9$ |
| 3-fluorophenyl | phenyl | $C_2H_5$ |
| 2-methoxyphenyl | phenyl | H |
| 2-chlorophenyl | phenyl | $CH_3$ |
| 2,4-dichlorophenyl | phenyl | $i$-$C_3H_7$ |
| 3,5-dichlorophenyl | phenyl | $n$-$C_3H_7$ |
| 4-fluorophenyl | 4-fluorophenyl | $t$-$C_4H_9$ |
| 4-fluorophenyl | 4-fluorophenyl | $C_2H_5$ |
| 4-chlorophenyl | 4-chlorophenyl | $CH_3$ |
| 4-chlorophenyl | 4-chlorophenyl | $C_2H_5$ |
| 4-phenylphenyl | 4-phenylphenyl | $CH_3$ |
| 2,4-dichlorophenyl | 2,4-dichlorophenyl | $C_2H_5$ |
| 3-trifluoromethylphenyl | 3-trifluoromethylphenyl | $i$-$C_4H_9$ |
| 2-methoxyphenyl | 2-methoxyphenyl | H |
| 2-chlorophenyl | 4-fluorophenyl | H |
| 3-trifluoromethylphenyl | 4-$t$-butylphenyl | $n$-$C_4H_9$ |

TABLE V (continued)

| X = $R_1$, $R_1'$ | $R_2$ | $R_6$ |
|---|---|---|
| 2-fluoro-4-chlorophenyl | 4-bromophenyl | $i$-$C_3H_7$ |
| 2,3-dimethylphenyl | 4-methylthiophenyl | $C_2H_5$ |
| 2,6-dimethoxyphenyl | 4-methoxyphenyl | H |
| 3,4-dichlorophenyl | 4-methylphenyl | $i$-$C_4H_9$ |

Example 19

*Preparation of (1,1'-Biphenyl-4-yl)dimethyl(1H-1,2,4-triazol-1-ylmethyl)silane*

A mixture of 2.6 g (0.010 mol) of (1,1'-biphenyl-4-yl)chloromethyldimethylsilane and 1.1 g (0.012 mol) of 1,2,4-triazole sodium salt in 5 ml of dimethylformamide was warmed to 80—90° for 2 hours, cooled, diluted with water, and extracted with ether. The ether solution was washed with water and brine, dried over magnesium sulfate, and evaporated to leave 2.3 g of colorless solid, m.p. 79—86°. Recrystallization from a mixture of 25 ml of hexanes and 2 ml of ethyl acetate gave 1.1 g (38%) of the title compound: m.p. 92—93°; ir (Nujol®) 1255, 1130, 1000, 825, 760, 695 $cm^{-1}$; nmr ($CDCl_3$) 0.4 (6H, s), 3.9 (2H, s), 7.2—7.7 (9H, m), 7.8 (1H, s), 7.9 (1H, s); analysis for $C_{17}H_{19}N_3Si$ (mw 293.43):

| | | | |
|---|---|---|---|
| Calculated: | C, 69.58; | H, 6.53; | N, 14.32; |
| Found C: | C, 70.0; | H, 6.6; | N, 13.9; |
| | 69.8; | 6.7; | 13.8. |

An equimolar mixture of 1,2,4-triazole and sodium methoxide can be used instead of preformed triazole sodium salt. Note that these reagents must be combined before the silane is added, since chloromethylsilanes react very vigorously with sodium methoxide in dimethylformamide, giving undesired products.

Example 20

*Isolation of (1,1'-Biphenyl-4-yl)dimethyl(4H-1,2,4-triazol-4-ylmethyl)silane*

A 5 g sample of once-crystallized 1,1'-(biphenyl-4-yl)dimethyl(1H-1,2,4-triazol-1-ylmethyl)silane, prepared as in Example 14 using sodium methoxide-1,2,4-triazole, was subjected to high pressure liquid chromatography (Waters Prep PAK-500 silica gel cartridge, 250 ml per minute flow rate). Elution with ethyl acetate-hexane 50:50 removed first some minor impurities and then provided the pure 1H-1,2,4-triazol-1-ylmethyl compound, m.p. 99—100°. Continued elution with ethyl acetate-acetonitrile 80:20 provided a small amount of the title compound as a colorless solid: m.p. 130—133°C; nmr ($CDCl_3$) 0.4 (6H, s), 3.7 (2H, s), 7.2—7.7 (9H, m), 7.9 (2H, s); microanalysis for $C_{17}H_{19}N_3Si$ (mw 293.43):

| | | | |
|---|---|---|---|
| Calculated: | C, 69.58; | H, 6.35; | N, 14.32. |
| Found: | C, 69.0; | H, 6.7; | N, 13.9. |
| | 69.3; | 6.7; | 14.2. |

Example 21

*Preparation of Dimethyl(phenyl)(1H-1,2,4-triazol-1-yl-methyl)silane*

A mixture of 9.0 ml (9.2 g, 0.050 mol) of chloromethyldimethylphenylsilane and 5.5 g (0.060 mol) of 1,2,4-triazole sodium salt in 25 ml of dimethylformamide was stirred and warmed to 90—95°C for 2 hours, cooled, diluted with water, and extracted with ether. The ether solution was washed with water and brine, dried over magnesium sulfate, and evaporated to leave 8.1 g (75%) of a pale brown oil, $n_D.305^2$ 1.5350, containing the title compound and minor impurities as judged by nmr. A purer sample was obtained by distillation: bp 99° (0.2 mm; 3 Pa); $n_D^{20}$ 1.5403; nmr ($CDCl_3$) 0.4 (6H, s), 3.8 (2H, s), 7.2—7.7 (5H, m), 7.7 (1H, s), 7.8 (1H, s); analysis for $C_{11}H_{15}N_3Si$ (mw 217.34):

| | | | |
|---|---|---|---|
| Calculated: | C, 60.78; | H, 6.96; | N, 19.33; |
| Found: | C, 60.7; | H, 7.0; | N, 16.9; |
| | 60.2; | H, 7.0: | N, 16.8. |

## Example 22

*Preparation of (4-Chlorophenyl)dimethyl(1H-1,2,4-triazol-1-ylmethyl)silane*

A mixture of 2.2 g (0.010 mol) of chloromethyl(4-chlorophenyl)dimethylsilane and 1.1 g (0.012 mol) of 1,2,4-triazole sodium salt in 5 ml of dimethylformamide was warmed to 80—90° for 2 hours, diluted with water, and extracted with ether. The ether solution was washed with water and brine, dried over magnesium sulfate, and evaporated to leave 2.1 g (83%) of the title compound as a yellow liquid: $n_D^{21}$ 1.5428; ir (neat) 1555, 1470, 1245, 1130, 1080, 1010, 835, 805, 795, 735 $cm^{-1}$; nmr ($CDCl_3$) 0.4 (6H, s), 3.8 (2H, s), 7.4 (4H, broad s), 7.8 (1H, s), 7.9 (1H, s).

## Example 23

*Preparation of (2,4-Dichlorophenyl)dimethyl(1H-1,2,4-triazol-1-ylmethyl)silane*

A mixture of 5.1 g (0.020 mol) of chloromethyl(2,4-dichlorophenyl)dimethylsilane and 2.0 g (0.022 mol) of 1,2,4-triazole sodium salt in 10 ml of dry dimethylformamide was stirred at 80—90° for 2 hours. The resulting slurry was cooled, diluted with water, and washed with ether. The ether extracts were washed with several portions of water and once with brine, dried over magnesium sulfate, and evaporated to leave 4.6 g (81%) of the title compound as a pale yellow liquid: $n_D^{23}$ 1.5580; ir (neat) 1550, 1485, 1440, 1345, 1260, 1240, 1130, 1085, 1025, 1005, 835 $cm^{-1}$; nmr ($CDCl_3$) 0.5 (6H, s), 4.1 (2H, s), 7.2—7.5 (3H, m), 7.8 (1H, s), 7.9 (1H, s).

## Example 24

*Preparation of bis(4-Chlorophenyl)methyl(1H-1,2,4-triazol-1-ylmethyl)silane*

A mixture of 6.3 g (0.020 mol) of chloromethylbis(4-chlorophenyl)methylsilane and 2.0 g (0.022 mol) of 1,2,4-triazole sodium salt in 10 ml of dry dimethylformamide was stirred at 80°C for 4 hours. The resulting slurry was cooled, diluted with water, and washed with ether. The ether extracts were washed with several portions of water and once with brine, dried over magnesium sulfate, and evaporated to leave 5.4 g of yellow oil. Kugelrohr distillation at 120—150° (airbath)/0.05 mm; 7Pa) gave 4.0 g (58%) of the title compound as a pale yellow oil: $n_D^{26}$ 1.5966; nmr ($CDCl_3$) 0.7 (3H, s), 4.1 (2H, s), 7.2—7.5 (8H, m), 7.8 (1H, s), 7.9 (1H, s).

## Example 25

*Preparation of bis(4-Fluorophenyl)methyl(1H-1,2,4-triazol-1-ylmethyl)silane*

A mixture of 4.2 g (0.015 mol) of (chloromethyl)bis(4-fluorophenyl)methylsilane and 1.4 g (0.015 mol) of 1,2,4-triazole sodium salt in 8 ml of dimethylformamide was stirred at 80° for 2 hours. The resulting slurry was cooled, diluted with water, and worked up as in Example 24 to give 4.0 g of a pale yellow oil. Impurities were removed by Kugelrohr distillation at 120—125° (0.05 mm; 7 Pa), leaving behind 2.3 g (49%) of the title compound as a yellow oil: $n_D^{21}$ 1.5538; ir (neat) 3065, 3030, 2960, 2925, 1590, 1500, 1270, 1235, 1165, 1110, 1010, 830, 790 $cm^{-1}$; nmr ($CDCl_3$): 0.7 (3H, s), 4.2 (2H, s), 7.1 (4H, t, J = 9), 7.5 (4H, d of d, J = 6 and 9), 7.8 (1H, s) and 7.9 (1H, s).

By applying the procedures of Examples 19 and 21—25 to appropriate chloromethylsilanes, the compounds of Table VI in which $Q_1=Q_2=H$ can be prepared.

TABLE VI

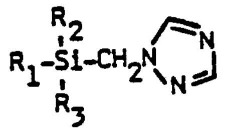

| $R_1$ | $R_2$ | $R_3$ | |
|---|---|---|---|
| $C_2H_5$ | $CH_3$ | $CH_3$ | $n_D^{22}$ 1.4713 |
| *i*-$C_3H_7$ | $CH_3$ | $CH_3$ | |
| *n*-$C_4H_9$ | $CH_3$ | $CH_3$ | $n_D^{19}$ 1.4687 |
| *t*-$C_4H_9$ | $CH_3$ | $CH_3$ | |
| *n*-$C_{12}H_{25}$ | $CH_3$ | $CH_3$ | $n_D^{23}$ 1.4626 |
| *n*-$C_{14}H_{29}$ | $CH_3$ | $CH_3$ | |
| *n*-$C_{18}H_{37}$ | $CH_3$ | $CH_3$ | $n_D^{21}$ 1.4597 |
| cyclopropyl | $CH_3$ | $CH_3$ | |
| cyclobutyl | $CH_3$ | $CH_3$ | |
| cyclopentyl | $CH_3$ | $CH_3$ | |
| cyclohexyl | $CH_3$ | $CH_3$ | $n_D^{22}$ 1.4906 |
| 1-naphthyl | $CH_3$ | $CH_3$ | $n_D^{23}$ 1.6051 |
| 2-naphthyl | $CH_3$ | $CH_3$ | |
| 4-bromophenyl | $CH_3$ | $CH_3$ | $n_D^{20}$ 1.5647 |
| 4-fluorophenyl | $CH_3$ | $CH_3$ | bp 108° (0.2 mm; 27 Pa) |
| 4-methoxyphenyl | $CH_3$ | $CH_3$ | $n_D^{26}$ 1.5401 |
| 4-phenoxyphenyl | $CH_3$ | $CH_3$ | $n_D^{22}$ 1.5754 |
| 4-(4-chlorophenoxy)phenyl | $CH_3$ | $CH_3$ | $n_D^{22}$ 1.5703 |
| 4-(4-fluorophenoxy)phenyl | $CH_3$ | $CH_3$ | |
| 4-(4-trifluoromethylphenoxy)phenyl | $CH_3$ | $CH_3$ | |
| 4-(4-methylphenoxy)phenyl | $CH_3$ | $CH_3$ | |
| 4-methylthiophenyl | $CH_3$ | $CH_3$ | $n_D^{23}$ 1.5790 |
| 4-trifluoromethylphenyl | $CH_3$ | $CH_3$ | $n_D^{23}$ 1.4909 |
| 4-methylphenyl | $CH_3$ | $CH_3$ | $n_D^{21}$ 1.5350 |
| 4-methylsulfonylphenyl | $CH_3$ | $CH_3$ | $n_D^{21}$ 1.5538 |
| 4-*i*-propylphenyl | $CH_3$ | $CH_3$ | |
| 4-*t*-butylphenyl | $CH_3$ | $CH_3$ | $n_D^{23}$ 1.5125 |
| 4-cyclohexylphenyl | $CH_3$ | $CH_3$ | $n_D^{21}$ 1.5235 |

TABLE VI (continued)

| $R_1$ | $R_2$ | $R_3$ | |
|---|---|---|---|
| 4-trifluoromethoxyphenyl | $CH_3$ | $CH_3$ | $n_D^{22}$ 1.4768 |
| 4-(4-chlorophenyl)phenyl | $CH_3$ | $CH_3$ | |
| 4-(4-bromophenyl)phenyl | $CH_3$ | $CH_3$ | $n_D^{22}$ 1.5802 |
| 4-(4-methylphenyl)phenyl | $CH_3$ | $CH_3$ | |
| 4-(4-trifluoromethylphenyl)phenyl | $CH_3$ | $CH_3$ | |
| 4-(4-fluorophenyl)phenyl | $CH_3$ | $CH_3$ | |
| 3-phenylphenyl | $CH_3$ | $CH_3$ | $n_D^{21}$ 1.5939 |
| 3-trifluoromethylphenyl | $CH_3$ | $CH_3$ | $n_D^{20}$ 1.4845 |
| 3-chlorophenyl | $CH_3$ | $CH_3$ | m.p. 37—43° |
| 2-trifluoromethylphenyl | $CH_3$ | $CH_3$ | $n_D^{23}$ 1.4964 |
| 2-phenylphenyl | $CH_3$ | $CH_3$ | $n_D^{22}$ 1.5900 |
| 2-chlorophenyl | $CH_3$ | $CH_3$ | $n_D^{22}$ 1.5442 |
| 2-methoxyphenyl | $CH_3$ | $CH_3$ | $n_D^{21}$ 1.5216 |
| 2,3-dimethylphenyl | $CH_3$ | $CH_3$ | |
| 2,3-dimethoxyphenyl | $CH_3$ | $CH_3$ | $n_D^{22}$ 1.5322 |
| 2,4-difluorophenyl | $CH_3$ | $CH_3$ | |
| 2-fluoro-4-chlorophenyl | $CH_3$ | $CH_3$ | |
| 2-chloro-4-fluorophenyl | $CH_3$ | $CH_3$ | |
| 2-chloro-4-phenylphenyl | $CH_3$ | $CH_3$ | |
| 2-fluoro-4-phenylphenyl | $CH_3$ | $CH_3$ | |
| 2-methyl-5-chlorophenyl | $CH_3$ | $CH_3$ | |
| 2,6-dimethoxyphenyl | $CH_3$ | $CH_3$ | $n_D^{23}$ 1.5404 |
| 2,6-dimethyl | $CH_3$ | $CH_3$ | |
| 3,4-dichlorophenyl | $CH_3$ | $CH_3$ | $n_D^{22}$ 1.5602 |
| 3-methyl-4-fluorophenyl | $CH_3$ | $CH_3$ | |
| 3,5-dichlorophenyl | $CH_3$ | $CH_3$ | m.p. 63—69° |
| $C_2H_5$ | $C_2H_5$ | $CH_3$ | |
| *i*-$C_3H_7$ | cyclohexyl | $CH_3$ | |
| *n*-$C_4H_9$ | *n*-$C_4H_9$ | $CH_3$ | $n_D^{22}$ 1.4672 |
| *n*-$C_{10}H_{21}$ | cyclopropyl | $CH_3$ | |
| *n*-$C_{12}H_{25}$ | *n*-$C_3H_7$ | $CH_3$ | |

TABLE VI (continued)

| $R_1$ | $R_2$ | $R_3$ | |
|---|---|---|---|
| $n$-$C_{14}H_{29}$ | $i$-$C_3H_7$ | $CH_3$ | |
| $n$-$C_{18}H_{37}$ | 3-methylbutyl | $CH_3$ | |
| cyclopropyl | $n$-$C_6H_{13}$ | $CH_3$ | |
| cyclopentyl | cyclopentyl | $CH_3$ | |
| cyclohexyl | cyclohexyl | $CH_3$ | |
| 1-naphthyl | $n$-$C_4H_9$ | $CH_3$ | |
| 1-naphthyl | $t$-$C_4H_9$ | $CH_3$ | |
| 2-naphthyl | $n$-$C_5H_{11}$ | $CH_3$ | |
| phenyl | $n$-$C_3H_7$ | $CH_3$ | |
| phenyl | $n$-$C_4H_9$ | $CH_3$ | $n_D^{21}$ 1.5297 |
| phenyl | 1,1-dimethylpropyl | $CH_3$ | |
| phenyl | $n$-$C_6H_{13}$ | $CH_3$ | |
| 4-phenylphenyl | $C_2H_5$ | $CH_3$ | |
| 4-phenylphenyl | $n$-$C_4H_9$ | $CH_3$ | $n_D^{22}$ 1.5838 |
| 4-bromophenyl | $i$-$C_3H_7$ | $CH_3$ | |
| 4-chlorophenyl | $n$-$C_4H_9$ | $CH_3$ | $n_D^{21}$ 1.5344 |
| 4-fluorophenyl | $n$-$C_4H_9$ | $CH_3$ | $n_D^{22}$ 1.5120 |
| 4-phenoxyphenyl | $t$-$C_4H_9$ | $CH_3$ | |
| 4-$i$-propylphenyl | cyclopropyl | $CH_3$ | |
| 4-$t$-butylphenyl | $i$-$C_4H_9$ | $CH_3$ | |
| 3-phenylphenyl | $i$-$C_4H_9$ | $CH_3$ | |
| 3-trifluoromethylphenyl | $s$-$C_4H_9$ | $CH_3$ | |
| 3-chlorophenyl | $n$-$C_5H_{11}$ | $CH_3$ | |
| 2-methoxyphenyl | $t$-$C_4H_9$ | $CH_3$ | |
| 2-methylthiophenyl | cyclobutyl | $CH_3$ | |
| 2-phenylphenyl | $i$-$C_4H_9$ | $CH_3$ | |
| 2,4-dichlorophenyl | $n$-$C_4H_9$ | $CH_3$ | $n_D^{23}$ 1.5411 |
| 2,4-dichlorophenyl | cyclopropyl | $CH_3$ | |
| 2,3-dimethylphenyl | $n$-$C_3H_7$ | $CH_3$ | |
| 2-methyl-5-fluorophenyl | cyclopentyl | $CH_3$ | |

TABLE VI (continued)

| $R_1$ | $R_2$ | $R_3$ | |
|---|---|---|---|
| 2,5-dimethoxyphenyl | 4-methylpentyl | $CH_3$ | |
| 2,6-dimethylphenyl | 1-methylbutyl | $CH_3$ | |
| 3,4-dichlorophenyl | *n*-$C_5H_{11}$ | $CH_3$ | |
| 3,5-dichlorophenyl | *n*-$C_4H_9$ | $CH_3$ | |
| 3,5-dichlorophenyl | cyclohexyl | $CH_3$ | |
| 3-methyl-4-chlorophenyl | cyclopropyl | $CH_3$ | |
| phenyl | phenyl | $CH_3$ | $n_D^{22}$ 1.5852 |
| 4-fluorophenyl | phenyl | $CH_3$ | $n_D^{20}$ 1.5718 |
| 4-chlorophenyl | phenyl | $CH_3$ | $n_D^{22}$ 1.5926 |
| 4-bromophenyl | phenyl | $CH_3$ | $n_D^{22}$ 1.6076 |
| 4-phenylphenyl | phenyl | $CH_3$ | $n_D^{21}$ 1.6328 |
| 4-*t*-butylphenyl | phenyl | $CH_3$ | |
| 4-methylthiophenyl | phenyl | $CH_3$ | |
| 4-phenoxyphenyl | phenyl | $CH_3$ | |
| 4-trifluoromethoxyphenyl | phenyl | $CH_3$ | |
| 4-methylsulfonylphenyl | phenyl | $CH_3$ | |
| 4-cyclohexylphenyl | phenyl | $CH_3$ | |
| 4-(4-fluorophenyl)phenyl | phenyl | $CH_3$ | |
| 3-trifluoromethylphenyl | phenyl | $CH_3$ | |
| 2-chlorophenyl | phenyl | $CH_3$ | $n_D^{20}$ 1.5742 |
| 2-methoxyphenyl | phenyl | $CH_3$ | |
| 2,4-dichlorophenyl | phenyl | $CH_3$ | $n_D^{23}$ 1.5941 |
| 2-chloro-4-phenylphenyl | phenyl | $CH_3$ | |
| 2-fluoro-4-phenylphenyl | phenyl | $CH_3$ | |
| 3,5-dichlorophenyl | phenyl | $CH_3$ | |
| 2,5-dimethoxyphenyl | phenyl | $CH_3$ | |
| 2,6-dimethoxyphenyl | phenyl | $CH_3$ | |
| 4-bromophenyl | 4-bromophenyl | $CH_3$ | $n_D^{21}$ 1.6245 |
| 4-phenylphenyl | 4-phenylphenyl | $CH_3$ | m.p. 42—46° |
| 4-methoxyphenyl | 4-methoxyphenyl | $CH_3$ | $n_D^{21}$ 1.5890 |
| 3-trifluoromethylphenyl | 3-trifluoromethylphenyl | $CH_3$ | |

TABLE VI (continued)

| $R_1$ | $R_2$ | $R_3$ |
|---|---|---|
| 2-chlorophenyl | 2-chlorophenyl | $CH_3$ $n_D^{21}$ 1.5965 |
| 2-methoxyphenyl | 2-methoxyphenyl | $CH_3$ |
| 2,4-dichlorophenyl | 2,4-dichlorophenyl | $CH_3$ $n_D^{22}$ 1.6009 |
| 3,5-dichlorophenyl | 3,5-dichlorophenyl | $CH_3$ |
| 2-chlorophenyl | 4-chlorophenyl | $CH_3$ $n_D^{20}$ 1.5918 |
| 2-chlorophenyl | 4-fluorophenyl | $CH_3$ |
| 4-phenylphenyl | 4-chlorophenyl | $CH_3$ |
| 4-phenylphenyl | 4-fluorophenyl | $CH_3$ |
| 4-phenylphenyl | 2,4-dichlorophenyl | $CH_3$ |
| 4-fluorophenyl | 2,4-dichlorophenyl | $CH_3$ |
| 4-chlorophenyl | 2,4-dichlorophenyl | $CH_3$ |
| 1-naphthyl | 2,6-dimethoxyphenyl | $CH_3$ |
| 4-phenoxyphenyl | 3,4-dichlorophenyl | $CH_3$ |
| $C_2H_5$ | $C_2H_5$ | $C_2H_5$ |
| *i*-$C_3H_7$ | *i*-$C_3H_7$ | *i*-$C_3H_7$ |
| *n*-$C_4H_9$ | *n*-$C_4H_9$ | *n*-$C_4H_9$ |
| *n*-$C_8H_{17}$ | $C_2H_5$ | cyclopentyl |
| *n*-$C_{14}H_{29}$ | cyclopropyl | 1-methylbutyl |
| *n*-$C_{18}H_{37}$ | *n*-$C_6H_{13}$ | *n*-$C_6H_{13}$ |
| cyclopropyl | $C_2H_5$ | *s*-$C_4H_9$ |
| cyclohexyl | *n*-$C_3H_7$ | *n*-$C_3H_7$ |
| 1-naphthyl | *n*-$C_4H_9$ | *n*-$C_4H_9$ |
| 2-naphthyl | *n*-$C_4H_9$ | cyclobutyl |
| phenyl | cyclopropyl | *n*-$C_6H_{13}$ |
| 4-phenylphenyl | $C_2H_5$ | $C_2H_5$ |
| 4-phenylphenyl | *n*-$C_4H_9$ | *n*-$C_4H_9$ |
| 4-phenylphenyl | *n*-$C_6H_{13}$ | -$C_6H_{13}$ |
| *4-phenylphenyl* | *cyclohexyl* | *cyclohexyl* |
| *4-chlorophenyl* | *n*-$C_4H_9$ | *n*-$C_4H_9$ |
| 4-fluorophenyl | *n*-$C_3H_7$ | *n*-$C_3H_7$ |
| 4-phenoxyphenyl | *n*-$C_4H_9$ | cyclohexyl |

TABLE VI (continued)

| $R_1$ | $R_2$ | $R_3$ |
|---|---|---|
| 4-(4-chlorophenoxy)phenyl | $n$-$C_4H_9$ | $n$-$C_4H_9$ |
| 4-$t$-butylphenyl | $s$-$C_4H_9$ | $i$-$C_4H_9$ |
| 3-methoxyphenyl | $C_2H_5$ | $t$-$C_4H_9$ |
| 3-trifluoromethylphenyl | $s$-$C_4H_9$ | $s$-$C_4H_9$ |
| 2-methylthiophenyl | $i$-$C_3H_7$ | 3-methylbutyl |
| 2-phenylphenyl | cyclohexyl | cyclohexyl |
| 2,4-dichlorophenyl | $n$-$C_4H_9$ | $n$-$C_4H_9$ |
| 2,6-dimethylphenyl | $t$-$C_4H_9$ | $t$-$C_4H_9$ |
| 3,5-dichlorophenyl | cyclopentyl | cyclopentyl |
| 3-methyl-4-chlorophenyl | $s$-$C_4H_9$ | $s$-$C_4H_9$ |
| 2-methyl-5-fluorophenyl | $n$-$C_4H_9$ | $i$-$C_4H_9$ |
| $C_2H_5$ | phenyl | phenyl |
| cyclohexyl | phenyl | phenyl |
| $n$-$C_{18}H_{37}$ | phenyl | phenyl |
| $n$-$C_4H_9$ | 4-chlorophenyl | 4-chlorophenyl |
| $n$-$C_{12}H_{25}$ | 4-chlorophenyl | 4-chlorophenyl |
| 1-naphthyl | 4-fluorophenyl | 4-fluorophenyl |
| cyclopropyl | phenyl | 4-$t$-butylphenyl |
| $n$-$C_4H_9$ | phenyl | 4-phenylphenyl |
| $t$-$C_4H_9$ | phenyl | 2,4-dichlorophenyl |
| $n$-$C_3H_7$ | phenyl | 3-trifluoromethylphenyl |
| $i$-$C_4H_9$ | phenyl | 3,5-dichlorophenyl |
| cyclopentyl | phenyl | 2,6-dimethoxyphenyl |
| $n$-$C_{14}H_{29}$ | 4-chlorophenyl | 2-fluorophenyl |
| $n$-$C_4H_9$ | 4-fluorophenyl | 4-phenylphenyl |
| phenyl | phenyl | phenyl m.p. 118—121° |
| 4-chlorophenyl | 4-chlorophenyl | 4-chlorophenyl |
| 4-fluorophenyl | 4-fluorophenyl | 4-fluorophenyl |
| 4-phenylphenyl | 4-phenylphenyl | 4-phenylphenyl |
| 2,4-dichlorophenyl | 2,4-dichlorophenyl | 2,4-dichlorophenyl |

TABLE VI (continued)

| $R_1$ | $R_2$ | $R_3$ |
|---|---|---|
| phenyl | 4-fluorophenyl | 4-fluorophenyl |
| phenyl | 4-chlorophenyl | 4-chlorophenyl |
| phenyl | 4-phenylphenyl | 4-phenylphenyl |
| phenyl | 2,4-dichlorophenyl | 2,4-dichlorophenyl |
| 2-naphthyl | 4-methylthiophenyl | 4-methylthiophenyl |
| 4-chlorophenyl | 2-methoxyphenyl | 2-methoxyphenyl |
| 4-chlorophenyl | 3-chlorophenyl | 3-chlorophenyl |
| phenyl | 2-chlorophenyl | 4-fluorophenyl |
| phenyl | 4-chlorophenyl | 4-phenylphenyl |
| 1-naphthyl | 4-bromophenyl | 3-methylphenyl |
| 4-phenoxyphenyl | 3,5-dimethylphenyl | 3,4-dichlorophenyl |

## Example 26

*Preparation of (3,5-Dimethyl-1H-1,2,4-triazol-1-yl-methyl)[bis(4-fluorophenyl)]methylsilane*

The title compound is prepared by applying the procedure of Example 25 to equimolar quantities of chloromethyl[bis(4-fluorophenyl)]methylsilane and 3,5-dimethyl-1,2,4-triazole sodium salt.

Related compounds may be made by substituting salts of 3-methyl-1,2,4-triazole for the 3,5-dimethyltriazole salt.

## Example 27

*Preparation of (1,1′-Biphenyl-4-yl)dimethyl(3-methyl-1H-1,2,4-triazol-1-ylmethyl)silane*

A solution of 5.9 g (0.020 mol) of (1,1′-biphenyl-4-yl)dimethyl(1H-1,2,4-triazol-1-ylmethyl)silane in 40 ml of dry tetrahydrofuran was chilled to −40° under $N_2$ and stirred while 12.5 ml (0.020 mol) of 1.6 molar *n*-butyllithium in hexane was added dropwise. The resulting yellow solution was stirred another 15 minutes at −40°, treated with 1.9 ml (4.2 g, 0.030 mol) of methyl iodide, and allowed to warm to room temperature. The resulting solution was diluted with water and extracted with hexanes. Washing the organic extracts with water and brine, drying over magnesium sulfate, and evaporation gave 5.7 g of solid, which was purified by dry-column chromatography over silica gel (ethyl acetate elution) to give 1.1 g of crude product. Recrystallization from 12 ml of 3:1 hexanesethyl acetate then gave 0.97 g (16%) of the title compound as an off white solid: m.p. 95—98°; ir (Nujol$^R$)1590, 1270, 1250, 1180, 1120, 830, 765, 700 $cm^1$; nmr ($CDCl_3$) 0.5 (6H, s), 2.2 (3H, s), 3.7 (2H, s), 7.2—7.7 (9H, m), 7.8 (1H, s).

Although the indicated structure is preferred for steric reasons, the position of the methyl group on the triazole ring has not been proven, and it is possible that the product is (1,1′-biphenyl-4-yl)-dimethyl(5-methyl-1H-1,2,4-triazol-1-ylmethyl)silane.

The procedures of Examples 26 and 27 may be used to prepare the compounds of Table VII.

TABLE VII

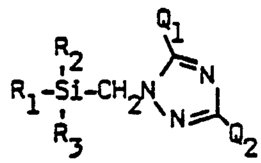

| $R_1$ | $R_2$ | $R_3$ | $Q_1$ | $Q_2$ |
|---|---|---|---|---|
| $C_2H_5$ | $CH_3$ | $CH_3$ | $CH_3$ | $CH_3$ |
| $n$-$C_{18}H_{37}$ | $CH_3$ | $CH_3$ | H | $CH_3$ |
| cyclohexyl | $CH_3$ | $CH_3$ | $CH_3$ | $CH_3$ |
| 1-naphthyl | $CH_3$ | $CH_3$ | $CH_3$ | $CH_3$ |
| phenyl | $CH_3$ | $CH_3$ | H | $CH_3$ |
| phenyl | $CH_3$ | $CH_3$ | $CH_3$ | H |
| 4-phenylphenyl | $CH_3$ | $CH_3$ | $CH_3$ | $CH_3$ |
| 4-(4-fluorophenyl)phenyl | $CH_3$ | $CH_3$ | $CH_3$ | $CH_3$ |
| 4-phenoxyphenyl | $CH_3$ | $CH_3$ | $CH_3$ | $CH_3$ |
| 3-trifluoromethylphenyl | $CH_3$ | $CH_3$ | $CH_3$ | $CH_3$ |
| 2-methoxyphenyl | $CH_3$ | $CH_3$ | $CH_3$ | $CH_3$ |
| 2,4-dichlorophenyl | $CH_3$ | $CH_3$ | $CH_3$ | $CH_3$ |
| 2-chloro-4-phenylphenyl | $CH_3$ | $CH_3$ | $CH_3$ | $CH_3$ |
| phenyl | $n$-$C_4H_9$ | $CH_3$ | $CH_3$ | $CH_3$ |
| 4-phenylphenyl | $n$-$C_4H_9$ | $CH_3$ | H | $CH_3$ |
| 2,4-dichlorophenyl | $n$-$C_6H_{13}$ | $CH_3$ | $CH_3$ | $CH_3$ |
| 4-(4-chlorophenoxy)phenyl | cyclohexyl | $CH_3$ | $CH_3$ | $CH_3$ |
| phenyl | phenyl | $CH_3$ | H | $CH_3$ |
| 4-fluorophenyl | phenyl | $CH_3$ | $CH_3$ | $CH_3$ |
| 4-fluorophenyl | phenyl | $CH_3$ | H | $CH_3$ |
| 4-chlorophenyl | phenyl | $CH_3$ | H | $CH_3$ |
| 4-fluorophenyl | 4-fluorophenyl | $CH_3$ | H | $CH_3$ |
| 4-fluorophenyl | 4-fluorophenyl | $CH_3$ | $CH_3$ | H |
| 4-chlorophenyl | 4-chlorophenyl | $CH_3$ | H | $CH_3$ |
| 4-chlorophenyl | 4-chlorophenyl | $CH_3$ | $CH_3$ | $CH_3$ |
| 2-chlorophenyl | 4-chlorophenyl | $CH_3$ | H | $CH_3$ |
| 2,4-dichlorophenyl | 2,4-dichlorophenyl | $CH_3$ | $CH_3$ | $CH_3$ |
| $n$-$C_{18}H_{37}$ | $n$-$C_6H_{13}$ | $n$-$C_6H_{13}$ | $CH_3$ | $CH_3$ |

TABLE VII

| $R_1$ | $R_2$ | $R_3$ | $Q_1$ | $Q_2$ |
|---|---|---|---|---|
| 1-naphthyl | $n$-$C_4H_9$ | $n$-$C_4H_9$ | H | $CH_3$ |
| phenyl | phenyl | phenyl | H | $CH_3$ |
| phenyl | phenyl | phenyl | $CH_3$ | H |
| phenyl | phenyl | phenyl | $CH_3$ | $CH_3$ |

Example 28

*Preparation of the 1:1 complex of (1,1'-Biphenyl-4-yl)dimethyl(1H-1,2,4-triazol-1-ylmethyl)silane and Cuprous Chloride*

A mixture of 5.0 g (0.017 mol) of (1,1'-biphenyl-4-yl)dimethyl(1H-1,2,4-triazol-1-ylmethyl)silane and 1.7 g (0.017 mol) of cuprous chloride in 170 ml of tetrahydrofuran was refluxed under $N_2$ for 30 minutes, and the resulting deep green solution was evaporated to leave the title compound as a dark greenish-brown solid: m.p. 85—90°; ir (Nujol®) 3110, 1590, 1280, 1250, 1120, 1010, 990, 840, 825, 760, 700 $cm^{-1}$.

The following metal complexes of (1,1'-biphenyl-4-yl)dimethyl(1H-1,2,4-triazol-4-ylmethyl)silane were prepared similarly:

1:1 Complex with cupric chloride: m.p. 83—87°

2:1 Complex with cupric chloride: m.p. 85—92°

1:1 Complex with zinc chloride: $n_D^{21}$ 1.5737

1:1 Complex with manganous sulfate: m.p. 244—250° (decomp.)

Example 29

*Preparation of the 4-Dodecylbenzenesulfonate Salt of (1,1'-Biphenyl-4-yl)dimethyl(1H-1,2,4-triazol-1-ylmethyl)silane*

A solution of 1.0 g (0.0034 mol) of (1,1'-biphenyl-4-yl)dimethyl(1H-1,2,4-triazol-1-ylmethyl)silane in 10 ml of dichloromethane was combined with a solution of 1.1 g (0.0034 mol) of 4-dodecylbenzenesulfonic acid in 10 ml of dichloromethane. The resulting solution was evaporated to leave the title salt as a viscous yellow oil: $n_D^{20}$ 1.5645; ir (neat) 3110, 3050, 3020, 2960, 2920, 2850, 2570, 1920, 1600, 1545, 1485, 1455, 1405, 1250, 1225, 1165, 1120, 1030, 1010, 990, 845, 825, 755, 735, 700, 670, 635 $cm^{-1}$.

Example 30

*Preparation of the 2:1 complex of [bis(4-Fluorophenyl)]methyl(1H-1,2,4-triazol-1-ylmethyl)silane and Cupric Chloride*

A mixture of 1.0 g (0.0032 mol) of [bis(4-fluorophenyl)]methyl(1H-1,2,4-triazol-1-ylmethyl)silane and 0.2 g (0.0016 mol) of cupric chloride in 30 ml of tetrahydrofuran was refluxed under $N_2$ for 30 minutes and evaporated to leave the title complex as a blue-green glass: no distinct m.p.; ir (Nujol®) 1580, 1490, 1230, 1160, 1110, 830, 785 $cm^{-1}$.

The 1:1 complex with cuprous chloride was prepared similarly to give a dark green glass: no distinct m.p.; ir as above.

By applying the procedures of Examples 26—28, any of the compounds of Tables VI, VII, VIII, IX, XII and XIII can be converted to salts or metal complexes.

Example 31

*Preparation of (1,1-'Biphenyl-4-yl)(1H-1,2,4-triazol-1-ylmethyl)(methoxy)methylsilane*

A mixture of (1,1'-biphenyl-4-yl)chlorochloromethylmethylsilane and two equivalents of 1,2,4-triazole sodium salt in dimethylformamide is warmed to 80—90°C for 2 hours. Ten equivalents of methanol is then added, and the mixture is held at 70°C for 1 hour, cooled, diluted with water, and quickly extracted with ether. Washing the ether solution with water and brine, drying over magnesium sulfate, and evaporation leaves the title compound.

Related compounds can be made in the same way, using the appropriate chlorosilane and alcohol; for $R_6$ = OH, water is used instead of an alcohol, and hydrolysis is conducted at 20—25°C instead of 70°.

Example 32

*Preparation of (1,1-dimethylethoxy)methyl(phenyl)(1H-1,2,4-triazol-1-ylmethyl)silane*

A mixture of 3.6 g (0.015 mol) of chloromethyl(1,1-dimethylethoxy)methyl(phenyl)silane and 1.3 g (0.015 mol) of 1,2,4-triazole sodium salt in 8 ml of dimethylformamide was stirred at 80°C for 2 hours, cooled, and poured onto water. The resulting mixture was extracted with ether, and the ether extracts were washed with water and brine, dried over magnesium sulfate, and evaporated to leave 2.7 g of a yellow oil.

Chromatography on silica gel, eluting with 50:50 ethyl acetate-hexanes, provided 1.5 g (36%) of the title compound as a pale yellow oil: $n_D^{21}$ 1.5134; ir (neat) 3120, 3070, 3045, 2975, 2925, 1500, 1425, 1380, 1365, 1270, 1255, 1240, 1190, 1140, 1115, 1050, 1020, 1010, 830, 810, 790, 740, 700, 680 $cm^{-1}$; nmr ($CDCl_3$): 0.6 (3H, s), 1.3 (9H, s), 3.9 (2H, s), 7.3—7.7 (5H, m), 7.9 (1H, s) and 8.0 (1H, s).

The compounds of Table VIII and IX in which $Q_1 = Q_2 = H$ can be made using the procedures of Examples 31 and 32.

TABLE VIII

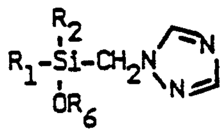

| $R_1$ | $R_2$ | $R_6$ |
|---|---|---|
| $C_2H_5$ | $CH_3$ | $CH_3$ |
| $t$-$C_4H_9$ | $CH_3$ | $t$-$C_4H_9$ |
| $n$-$C_4H_9$ | $CH_3$ | $C_2H_5$ |
| $n$-$C_{12}H_{25}$ | $C_2H_5$ | $CH_3$ |
| $n$-$C_{18}H_{37}$ | $n$-$C_6H_{13}$ | $CH_3$ |
| cyclopropyl | $CH_3$ | $s$-$C_4H_9$ |
| cyclohexyl | $CH_3$ | $CH_3$ |
| 1-naphthyl | $i$-$C_3H_7$ | $i$-$C_3H_7$ |
| 2-naphthyl | cyclobutyl | $n$-$C_3H_7$ |
| phenyl | $CH_3$ | H |
| phenyl | $CH_3$ | $CH_3$ |
| phenyl | $CH_3$ | $C_2H_5$ |
| phenyl | $CH_3$ | $i$-$C_3H_7$ $n_D^{20}$ 1.5367 |
| phenyl | $t$-$C_4H_9$ | H |
| 4-phenylphenyl | $n$-$C_4H_9$ | $CH_3$ |
| 4-phenylphenyl | $t$-$C_4H_9$ | H |
| 4-phenylphenyl | $CH_3$ | $C_2H_5$ |
| 4-phenylphenyl | $CH_3$ | $n$-$C_4H_9$ |
| 4-chlorophenyl | $n$-$C_4H_9$ | $n$-$C_4H_9$ |
| 4-chlorophenyl | $CH_3$ | $CH_3$ |
| 4-chlorophenyl | $CH_3$ | $C_2H_5$ |
| 4-fluorophenyl | $n$-$C_6H_{13}$ | $n$-$C_3H_7$ |
| 4-fluorophenyl | $CH_3$ | $C_2H_5$ |
| 4-phenoxyphenyl | cyclohexyl | $i$-$C_4H_9$ |
| 4-$t$-butylphenyl | $n$-$C_3H_7$ | $s$-$C_4H_9$ |

TABLE VIII (continued)

| $R_1$ | $R_2$ | $R_6$ |
|---|---|---|
| 3-trifluoromethylphenyl | $t$-$C_4H_9$ | H |
| 2-methylthiophenyl | cyclopentyl | $C_2H_5$ |
| 2,4-dichlorophenyl | $CH_3$ | $CH_3$ |
| 2,4-dichlorophenyl | $CH_3$ | $C_2H_5$ |
| 2,4-dichlorophenyl | $CH_3$ | $t$-$C_4H_9$ |
| 2,4-dichlorophenyl | $n$-$C_4H_9$ | $C_2H_5$ |
| 2,3-dimethylphenyl | cyclopropyl | $i$-$C_3H_7$ |
| 2-methyl-5-fluorophenyl | $s$-$C_4H_9$ | $n$-$C_3H_7$ |
| 2,6-dimethoxyphenyl | 1,1-dimethylpropyl | H |
| 3-methyl-4-chlorophenyl | $C_2H_5$ | $CH_3$ |
| 3,5-dichlorophenyl | $n$-$C_5H_{11}$ | $C_2H_5$ |
| $n$-$C_{12}H_{25}$ | 2,4-dichlorophenyl | $t$-$C_4H_9$ |
| $n$-$C_{18}H_{37}$ | phenyl | $CH_3$ |
| 1-naphthyl | phenyl | $C_2H_5$ |
| phenyl | phenyl | $t$-$C_4H_9$ |
| 4-fluorophenyl | phenyl | $CH_3$ |
| 4-chlorophenyl | phenyl | $n$-$C_3H_7$ |
| 4-phenylphenyl | phenyl | $C_2H_5$ |
| 4-phenylphenyl | phenyl | $s$-$C_4H_9$ |
| 4-$t$-butylphenyl | phenyl | $s$-$C_4H_9$ |
| 3-fluorophenyl | phenyl | $C_2H_5$ |
| 2-methoxyphenyl | phenyl | H |
| 2-chlorophenyl | phenyl | $CH_3$ |
| 2,4-dichlorophenyl | phenyl | $i$-$C_3H_7$ |
| 3,5-dichlorophenyl | phenyl | $n$-$C_3H_7$ |
| 4-fluorophenyl | 4-fluorophenyl | $t$-$C_4H_9$ |
| 4-fluorophenyl | 4-fluorophenyl | $C_2H_5$ |
| 4-chlorophenyl | 4-chlorophenyl | $CH_3$ |
| 4-chlorophenyl | 4-chlorophenyl | $C_2H_5$ |
| 4-phenylphenyl | 4-phenylphenyl | $CH_3$ |

TABLE VIII (continued)

| $R_1$ | $R_2$ | $R_6$ |
|---|---|---|
| 2,4-dichlorophenyl | 2,4-dichlorophenyl | $C_2H_5$ |
| 3-trifluoromethylphenyl | 3-trifluoromethylphenyl | *i*-$C_4H_9$ |
| 2-methoxyphenyl | 2-methoxyphenyl | H |
| 2-chlorophenyl | 4-fluorophenyl | H |
| 3-trifluoromethylphenyl | 4-*t*-butylphenyl | *n*-$C_4H_9$ |
| 2-fluoro-4-chlorophenyl | 4-bromophenyl | *i*-$C_3H_7$ |
| 2,3-dimethylphenyl | 4-methylthiophenyl | $C_2H_5$ |
| 2,6-dimethoxyphenyl | 4-methoxyphenyl | H |
| 3,4-dichlorophenyl | 4-methylphenyl | *i*-$C_4H_9$ |

TABLE IX

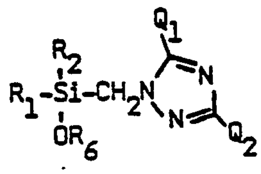

| $R_1$ | $R_2$ | $R_6$ | $Q_1$ | $Q_2$ |
|---|---|---|---|---|
| $C_2H_5$ | $CH_3$ | $CH_3$ | $CH_3$ | $CH_3$ |
| cyclohexyl | $CH_3$ | $i$-$C_3H_7$ | H | $CH_3$ |
| $n$-$C_{18}H_{37}$ | $n$-$C_6H_{13}$ | $t$-$C_4H_9$ | $CH_3$ | $CH_3$ |
| 1-naphthyl | $CH_3$ | $i$-$C_3H_7$ | $CH_3$ | $CH_3$ |
| phenyl | $CH_3$ | $t$-$C_4H_9$ | H | $CH_3$ |
| phenyl | $CH_3$ | $t$-$C_4H_9$ | $CH_3$ | H |
| phenyl | $CH_3$ | $t$-$C_4H_9$ | $CH_3$ | $CH_3$ |
| phenyl | $CH_3$ | $s$-$C_4H_9$ | H | $CH_3$ |
| phenyl | $CH_3$ | $i$-$C_4H_9$ | H | $CH_3$ |
| 4-phenylphenyl | $n$-$C_4H_9$ | $t$-$C_4H_9$ | H | $CH_3$ |
| 4-phenylphenyl | $CH_3$ | $t$-$C_4H_9$ | H | $CH_3$ |
| 4-phenylphenyl | $CH_3$ | $t$-$C_4H_9$ | $CH_3$ | $CH_3$ |
| 4-chlorophenyl | $CH_3$ | $t$-$C_4H_9$ | H | $CH_3$ |
| 4-chlorophenyl | $CH_3$ | $t$-$C_4H_9$ | $CH_3$ | $CH_3$ |
| 4-fluorophenyl | $CH_3$ | $t$-$C_4H_9$ | H | $CH_3$ |
| 4-fluorophenyl | $CH_3$ | $t$-$C_4H_9$ | $CH_3$ | $CH_3$ |
| phenyl | phenyl | $C_2H_5$ | $CH_3$ | $CH_3$ |
| phenyl | phenyl | $n$-$C_3H_7$ | $CH_3$ | $CH_3$ |
| 4-fluorophenyl | phenyl | $i$-$C_3H_7$ | H | $CH_3$ |
| 4-fluorophenyl | phenyl | $t$-$C_4H_9$ | $CH_3$ | $CH_3$ |
| 4-chlorophenyl | phenyl | $i$-$C_3H_7$ | H | $CH_3$ |
| 2,4-dichlorophenyl | phenyl | H | $CH_3$ | $CH_3$ |
| 4-fluorophenyl | 4-fluorophenyl | $t$-$C_4H_9$ | H | $CH_3$ |
| 4-fluorophenyl | 4-fluorophenyl | $t$-$C_4H_9$ | $CH_3$ | H |
| 4-fluorophenyl | 4-fluorophenyl | $t$-$C_4H_9$ | $CH_3$ | $CH_3$ |
| 2-methoxyphenyl | 2-methoxyphenyl | $C_2H_5$ | $CH_3$ | $CH_3$ |
| 3-methylphenyl | 3-methylphenyl | $i$-$C_4H_9$ | H | $CH_3$ |

## Example 33

*Preparation of Chloromethyl(dichloro)phenylsilane*

A solution of 25.1 ml (36.8 g, 0.200 mol) of chloromethyltrichlorosilane in 400 ml dry tetrahydrofuran was cooled to −78°C under nitrogen and stirred vigorously while 48.0 ml (0.100 mol) of 2.1 molar phenyllithium was slowly dripped in over 1 hour. After stirring another 30 minutes at −78° the solution was allowed to warm to room temperature and evaporated to about 200 ml. Addition of 500 ml ether filtration to remove precipitated lithium chloride, and evaporation of the filtrate left 25.0 g of liquid. Distillation gave 6.5 g (29%) of the title compound as a colorless liquid: bp 62—82° (0.15 mm; 20 Pa) nmr ($CDCl_3$); δ 3.3 (s, 2) and 7.1—7.9 (m, 5).

## Example 34

*Preparation of Chloromethyl(diethoxy)phenylsilane*

A solution of 1.0 g (0.0044 mol) of chloromethyl(dichloro)phenylsilane in 8 ml of absolute ethanol was cooled to 0° under nitrogen and stirred while 0.61 ml (0.445 g, 0.0044 mol) of triethylamine was slowly added, giving a slurry that was allowed to warm to room temperature. Addition of 50 ml of ether, filtration to remove precipitated triethylamine/hydrochloride, and evaporation of the filtrate left a residue which was filtered through a short silica gel column (95% petroleum ether:ethyl acetate as the eluent) to give 0.80 g (73%)of the title compound as a colorless oil: nmr ($CDCl_3$): 1.25 (t, 6, J = 6Hz), 3.0 (s, 2), 3.9 (q, 4, J = 6Hz) and 7.2—7.9 (m, 5).

## Example 35

*Preparation of Chloromethyl(phenyl)bis(2-propoxy)silane*

A solution of 2.0 g (0.009 mol) of chloromethyl(dichloro)phenylsilane and 5 ml of 2-propanol in 15 ml of dimethylformamide was stirred under $N_2$ while 2.5 ml (1.9 g, 0.018 mol) of triethylamine was added dropwise. The resulting slurry was warmed to 80° for 2 hours, cooled, diluted with water, and extracted with ether. The ether extracts were washed with water and brine, dried over magnesium sulfate, and evaporated to leave 2.2 g of liquid. Column chromatography over silica gel, eluting with petroleum ether, provided 1.4 g (58%) of the title compound as a colorless liquid: $n_D^{22}$ 1.4741; nmr ($CDCl_3$) 1.2 (12H, d, J = 6), 3.0 (2H, s), 4.3 (2H, septet, J = 6), 7.3—7.8 (5H, m).

The compounds of Tables X and XI can be made using the procedures of Examples 33—35.

TABLE X

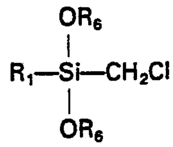

| $R_1$ | $R_6$ |
|---|---|
| $C_2H_5$ | $t$-$C_4H_9$ |
| $n$-$C_4H_9$ | $C_2H_5$ |
| $n$-$C_{18}H_{37}$ | $CH_3$ |
| cyclohexyl | $n$-$C_3H_7$ |
| 1-naphthyl | $i$-$C_4H_9$ |
| phenyl | $CH_3$ |
| phenyl | $n$-$C_3H_7$ |
| phenyl | $t$-$C_4H_9$ |
| 4-phenylphenyl | $C_2H_5$ |
| 4-phenylphenyl | $n$-$C_4H_9$ |
| 4-fluorophenyl | $CH_3$ |
| 4-fluorophenyl | $C_2H_5$ |
| 4-chlorophenyl | $C_2H_5$ |
| 4-chlorophenyl | $i$-$C_3H_7$ |
| 3-trifluoromethylphenyl | $s$-$C_4H_9$ |
| 2-methoxyphenyl | $n$-$C_3H_7$ |
| 2,3-dimethylphenyl | $i$-$C_4H_9$ |
| 2,4-dichlorophenyl | $CH_3$ |
| 2,4-dichlorophenyl | $C_2H_5$ |
| 2-methoxy-5-fluorophenyl | $i$-$C_3H_7$ |
| 2,6-dimethoxyphenyl | $CH_3$ |
| 3,4-dichlorophenyl | $C_2H_5$ |
| 3,5-dichlorophenyl | $n$-$C_4H_9$ |

TABLE XI

$(R_2 + R_3)$

$R_1-Si-CH_2Cl$

| $R_1$ | $R_2 + R_3$ (hydrocarbon portion of glycol residue) | |
|---|---|---|
| $C_2H_5$ | $-CH_2CH_2-$ | |
| $n$-$C_4H_9$ | $CH_3$<br>$-CH_2CH-$ | |
| $n$-$C_{18}H_{37}$ | $-CH_2CH_2CH_2-$ | |
| cyclohexyl | $C_2H_5$<br>$-CH_2CH-$ | |
| 1-naphthyl | $-CH_2CH_2-$ | |
| phenyl | $-CH_2CH_2-$ | |
| phenyl | $C_2H_5$<br>$-CH_2CH-$ | |
| phenyl | $n-C_3H_7$<br>$-CH_2CH-$ | |
| phenyl | $-C(CH_3)_2C(CH_3)_2-$ | bp 142–162° (10mm ; 1330 Pa) |
| 4-phenylphenyl | $-CH_2CH_2-$ | |
| 4-phenylphenyl | $C_2H_5$<br>$-CH_2CH-$ | |
| 4-phenylphenyl | $CH_3$ $CH_3$<br>$-CH-CH-$ | |
| 4-fluorophenyl | $-CH_2CH_2-$ | |
| 4-fluorophenyl | $CH_3$<br>$-CH_2CH-$ | |
| 4-chlorophenyl | $C_2H_5$<br>$-CH_2CH-$ | |
| 4-chlorophenyl | $-C(CH_3)_2C(CH_3)_2-$ | |
| 3-trifluoromethylphenyl | $CH_3$<br>$-CHCH_2C(CH_3)_2-$ | |

TABLE XI (Continued)

| $R_1$ | $R_2 + R_3$ (hydrocarbon portion of glycol residue) | |
|---|---|---|
| 2-methoxyphenyl | 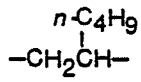 | |
| 2,3-dimethylphenyl | $-CH_2CH_2-$ | |
| 2,4-dichlorophenyl | 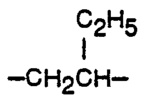 | |
| 2,4-dichlorophenyl | 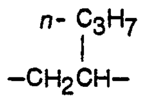 | |
| 2-methoxy-5-fluorophenyl | 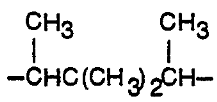 | |
| 2,6-dimethoxyphenyl | $-CH_2CH_2-$ | |
| 3,4-dichlorophenyl | 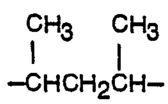 | |
| 3,5-dichlorophenyl | 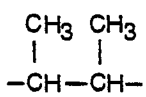 | |
| $C_2H_5$ | $-CH_2CH{=}CHCH_2-$ | |
| $n$-$C_{18}H_{37}$ | 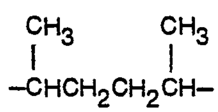 | |
| phenyl | $-CH_2CH{=}CHCH_2-$ | |
| phenyl | $-C(CH_3)_2CH{=}CHC(CH_3)_2-$ | |
| phenyl | 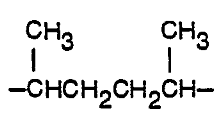 | bp 57–60° (0.15 mm; 20 Pa) |
| phenyl | $-C(CH_3)_2CH_2CH_2C(CH_3)_2-$ | |
| 4-phenylphenyl | $-CH_2CH{=}CHCH_2-$ | |
| 4-phenylphenyl | 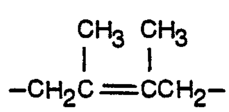 | |
| 4-fluorophenyl | $-CH_2-CH{=}CHCH_2-$ | |
| 4-chlorophenyl | $-CH_2CH_2CH_2CH_2-$ | |

TABLE XI (Continued)

| $R_1$ | $R_2 + R_3$ (hydrocarbon portion of glycol residue) |
|---|---|
| 4-phenoxyphenyl | 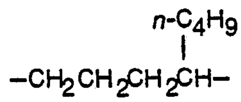 |
| 3-trifluoromethylphenyl | 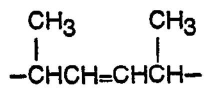 |
| 2-methoxyphenyl | 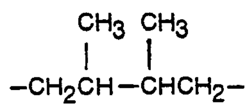 |

Example 36

*Preparation of Phenylbis(2-propoxy)(1H-1,2,4-triazol-1-ylmethyl)silane*

The title compound can be made by applying the procedure of Example 32 to chloromethyl(phenyl)bis(2-propoxy)silane: $n_D^{22}$ 1.4962; nmr ($CDCl_3$) 1.1 (12H, d, J = 6). 4.0 (2H, s), 4.3 (2H, septet, J = 6), 7.2—8.0 (7H, m).

The compounds of Tables XII and XIII can be made similarly.

TABLE XII

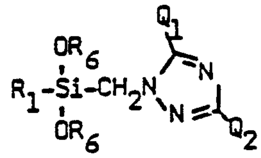

| $R_1$ | $R_6$ | $Q_1$ | $Q_2$ |
|---|---|---|---|
| $C_2H_5$ | $t$-$C_4H_9$ | H | H |
| $n$-$C_4H_9$ | $C_2H_5$ | H | H |
| $n$-$C_{18}H_{37}$ | $CH_3$ | H | H |
| cyclohexyl | $n$-$C_3H_7$ | H | H |
| 1-naphthyl | $i$-$C_4H_9$ | H | H |
| phenyl | $CH_3$ | $CH_3$ | $CH_3$ |
| phenyl | $n$-$C_3H_7$ | H | $CH_3$ |
| phenyl | $i$-$C_3H_7$ | $CH_3$ | $CH_3$ |
| phenyl | $t$-$C_4H_9$ | H | H |
| 4-phenylphenyl | $C_2H_5$ | $CH_3$ | $CH_3$ |
| 4-phenylphenyl | $n$-$C_4H_9$ | H | H |
| 4-fluorophenyl | $CH_3$ | H | H |
| 4-fluorophenyl | $C_2H_5$ | H | H |
| 4-chlorophenyl | $C_2H_5$ | H | H |
| 4-chlorophenyl | $i$-$C_3H_7$ | H | H |
| 3-trifluoromethylphenyl | $s$-$C_4H_9$ | $CH_3$ | $CH_3$ |
| 2-methoxyphenyl | $n$-$C_3H_7$ | H | $CH_3$ |
| 2,3-dimethylphenyl | $i$-$C_4H_9$ | $CH_3$ | $CH_3$ |
| 2,4-dichlorophenyl | $CH_3$ | H | H |
| 2,4-dichlorophenyl | $C_2H_5$ | H | H |
| 2-methoxy-5-fluorophenyl | $i$-$C_3H_7$ | H | H |
| 2,6-dimethoxyphenyl | $CH_3$ | H | H |
| 3,4-dichlorophenyl | $C_2H_5$ | H | H |
| 3,5-dichlorophenyl | $n$-$C_4H_9$ | H | H |

TABLE XIII

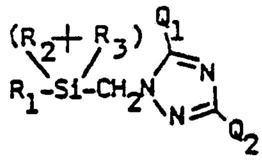

| $R_1$ | $R_2 + R_3$ (hydrocarbon portion of glycol residue) | $Q_1$ | $Q_2$ |
|---|---|---|---|
| $C_2H_5$ | $-CH_2CH_2-$ | $CH_3$ | $CH_3$ |
| $n$-$C_4H_9$ | $CH_3$<br>\|<br>$-CH_2CH-$ | H | $CH_3$ |
| $n$-$C_{18}H_{37}$ | $-CH_2CH_2CH_2-$ | H | H |
| cyclohexyl | $C_2H_5$<br>\|<br>$-CH_2CH-$ | H | $CH_3$ |
| 1-naphthyl | $-CH_2CH_2-$ | $CH_3$ | H |
| phenyl | $-CH_2CH_2-$ | $CH_3$ | $CH_3$ |
| phenyl | $C_2H_5$<br>\|<br>$-CH_2CH-$ | H | H |
| phenyl | $n$-$C_3H_7$<br>\|<br>$-CH_2CH-$ | H | H |
| phenyl | $-C(CH_3)_2C(CH_3)_2-$ | H | H |
| 4-phenylphenyl | $-CH_2CH_2-$ | H | H |
| 4-phenylphenyl | $C_2H_5$<br>\|<br>$-CH_2CH-$ | H | H |
| 4-phenylphenyl | $CH_3$ $CH_3$<br>\| \|<br>$-CH-CH-$ | H | H |
| 4-fluorophenyl | $-CH_2CH_2-$ | H | H |
| 4-fluorophenyl | $CH_3$<br>\|<br>$-CH_2CH-$ | H | H |
| 4-chlorophenyl | $C_2H_5$<br>\|<br>$-CH_2CH-$ | H | H |
| 4-chlorophenyl | $-C(CH_3)_2C(CH_3)_2-$ | H | H |

TABLE XIII (Continued)

| $R_1$ | $R_2 + R_3$ (hydrocarbon portion of glycol residue) | $Q_1$ | $Q_2$ |
|---|---|---|---|
| 3-trifluoromethylphenyl | $CH_3$<br>$-CHCH_2C(CH_3)_2-$ | $CH_3$ | $CH_3$ |
| 2-methoxyphenyl | $n\text{-}C_4H_9$<br>$-CH_2CH-$ | H | $CH_3$ |
| 2,3-dimethylphenyl | $-CH_2CH_2-$ | $CH_3$ | $CH_3$ |
| 2,4-dichlorophenyl | $C_2H_5$<br>$-CH_2CH-$ | H | H |
| 2,4-dichlorophenyl | $n\text{-}C_3H_7$<br>$-CH_2CH-$ | H | H |
| 2-methoxy-5-fluorophenyl | $CH_3$ $CH_3$<br>$-CHC(CH_3)_2CH-$ | H | H |
| 2,6-dimethoxyphenyl | $-CH_2CH_2-$ | H | H |
| 3,4-dichlorophenyl | $CH_3$ $CH_3$<br>$-CHCH_2CH-$ | H | H |
| 3,5-dichlorophenyl | $CH_3$ $CH_3$<br>$-CH-CH-$ | H | H |
| $C_2H_5$ | $-CH_2CH=CHCH_2-$ | $CH_3$ | $CH_3$ |
| $n\text{-}C_{18}H_{37}$ | $CH_3$ $CH_3$<br>$-CHCH_2CH_2CH-$ | H | $CH_3$ |
| phenyl | $-CH_2CH=CHCH_2-$ | H | H |
| phenyl | $-C(CH_3)_2CH=CHC(CH_3)_2-$ | H | H |
| phenyl | $CH_3$ $CH_3$<br>$-CHCH_2CH_2CH-$ | H | H |
| phenyl | $-C(CH_3)_2CH_2CH_2C(CH_3)_2-$ | H | H |
| 4-phenylphenyl | $-CH_2CH=CHCH_2-$ | H | H |
| 4-phenylphenyl | $CH_3$ $CH_3$<br>$-CH_2C=CCH_2-$ | H | H |
| 4-fluorophenyl | $-CH_2-CH=CHCH_2-$ | H | H |

TABLE XIII (Continued)

| $R_1$ | $R_2 + R_3$ (hydrocarbon portion of glycol residue) | $Q_1$ | $Q_2$ |
|---|---|---|---|
| 4-chlorophenyl | $-CH_2CH_2CH_2CH_2-$ | H | H |
| 4-phenoxyphenyl | 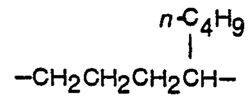 | $CH_3$ | $CH_3$ |
| 3-trifluoromethylphenyl | 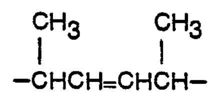 | H | $CH_3$ |
| 2-methoxyphenyl | 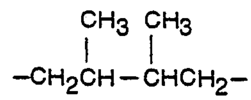 | H | H |

Example 37

*Preparation of (1,1'-Biphenyl-4-yl)dimethyl(1H-imidazol-1-ylmethyl)silane*

A mixture of 2.6 g (0.010 mol) of (1,1'-biphenyl-4-yl)chloromethyldimethylsilane and 1.1 g (0.012 mol) of imidazole sodium salt in 5 ml of dimethylformamide was warmed to 80—90° for 2 hours, cooled, diluted with water, and extracted with ether. The ether solution was washed with water and brine, dried over magnesium sulfate, and evaporated to leave 2.0 g of a viscous, pale yellow oil. Trituration of a small sample with hexanes gave a solid. The bulk of the crude product was then taken up in a hot mixture of 20 ml of hexanes and 3 ml of ethyl acetate, the solution was cooled slowly, and seed crystals were added when cloudiness was observed. The resulting crystals were collected and dried to give 0.84 g (29%) of the title compound as colorless flakes: m.p. 51—53°; ir (Nujol[R]) 1235, 1215, 1105, 1065, 900, 830, 785, 750, 730, 685 $cm^{-1}$; nmr ($CDCl_3$) 0.4 (6H, s), 3.7 (2H, s), 6.7 (1H, broad s), 7.0 (1H, broad s), 7.1—7.8 (10H, m); analysis for $C_{18}H_{20}N_2Si$ (mw 292.45):

| | | | |
|---|---|---|---|
| Calculated | C, 73.92; | H, 6.89; | N, 9.58; |
| Found | C, 73.4; | H, 7.0; | N, 9.4; |
| | 73.7; | 7.0; | 9.4. |

Example 38

*Preparation of (4-Chlorophenyl)dimethyl(1H-imidazol-1-ylmethyl)silane*

A mixture of 2.2 g (0.010 mol) of chloromethyl(4-chlorophenyl)dimethylsilane and 1.1 g (0.012 mol) of imidazole sodium salt in 5 ml of dimethylformamide was stirred at 80—90°C for 2 hours, cooled, diluted with water, and extracted with ether. The ether solution was washed with water and brine, dried over magnesium sulfate, and evaporated to leave 2.0 g (81%) of the title compound as a yellow liquid: $n_D^{20}$ 1.5472; ir (neat) 1560, 1495, 1480, 1375, 1250, 1105, 1080, 905, 830, 810, 740 $cm^{-1}$; nmr ($CDCl_3$) 0.3 (6H, s), 3.6 (2H, s), 6.6 (1H, broad s), 6.9 (1H, broad s), 7.1 (1H, broad s), 7,3 (4H, s).

Example 39

*Preparation of (2,4-Dichlorophenyl)dimethyl(1H-imidazol-1-ylmethyl)silane*

A mixture of 5.1 g (0.020 mol) of chloromethyl(2,4-dichlorophenyl)dimethylsilane and 2.0 g (0.022 mol) of imidazole sodium salt in 10 ml of dry dimethylformamide was stirred at 80—90° for 2 hours and worked up as in Example 18 to give 3.9 g (69%) of the title compound as a brown oil: $n_D^{23}$ 1.5637; ir (neat) 1560, 1500, 1450, 1355, 1250, 1105, 1095, 1075, 1025, 840, 780, 735 $cm^{-1}$; nmr ($CDCl_3$) 0.4 (6H, s), 3.9 (2H, s), 6.7 (1H, broad s), 7.0 (1H, broad s) 7.2—7.5 (4H, m).

Example 40

*Preparation of Diphenyl(1H-imidazol-1-ylmethyl)methylsilane (illustrative Example only)*

A mixture of 4.9 g (0.020 mol) of chloromethyl(diphenyl)methylsilane and 2.0 g (0.022 mol) of imidazole sodium salt in 10 ml of dry dimethylformamide was stirred at 80°C for 3.5 hours and worked up as in Example 18 to give 4.8 g of a yellow oil. Kugelrohr distillation at 125°/0.05 mm (7 Pa) removed volatile

impurities, leaving behind 2.9 g (52%) of the title compound as an oil: $n_D^{22}$ 1.5995; ir (neat) 3375, 3250, 1500, 1430, 1255, 1230, 1110, 1075, 1025, 810, 790, 735, 700, 660 $cm^{-1}$; nmr ($CDCl_3$) 0.6 (3H, s), 3.9 (2H, s), 6.6 (1H, broad s), 6.9 (1H, broad s), 7.2—7.5 (11H, m).

By applying the procedures of Example 37—40 to appropriate chloromethylsilanes, the compounds of Table XIV can be prepared.

TABLE XIV

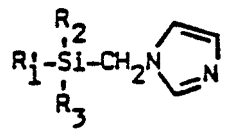

| $R_1'$ | $R_2$ | $R_3$ |
|---|---|---|
| $n$-$C_{12}H_{25}$ | $CH_3$ | $CH_3$ $n_D^{23}$ 1.4585 |
| $n$-$C_{14}H_{29}$ | $CH_3$ | $CH_3$ |
| $n$-$C_{18}H_{37}$ | $CH_3$ | $CH_3$ $n_D^{21}$ 1.4639 |
| cyclopropyl | $CH_3$ | $CH_3$ |
| cyclobutyl | $CH_3$ | $CH_3$ |
| cyclopentyl | $CH_3$ | $CH_3$ |
| cyclohexyl | $CH_3$ | $CH_3$ $n_D^{22}$ 1.4999 |
| 1-naphthyl | $CH_3$ | $CH_3$ $n_D^{23}$ 1.6188 |
| 2-naphthyl | $CH_3$ | $CH_3$ |
| 4-bromophenyl | $CH_3$ | $CH_3$ $n_D^{20}$ 1.5741 |
| 4-fluorophenyl | $CH_3$ | $CH_3$ $n_D^{23}$ 1.5314 |
| 4-methoxyphenyl | $CH_3$ | $CH_3$ $n_D^{25}$ 1.5485 |
| 4-phenoxyphenyl | $CH_3$ | $CH_3$ $n_D^{22}$ 1.5833 |
| 4-(4-chlorophenoxy)phenyl | $CH_3$ | $CH_3$ $n_D^{22}$ 1.5564 |
| 4-(4-fluorophenoxy)phenyl | $CH_3$ | $CH_3$ |
| 4-(4-trifluoromethylphenoxy)phenyl | $CH_3$ | $CH_3$ |
| 4-(4-methylphenoxy)phenyl | $CH_3$ | $CH_3$ |
| 4-methylthiophenyl | $CH_3$ | $CH_3$ $n_D^{23}$ 1.5855 |
| 4-methylsulfonylphenyl | $CH_3$ | $CH_3$ $n_D^{21}$ 1.5552 |
| 4-trifluoromethylphenyl | $CH_3$ | $CH_3$ $n_D^{22}$ 1.4867 |
| 4-methylphenyl | $CH_3$ | $CH_3$ $n_D^{21}$ 1.5482 |
| 4-$i$-propylphenyl | $CH_3$ | $CH_3$ |
| 4-$t$-butylphenyl | $CH_3$ | $CH_3$ $n_D^{23}$ 1.5229 |
| 4-cyclohexylphenyl | $CH_3$ | $CH_3$ $n_D^{22}$ 1.5085 |
| 4-trifluoromethoxyphenyl | $CH_3$ | $CH_3$ $n_D^{22}$ 1.4888 |

TABLE XIV (continued)

| $R_1'$ | $R_2$ | $R_3$ |
|---|---|---|
| 4-(4-chlorophenyl)phenyl | $CH_3$ | $CH_3$ |
| 4-(4-methylphenyl)phenyl | $CH_3$ | $CH_3$ |
| 4-(4-trifluoromethylphenyl)phenyl | $CH_3$ | $CH_3$ |
| 4-(4-fluorophenyl)phenyl | $CH_3$ | $CH_3$ |
| 4-(4-bromophenyl)phenyl | $CH_3$ | $CH_3$ $n_D^{22}$ 1.5745 |
| 3-phenylphenyl | $CH_3$ | $CH_3$ $n_D^{21}$ 1.6002 |
| 3-trifluoromethylphenyl | $CH_3$ | $CH_3$ $n_D^{20}$ 1.4927 |
| 3-chlorophenyl | $CH_3$ | $CH_3$ $n_D^{22}$ 1.5560 |
| 2-trifluoromethylphenyl | $CH_3$ | $CH_3$ $n_D^{23}$ 1.5056 |
| 2-phenylphenyl | $CH_3$ | $CH_3$ $n_D^{22}$ 1.5996 |
| 2-chlorophenyl | $CH_3$ | $CH_3$ $n_D^{22}$ 1.5382 |
| 2-methoxyphenyl | $CH_3$ | $CH_3$ $n_D^{22}$ 1.5344 |
| 2,3-dimethylphenyl | $CH_3$ | $CH_3$ |
| 2,3-dimethoxyphenyl | $CH_3$ | $CH_3$ $n_D^{22}$ 1.5350 |
| 2,4-difluorophenyl | $CH_3$ | $CH_3$ |
| 2-fluoro-4-chlorophenyl | $CH_3$ | $CH_3$ |
| 2-chloro-4-fluorophenyl | $CH_3$ | $CH_3$ |
| 2-chloro-4-phenylphenyl | $CH_3$ | $CH_3$ |
| 2-fluoro-4-phenylphenyl | $CH_3$ | $CH_3$ |
| 2-methyl-5-chlorophenyl | $CH_3$ | $CH_3$ |
| 2,6-dimethoxyphenyl | $CH_3$ | $CH_3$ $n_D^{23}$ 1.5348 |
| 2,6-dimethylphenyl | $CH_3$ | $CH_3$ |
| 3,4-dichlorophenyl | $CH_3$ | $CH_3$ $n_D^{23}$ 1.5673 |
| 3-methyl-4-fluorophenyl | $CH_3$ | $CH_3$ |
| 3,5-dichlorophenyl | $CH_3$ | $CH_3$ $n_D^{22}$ 1.5461 |
| $n$-$C_{10}H_{21}$ | cyclopropyl | $CH_3$ |
| $n$-$C_{12}H_{25}$ | $n$-$C_3H_7$ | $CH_3$ |
| $n$-$C_{14}H_{29}$ | $i$-$C_3H_7$ | $CH_3$ |
| $n$-$C_{18}H_{37}$ | 3-methylbutyl | $CH_3$ |
| cyclopropyl | $n$-$C_6H_{13}$ | $CH_3$ |

TABLE XIV (continued)

| $R_1'$ | $R_2$ | $R_3$ |
|---|---|---|
| cyclopentyl | cyclopentyl | $CH_3$ |
| cyclohexyl | cyclohexyl | $CH_3$ |
| 1-naphthyl | $n$-$C_4H_9$ | $CH_3$ |
| 1-naphthyl | $t$-$C_4H_9$ | $CH_3$ |
| 2-naphthyl | $n$-$C_5H_{11}$ | $CH_3$ |
| phenyl | $n$-$C_6H_{13}$ | $CH_3$ |
| 4-phenylphenyl | $C_2H_5$ | $CH_3$ |
| 4-phenylphenyl | $n$-$C_4H_9$ | $CH_3$ $n_D^{22}$ 1.5880 |
| 4-bromophenyl | $i$-$C_3H_7$ | $CH_3$ |
| 4-chlorophenyl | $n$-$C_4H_9$ | $CH_3$ $n_D^{21}$ 1.5415 |
| 4-fluorophenyl | $n$-$C_4H_9$ | $CH_3$ $n_D^{22}$ 1.5161 |
| 4-phenoxyphenyl | $t$-$C_4H_9$ | $CH_3$ |
| 4-*i*-propylphenyl | cyclopropyl | $CH_3$ |
| 4-*t*-butylphenyl | $i$-$C_4H_9$ | $CH_3$ |
| 3-phenylphenyl | $i$-$C_4H_9$ | $CH_3$ |
| 3-trifluoromethylphenyl | $s$-$C_4H_9$ | $CH_3$ |
| 3-chlorophenyl | $n$-$C_5H_{11}$ | $CH_3$ |
| 2-methoxyphenyl | $t$-$C_4H_9$ | $CH_3$ |
| 2-methylthiophenyl | cyclobutyl | $CH_3$ |
| 2-phenylphenyl | $i$-$C_4H_9$ | $CH_3$ |
| 2,4-dichlorophenyl | $n$-$C_4H_9$ | $CH_3$ $n_D^{21}$ 1.5588 |
| 2,4-dichlorophenyl | cyclopropyl | $CH_3$ |
| 2,3-dimethylphenyl | $n$-$C_3H_7$ | $CH_3$ |
| 2-methyl-5-fluorophenyl | cyclopentyl | $CH_3$ |
| 2,5-dimethoxyphenyl | 4-methylpentyl | $CH_3$ |
| 2,6-dimethylphenyl | 1-methylbutyl | $CH_3$ |
| 3,4-dichlorophenyl | $n$-$C_5H_{11}$ | $CH_3$ |
| 3,5-dichlorophenyl | $n$-$C_4H_9$ | $CH_3$ |
| 3,5-dichlorophenyl | cyclohexyl | $CH_3$ |
| 3-methyl-4-chlorophenyl | cyclopropyl | $CH_3$ |

TABLE XIV (continued)

| $R_1'$ | $R_2$ | $R_3$ |
|---|---|---|
| 4-fluorophenyl | phenyl | $CH_3$ $n_D^{19}$ 1.5810 |
| 4-chlorophenyl | phenyl | $CH_3$ $n_D^{21}$ 1.6000 |
| 4-bromophenyl | phenyl | $CH_3$ $n_D^{22}$ 1.6115 |
| 4-phenylphenyl | phenyl | $CH_3$ $n_D^{21}$ 1.6378 |
| 4-*t*-butylphenyl | phenyl | $CH_3$ |
| 4-methylthiophenyl | phenyl | $CH_3$ |
| 4-phenoxyphenyl | phenyl | $CH_3$ |
| 4-trifluoromethoxyphenyl | phenyl | $CH_3$ |
| 4-methylsulfonylphenyl | phenyl | $CH_3$ |
| 4-cyclohexylphenyl | phenyl | $CH_3$ |
| 4-(4-fluorophenyl)phenyl | phenyl | $CH_3$ |
| 3-trifluoromethylphenyl | phenyl | $CH_3$ |
| 2-chlorophenyl | phenyl | $CH_3$ $n_D^{22}$ 1.6508 |
| 2-methoxyphenyl | phenyl | $CH_3$ |
| 2,4-dichlorophenyl | phenyl | $CH_3$ $n_D^{22}$ 1.6150 |
| 2-chloro-4-phenylphenyl | phenyl | $CH_3$ |
| 2-fluoro-4-phenylphenyl | phenyl | $CH_3$ |
| 3,5-dichlorophenyl | phenyl | $CH_3$ |
| 2,5-dimethoxyphenyl | phenyl | $CH_3$ |
| 2,6-dimethoxyphenyl | phenyl | $CH_3$ |
| 4-fluorophenyl | 4-fluorophenyl | $CH_3$ $n_D^{22}$ 1.5569 |
| 4-chlorophenyl | 4-chlorophenyl | $CH_3$ $n_D$ 1.5820 |
| 4-bromophenyl | 4-bromophenyl | $CH_3$ $n_D^{21}$ 1.6305 |
| 4-phenylphenyl | 4-phenylphenyl | $CH_3$ m.p.44—53° |
| 4-methoxyphenyl | 4-methoxyphenyl | $CH_3$ $n_D^{21}$ 1.5947 |
| 3-trifluoromethylphenyl | 3-trifluoromethylphenyl | $CH_3$ |
| 2-chlorophenyl | 2-chlorophenyl | $CH_3$ $n_D^{20}$ 1.5999 |
| 2-methoxyphenyl | 2-methoxyphenyl | $CH_3$ |
| 2,4-dichlorophenyl | 2,4-dichlorophenyl | $CH_3$ $n_D^{22}$ 1.6019 |
| 3,5-dichlorophenyl | 3,5-dichlorophenyl | $CH_3$ |

TABLE XIV (continued)

| $R_1$ | $R_2$ | $R_3$ |
|---|---|---|
| 2-chlorophenyl | 4-chlorophenyl | $CH_3$ $n_D^{20}$ 1.6044 |
| 2-chlorophenyl | 4-fluorophenyl | $CH_3$ |
| 4-phenylphenyl | 4-chlorphenyl | $CH_3$ |
| 4-phenylphenyl | 4-fluorophenyl | $CH_3$ |
| 4-phenylphenyl | 2,4-dichlorophenyl | $CH_3$ |
| 4-fluorophenyl | 2,4-dichlorophenyl | $CH_3$ |
| 4-chlorophenyl | 2,4-dichlorophenyl | $CH_3$ |
| 1-naphthyl | 2,6-dimethoxyphenyl | $CH_3$ |
| 4-phenoxyphenyl | 3,4-dichlorophenyl | $CH_3$ |
| $n$-$C_8H_{17}$ | $C_2H_5$ | cyclopentyl |
| $n$-$C_{14}H_{29}$ | cyclopropyl | 1-methylbutyl |
| $n$-$C_{18}H_{37}$ | $n$-$C_6H_{13}$ | $n$-$C_6H_{13}$ |
| cyclopropyl | $C_2H_5$ | $s$-$C_4H_9$ |
| cyclohexyl | $n$-$C_3H_7$ | $n$-$C_3H_7$ |
| 1-naphthyl | $n$-$C_4H_9$ | $n$-$C_4H_9$ |
| 2-naphthyl | $n$-$C_4H_9$ | cyclobutyl |
| phenyl | cyclopropyl | $n$-$C_6H_{13}$ |
| 4-phenylphenyl | $C_2H_5$ | $C_2H_5$ |
| 4-phenylphenyl | $n$-$C_4H_9$ | |
| 4-phenylphenyl | $n$-$C_6H_{13}$ | $n$-$C_6H_{13}$ |
| 4-phenylphenyl | cyclohexyl | cyclohexyl |
| 4-chlorophenyl | $n$-$C_4H_9$ | $n$-$C_4H_9$ |
| 4-fluorophenyl | $n$-$C_3H_7$ | $n$-$C_3H_7$ |
| 4-phenoxyphenyl | $n$-$C_4H_9$ | cyclohexyl |
| 4-(4-chlorophenoxy)phenyl | $n$-$C_4H_9$ | $n$-$C_4H_9$ |
| 4-$t$-butylphenyl | $s$-$C_4H_9$ | $i$-$C_4H_9$ |
| 3-methoxyphenyl | $C_2H_5$ | $t$-$C_4H_9$ |
| 3-trifluoromethylphenyl | $s$-$C_4H_9$ | $s$-$C_4H_9$ |
| 2-methylthiophenyl | $i$-$C_3H_7$ | 3-methylbutyl |
| 2-phenylphenyl | cyclohexyl | cyclohexyl |

TABLE XIV (continued)

| $R_1$ | $R_2$ | $R_3$ |
|---|---|---|
| 2,4-dichlorophenyl | $n$-$C_4H_9$ | $n$-$C_4H_9$ |
| 2,6-dimethyphenyl | $t$-$C_4H_9$ | $t$-$C_4H_9$ |
| 3,5-dichlorophenyl | cyclopentyl | cyclopentyl |
| 3-methyl-4-chlorophenyl | $s$-$C_4H_9$ | $s$-$C_4H_9$ |
| 2-methyl-5-fluorophenyl | $n$-$C_4H_9$ | $i$-$C_4H_9$ |
| cyclohexyl | phenyl | phenyl |
| $n$-$C_{18}H_{37}$ | phenyl | phenyl |
| $n$-$C_4H_9$ | 4-chlorophenyl | 4-chlorophenyl |
| $n$-$C_{12}H_{25}$ | 4-chlorophenyl | 4-chlorophenyl |
| 1-naphthyl | 4-fluorophenyl | 4-fluorophenyl |
| cyclopropyl | phenyl | 4-$t$-butylphenyl |
| $n$-$C_4H_9$ | phenyl | 4-phenylphenyl |
| $t$-$C_4H_9$ | phenyl | 2,4-dichlorophenyl |
| $n$-$C_3H_7$ | phenyl | 3-trifluoromethylphenyl |
| $i$-$C_4H_9$ | phenyl | 3,5-dichlorophenyl |
| cyclopentyl | phenyl | 2,6-dimethoxyphenyl |
| $n$-$C_{14}H_{29}$ | 4-chlorophenyl | 2-fluorophenyl |
| $n$-$C_4H_9$ | 4-fluorophenyl | 4-phenylphenyl |
| 4-chlorophenyl | 4-chlorophenyl | 4-chlorophenyl |
| 4-fluoroophenyl | 4-fluorophenyl | 4-fluorophenyl |
| 4-phenylphenyl | 4-phenylphenyl | 4-phenylphenyl |
| 2,4-dichlorophenyl | 2,4-dichlorophenyl | 2,4-dichlorophenyl |
| phenyl | 4-fluorophenyl | 4-fluorophenyl |
| phenyl | 4-chlorophenyl | 4-chlorophenyl |
| phenyl | 4-phenylphenyl | 4-phenylphenyl |
| phenyl | 2,4-dichlorophenyl | 2,4-dichlorophenyl |
| 2-naphthyl | 4-methylthiophenyl | 4-methylthiophenyl |
| 4-chlorophenyl | 2-methoxyphenyl | 2-methoxyphenyl |
| 4-chlorophenyl | 3-chlorophenyl | 3-chlorophenyl |
| phenyl | 2-chlorophenyl | 4-fluorophenyl |

TABLE XIV (Continued)

| $R_1'$ | $R_2$ | $R_3$ |
|---|---|---|
| phenyl | 4-chlorophenyl | 4-phenylphenyl |
| 1-naphthyl | 4-bromophenyl | 3-methylphenyl |
| 4-phenoxyphenyl | 3,5-dimethylphenyl | 3,4-dichlorophenyl |

Example 41

*Preparation of (1,1'-Biphenyl-4-yl)dimethyl(2-methyl-1H-imidazol-1-ylmethyl)silane*

The title compound is prepared by applying the procedure of Example 37 to (1,1'-biphenyl-4-yl)chloromethyldimethylsilane and the sodium salt of 2-methylimidazole.

Related compounds may be made in this way using salts of 2,4-dimethylimidazole, 4,5-dimethylimidazole, and 2,4,5-trimethylimidazole.

The procedure of Example 41 may be used to prepare the compounds of Table XV.

TABLE XV

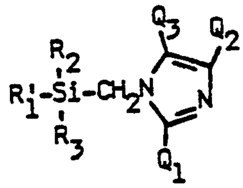

| $R_1'$ | $R_2$ | $R_3$ | $Q_1$ | $Q_2$ | $Q_3$ |
|---|---|---|---|---|---|
| $n$-$C_{18}H_{37}$ | $CH_3$ | $CH_3$ | H | $CH_3$ | $CH_3$ |
| cyclohexyl | $CH_3$ | $CH_3$ | H | $CH_3$ | $CH_3$ |
| 1-naphthyl | $CH_3$ | $CH_3$ | $CH_3$ | H | H |
| 4-phenylphenyl | $CH_3$ | $CH_3$ | $CH_3$ | H | H |
| 4-(4-fluorophenyl)phenyl | $CH_3$ | $CH_3$ | $CH_3$ | H | H |
| 4-phenoxyphenyl | $CH_3$ | $CH_3$ | $CH_3$ | $CH_3$ | $CH_3$ |
| 3-trifluoromethylphenyl | $CH_3$ | $CH_3$ | H | $CH_3$ | $CH_3$ |
| 2-methoxyphenyl | $CH_3$ | $CH_3$ | $CH_3$ | H | H |
| 2,4-dichlorophenyl | $CH_3$ | $CH_3$ | $CH_3$ | $CH_3$ | $CH_3$ |
| 2-chloro-4-phenylphenyl | $CH_3$ | $CH_3$ | H | $CH_3$ | $CH_3$ |
| 4-phenylphenyl | $n$-$C_4H_9$ | $CH_3$ | H | $CH_3$ | $CH_3$ |
| 2,4-dichlorophenyl | $n$-$C_6H_{13}$ | $CH_3$ | $CH_3$ | H | H |
| 4-(4-chlorophenoxy)phenyl | cyclohexyl | $CH_3$ | $CH_3$ | H | H |
| 4-fluorophenyl | phenyl | $CH_3$ | $CH_3$ | H | H |
| 4-fluorophenyl | phenyl | $CH_3$ | $CH_3$ | $CH_3$ | $CH_3$ |
| 4-chlorophenyl | phenyl | $CH_3$ | H | $CH_3$ | $CH_3$ |
| 4-fluorophenyl | 4-fluorophenyl | $CH_3$ | $CH_3$ | H | H |
| 4-fluorophenyl | 4-fluorophenyl | $CH_3$ | H | $CH_3$ | $CH_3$ |
| 4-chlorophenyl | 4-chlorophenyl | $CH_3$ | $CH_3$ | $CH_3$ | $CH_3$ |
| 4-chlorophenyl | 4-chlorophenyl | $CH_3$ | $CH_3$ | H | H |
| 2-chlorophenyl | 4-chlorophenyl | $CH_3$ | $CH_3$ | $CH_3$ | $CH_3$ |
| 2,4-dichlorophenyl | 2,4-dichlorophenyl | $CH_3$ | $CH_3$ | H | H |
| $n$-$C_{18}H_{37}$ | $n$-$C_6H_{13}$ | $n$-$C_6H_{13}$ | H | $CH_3$ | $CH_3$ |
| 1-naphthyl | $n$-$C_4H_9$ | $n$-$C_4H_9$ | $CH_3$ | $CH_3$ | $CH_3$ |

## Example 42

*Preparation of the 1:1 complex of (1,1'-Biphenyl-4-yl)dimethyl(1H-imidazol-1-ylmethyl)silane and Cuprous Chloride*

A mixture of 0.50 g (0.0017 mol) of (1,1'-biphenyl-4-yl)dimethyl(1H-imidazol-1-ylmethyl)silane and 0.22 g (0.0017 mol) of cuprous chloride in 15 ml of tetrahydrofuran was refluxed under $N_2$ for 15 minutes, and the resulting deep green solution was evaporated to leave the title complex as a dark green solid: m.p. 72—80° (decomp.); ir (Nujol[R]) 1590, 1515, 1250, 1110, 840, 820, 750, 695, 650 $cm^{-1}$.

By applying the procedure of Example 24, any of the compounds of Tables XIV, XV, XVI, XVII, XVIII or XIX can be converted to metal complexes or salts.

## Example 43

*Preparation of (1,1'-Biphenyl-4-yl)(1H-imidazol-1-ylmethyl)(methoxy)methylsilane*

A mixture of (1,1'-biphenyl-4-yl)chloro(chloromethyl)methylsilane and two equivalents of imidazole sodium salt in dimethylformamide is warmed to 80—90°C for 2 hours. Ten equivalents of methanol is then added, and the mixture is held at 70°C for 1 hour, cooled, diluted with water, and quickly extracted with ether. Washing the ether solution with water and brine, drying over magnesium sulfate, and evaporation leaves the title compound.

Related compounds can be made in the same way, using the appropriate chlorosilane and alcohol; for $R_6$ = OH, water is used instead of an alcohol, and hydrolysis is conducted at 20—25° instead of 70°.

## Example 44

*Preparation of 1,1-(Dimethylethoxy)(1H-imidazol-1-ylmethyl)methyl(phenyl)silane*

A mixture of 3.6 g (0.015 mol) of chloromethyl-(1,1-dimethylethoxy)methyl(phenyl)silane and 1.3 g (0.015 mol) of imidazole sodium salt in 10 ml of dimethylformamide was stirred at 50° for 3 hours, allowed to stand at room temperature for 72 hours, poured into water, and extracted with ether. The ether extracts were washed three times with water and once with brine, dried over magnesium sulfate, and evaporated to leave 3.8 g of an oil. Impurities were removed by Kugelrohr distillation at 90° (airbath)/0.05 mm (7 Pa) to leave 2.9 g (71%) of the title compound as a pale yellow oil: $n_D^{20}$ 1.5291; ir (neat) 3105, 3070, 3045, 2970, 1590, 1500, 1425, 1360, 1250, 1235, 1185, 1110, 1055, 1020, 900, 805, 740, 700, 660 $cm^{-1}$; nmr ($CDCl_3$): 0.6 (3H, s), 1.3 (9H, s), 3.6 (2H, s), 6.8 (1H, s), 7.0 (1H, s) and 7.3—7.7 (6H, m).

The compounds of Tables XVI and XVII can be made using the procedures of Examples 43 and 44.

TABLE XVI

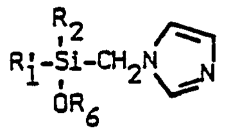

| $R_1'$ | $R_2$ | $R_6$ |
|---|---|---|
| $n$-$C_{12}H_{25}$ | $C_2H_5$ | $CH_3$ |
| $n$-$C_{18}H_{37}$ | $n$-$C_6H_{13}$ | $CH_3$ |
| cyclopropyl | $CH_3$ | $s$-$C_4H_9$ |
| cyclohexyl | $CH_3$ | $CH_3$ |
| 1-naphthyl | $i$-$C_3H_7$ | $i$-$C_3H_7$ |
| 2-naphthyl | cyclobutyl | $n$-$C_3H_7$ |
| 4-phenylphenyl | $n$-$C_4H_9$ | $CH_3$ |
| 4-phenylphenyl | $t$-$C_4H_9$ | H |
| 4-phenylphenyl | $CH_3$ | $C_2H_5$ |
| 4-phenylphenyl | $CH_3$ | $n$-$C_4H_9$ |
| 4-chlorophenyl | $n$-$C_4H_9$ | $n$-$C_4H_9$ |
| 4-chlorophenyl | $CH_3$ | $CH_3$ |
| 4-chlorophenyl | $CH_3$ | $C_2H_5$ |
| 4-fluorophenyl | $n$-$C_6H_{13}$ | $n$-$C_3H_7$ |
| 4-fluorophenyl | $CH_3$ | $C_2H_5$ |
| 4-phenoxyphenyl | cyclohexyl | $i$-$C_4H_9$ |
| 4-$t$-butylphenyl | $n$-$C_3H_7$ | $s$-$C_4H_9$ |
| 3-trifluoromethylphenyl | $t$-$C_4H_9$ | H |
| 2-methylthiophenyl | cyclopentyl | $C_2H_5$ |
| 2,4-dichlorophenyl | $CH_3$ | $CH_3$ |
| 2,4-dichlorophenyl | $CH_3$ | $C_2H_5$ |
| 2,4-dichlorophenyl | $CH_3$ | $t$-$C_4H_9$ |
| 2,4-dichlorophenyl | $n$-$C_4H_9$ | $C_2H_5$ |
| 2,3-dimethylphenyl | cyclopropyl | $i$-$C_3H_7$ |
| 2-methyl-5-fluorophenyl | $s$-$C_4H_9$ | $n$-$C_3H_7$ |
| 2,6-dimethoxyphenyl | 1,1-dimethylpropyl | H |
| 3-methyl-4-chlorophenyl | $C_2H_5$ | $CH_3$ |
| 3,5-dichlorophenyl | $n$-$C_5H_{11}$ | $C_2H_5$ |

TABLE XVI (continued)

| $R_1'$ | $R_2$ | $R_6$ |
|---|---|---|
| $n$-$C_{12}H_{25}$ | 2,4-dichlorophenyl | $t$-$C_4H_9$ |
| $n$-$C_{18}H_{37}$ | phenyl | $CH_3$ |
| 1-naphthyl | phenyl | $C_2H_5$ |
| 4-fluorophenyl | phenyl | $CH_3$ |
| 4-chlorophenyl | phenyl | $n$-$C_3H_7$ |
| 4-phenylphenyl | phenyl | $C_2H_5$ |
| 4-phenylphenyl | phenyl | $s$-$C_4H_9$ |
| 4-$t$-butylphenyl | phenyl | $s$-$C_4H_9$ |
| 3-fluorophenyl | phenyl | $C_2H_5$ |
| 2-methoxyphenyl | phenyl | H |
| 2-chlorophenyl | phenyl | $CH_3$ |
| 2,4-dichlorophenyl | phenyl | $i$-$C_3H_7$ |
| 3,5-dichlorophenyl | phenyl | $n$-$C_3H_7$ |
| 4-fluorophenyl | 4-fluorophenyl | $t$-$C_4H_9$ |
| 4-fluorophenyl | 4-fluorophenyl | $C_2H_5$ |
| 4-chlorophenyl | 4-chlorophenyl | $CH_3$ |
| 4-chlorophenyl | 4-chlorophenyl | $C_2H_5$ |
| 4-phenylphenyl | 4-phenylphenyl | $CH_3$ |
| 2,4-dichlorophenyl | 2,4-dichlorophenyl | $C_2H_5$ |
| 3-trifluoromethylphenyl | 3-trifluoromethylphenyl | $i$-$C_4H_9$ |
| 2-methoxyphenyl | 2-methoxyphenyl | H |
| 2-chlorophenyl | 4-fluorophenyl | H |
| 3-trifluoromethylphenyl | 4-$t$-butylphenyl | $n$-$C_4H_9$ |
| 2-fluoro-4-chlorophenyl | 4-bromophenyl | $i$-$C_3H_7$ |
| 2,3-dimethylphenyl | 4-methylthiophenyl | $C_2H_5$ |
| 2,6-dimethoxyphenyl | 4-methoxyphenyl | H |
| 3,4-dichlorophenyl | 4-methylphenyl | $i$-$C_4H_9$ |

TABLE XVII

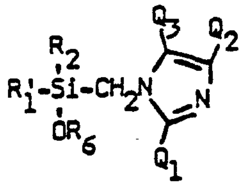

| $R_1'$ | $R_2$ | $R_6$ | $Q_1$ | $Q_2$ | $Q_3$ |
|---|---|---|---|---|---|
| cyclohexyl | $CH_3$ | $i$-$C_3H_7$ | H | $CH_3$ | $CH_3$ |
| $n$-$C_{18}H_{37}$ | $n$-$C_6H_{13}$ | $t$-$C_4H_9$ | $CH_3$ | H | H |
| 1-naphthyl | $CH_3$ | $i$-$C_3H_7$ | $CH_3$ | H | H |
| 4-phenylphenyl | $n$-$C_4H_9$ | $t$-$C_4H_9$ | $CH_3$ | $CH_3$ | $CH_3$ |
| 4-phenylphenyl | $CH_3$ | $t$-$C_4H_9$ | $CH_3$ | H | H |
| 4-phenylphenyl | $CH_3$ | $t$-$C_4H_9$ | $CH_3$ | $CH_3$ | $CH_3$ |
| 4-chlorophenyl | $CH_3$ | $t$-$C_4H_9$ | $CH_3$ | H | H |
| 4-chlorophenyl | $CH_3$ | $t$-$C_4H_9$ | H | $CH_3$ | $CH_3$ |
| 4-fluorophenyl | $CH_3$ | $t$-$C_4H_9$ | H | $CH_3$ | H |
| 4-fluorophenyl | $CH_3$ | $t$-$C_4H_9$ | H | H | $CH_3$ |
| 4-fluorophenyl | phenyl | $i$-$C_3H_7$ | H | $CH_3$ | $CH_3$ |
| 4-fluorophenyl | phenyl | $t$-$C_4H_9$ | $CH_3$ | H | H |
| 4-chlorophenyl | phenyl | $i$-$C_3H_7$ | $CH_3$ | H | H |
| 2,4-dichlorophenyl | phenyl | H | $CH_3$ | H | H |
| 4-fluorophenyl | 4-fluorophenyl | $t$-$C_4H_9$ | $CH_3$ | H | H |
| 4-fluorophenyl | 4-fluorophenyl | $t$-$C_4H_9$ | H | $CH_3$ | $CH_3$ |
| 4-fluorophenyl | 4-fluorophenyl | $t$-$C_4H_9$ | $CH_3$ | $CH_3$ | $CH_3$ |
| 2-methoxyphenyl | 2-methoxyphenyl | $C_2H_5$ | $CH_3$ | H | H |
| 3-methylphenyl | 3-methylphenyl | $i$-$C_4H_9$ | $CH_3$ | H | H |

Example 45

*Preparation of (1H-Imidazol-1-ylmethyl)phenylbis(2-propoxy)silane*

The title compound can be made by applying the procedure of Example 26 to chloromethyl(phenyl)bis(2-propoxy)silane: $n_D^{22}$ 1.4971; nmr ($CDCl_3$) 1.2 (12H, d, J = 6), 3.6 (2H, s), 4.2 (2H, septet, J = 6), 6.8—7.6 (8H, m).

The compounds of Tables XVIII and XIX can be made similarly.

TABLE XVIII

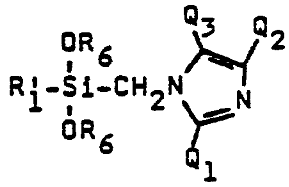

| $R_1'$ | $R_6$ | $Q_1$ | $Q_2$ | $Q_3$ |
|---|---|---|---|---|
| $n$-$C_{18}H_{37}$ | $CH_3$ | H | H | H |
| cyclohexyl | $n$-$C_3H_7$ | H | H | H |
| 1-naphthyl | $i$-$C_4H_9$ | H | H | H |
| 4-phenylphenyl | $C_2H_5$ | H | H | H |
| 4-phenylphenyl | $n$-$C_4H_9$ | $CH_3$ | $CH_3$ | $CH_3$ |
| 4-fluorophenyl | $CH_3$ | $CH_3$ | H | H |
| 4-fluorophenyl | $C_2H_5$ | H | H | H |
| 4-chlorophenyl | $C_2H_5$ | H | H | H |
| 4-chlorophenyl | $i$-$C_3H_7$ | H | H | H |
| 3-trifluoromethylphenyl | $s$-$C_4H_9$ | $CH_3$ | $CH_3$ | $CH_3$ |
| 2-methoxyphenyl | $n$-$C_3H_7$ | $CH_3$ | H | H |
| 2,3-dimethylphenyl | $i$-$C_4H_9$ | H | H | H |
| 2,4-dichlorophenyl | $CH_3$ | H | H | H |
| 2,4-dichlorophenyl | $C_2H_5$ | H | H | H |
| 2-methoxy-5-fluorophenyl | $i$-$C_3H_7$ | H | H | H |
| 2,6-dimethoxyphenyl | $CH_3$ | H | H | H |
| 3,4-dichlorophenyl | $C_2H_5$ | H | H | H |
| 3,5-dichlorophenyl | $n$-$C_4H_9$ | H | H | H |

TABLE XIX

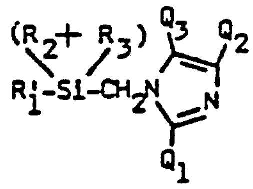

| $R_1'$ | $R_2 + R_3$ (hydrocarbon portion of glycol residue) | $Q_1$ | $Q_2$ | $Q_3$ |
|---|---|---|---|---|
| $n$-$C_{18}H_{37}$ | $—CH_2CH_2CH_2—$ | H | $CH_3$ | $CH_3$ |
| 4-phenylphenyl | $—CH_2CH_2—$ | H | H | H |
| 4-phenylphenyl | $C_2H_5$<br>\|<br>$—CH_2CH—$ | H | H | H |
| 4-phenylphenyl | $CH_3$ $CH_3$<br>\| \|<br>$—CH—CH—$ | H | H | H |
| 4-fluorophenyl | $—CH_2CH_2—$ | H | H | H |
| 4-fluorophenyl | $CH_3$<br>\|<br>$—CH_2CH—$ | H | H | H |
| 4-chlorophenyl | $C_2H_5$<br>\|<br>$—CH_2CH—$ | H | H | H |
| 4-chlorophenyl | $—C(CH_3)_2C(CH_3)_2—$ | H | H | H |
| 3-trifluoromethylphenyl | $CH_3$<br>\|<br>$—CHCH_2C(CH_3)_2—$ | $CH_3$ | $CH_3$ | $CH_3$ |
| 2-methoxyphenyl | $n$-$C_4H_9$<br>\|<br>$—CH_2CH—$ | $CH_3$ | H | H |
| 2,3-dimethylphenyl | $—CH_2CH_2—$ | H | $CH_3$ | $CH_3$ |
| 2,4-dichlorophenyl | $C_2H_5$<br>\|<br>$—CH_2CH—$ | H | H | H |
| 2,4-dichlorophenyl | $n$-$C_3H_7$<br>\|<br>$—CH_2CH—$ | H | H | H |
| 2-methoxy-5-fluorophenyl | $CH_3$ $CH_3$<br>\| \|<br>$—CHC(CH_3)_2CH—$ | $CH_3$ | H | H |
| 2,6-dimethoxyphenyl | $—CH_2CH_2—$ | H | H | H |
| 3,4-dichlorophenyl | $CH_3$ $CH_3$<br>\| \|<br>$—CHCH_2CH—$ | $CH_3$ | $CH_3$ | $CH_3$ |

TABLE XIX (continued)

| $R_1'$ | $R_2 + R_3$ (hydrocarbon portion of glycol residue) | $Q_1$ | $Q_2$ | $Q_3$ |
|---|---|---|---|---|
| 3,5-dichlorophenyl | 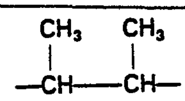 | $CH_3$ | $CH_3$ | $CH_3$ |
| $n$-$C_{18}H_{37}$ | 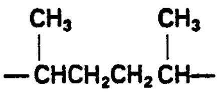 | H | $CH_3$ | $CH_3$ |
| 4-phenylphenyl | $—CH_2CH{=}CHCH_2—$ | H | H | H |
| 4-phenylphenyl | 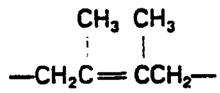 | H | H | H |
| 4-fluorophenyl | $—CH_2—CH{=}CHCH_2—$ | H | H | H |
| 4-chlorophenyl | $—CH_2CH_2CH_2CH_2—$ | H | H | H |
| 4-phenoxyphenyl | 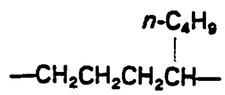 | $CH_3$ | H | H |
| 3-trifluoromethylphenyl | 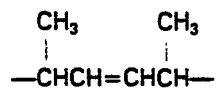 | H | $CH_3$ | $CH_3$ |
| 2-methoxyphenyl | 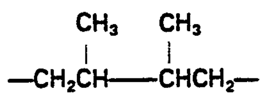 | $CH_3$ | $CH_3$ | $CH_3$ |

Formulations

Useful formulations of the compounds within the scope of this invention can be prepared in conventional ways. They include dusts, granules, pellets, solutions, emulsions, wettable powders and emulsifiable concentrates. Many of these may be applied directly. Sprayable formulations can be extended in suitable media and used at spray volumes of from a few pints to several hundred gallons per acre (from a few litres to several hundred litres per hectare). High strength compositions are primarily used as intermediates for further formulations. The formulations, broadly, contain about 1% to 99% by weight of active ingredient(s) and at least one of a) about 0.1% to 20% surfactant(s) and b) about 5% to 99% solid or liquid inert diluent(s). More specifically, they will contain these ingredients in the following approximate proportions:

| | | Percent by Weight | |
|---|---|---|---|
| | Active Ingredient | Diluent(s) | Surfactant(s) |
| Wettable Powders | 20—90 | 0—74 | 1—10 |
| Oil Suspensions, Emulsions, Solutions, (including Emulsifiable Concentrates) | 5—50 | 40—95 | 0—15 |
| Aqueous Suspensions | 10—50 | 40—84 | 1—20 |
| Dusts | 1—25 | 70—99 | 0—5 |
| Granules and Pellets | 1—95 | 5—99 | 0—15 |
| High Strength Compositions | 90—99 | 0—10 | 0—2 |

Lower or higher levels of active ingredient can, of course, be present depending on the intended use and the physical properties of the compound. Higher ratios of surfactant to active ingredient are sometimes desirable, and are achieved by incorporation into the formulation or by tank mixing.

Typical solid diluents are described in Watkins, et al., "Handbook of Insecticide Dust Diluents and Carriers", 2nd Ed., Dorland Books, Caldwell, New Jersey. The more absorptive diluents are preferred for the wettable powders and the denser ones for dusts. Typical liquid diluents and solvents are described in Marsden, "Solvents Guide," 2nd Ed., Interscience, New York, 1950. Solubility under 0.1% is preferred for suspension concentrates; solution concentrates are preferably stable against phase separation at 0°C. "McCutcheon's Detergents and Emulsifiers Annual", MC Publishing Corp., Ridgewood, New Jersey, as well as Sisely and Wood, "Encyclopedia of Surface Active Agents", Chemical Publishing Co., Inc., New York, 1964, list surfactants and recommended uses. All formulations can contain minor amounts of additives to reduce foam, caking, corrosion and microbiological growth.

The methods of making such compositions are well known. Solutions are prepared by simply mixing the ingredients. Fine solid compositions are made by blending and, usually, grinding as in a hammer or fluid energy mill. Suspensions are prepared by wet milling (see, for example, Littler, U.S. Patent 3,060,084). Granules and pellets may be made by spraying the active material upon preformed granular carriers or by agglomeration techniques. See J. E. Browning, "Agglomeration", *Chemical Engineering*, December 4, 1967, pp. 147ff. and "Perry's Chemical Engineer's Handbook", 4th Ed., McGraw-Hill, New York, 1963, pp. 8—59ff.

### Example 46

Wettable Powder

| | |
|---|---|
| (1,1-Biphenyl-4-yl)dimethyl(1H-1,2,4-triazol-1-ylmethyl)silane | 40% |
| dioctyl sodium sulfosuccinate | 1.5% |
| sodium ligninsulfonate | 3% |
| low viscosity methyl cellulose | 1.5% |
| attapulgite | 54% |

The ingredients are thoroughly blended, passed through an air mill, to produce an average particle size under 15 microns, reblended, and sifted through a U.S.S. No. 50 sieve (0.3 mm opening) before packaging.

All compounds of the invention may be formulated in the same manner.

### Example 47

Wettable Powder

| | |
|---|---|
| (4-Bromophenyl)dimethyl(1H-1,2,4-triazol-1-ylmethyl)silane | 20% |
| sodium alkylnaphthalenesulfonate | 2% |
| low viscosity methyl cellulose | 2% |
| diatomaceous earth | 76% |

The ingredients are blended, coarsely hammer-milled and then air milled to produce particles of active essentially all below 10 microns in diameter. The product is reblended before packaging.

### Example 48

High Strength Concentrate

| | |
|---|---|
| (4-Chlorophenyl)dimethyl(1H-1,2,4-triazol-1-ylmethyl)silane | 98.5% |
| silica aerogel | 0.5% |
| synthetic amorphous fine silica | 1.0% |

The ingredients are blended and ground in a hammer-mill to produce a high strength concentrate essentially all passing a U.S.S. No. 50 sieve (0.3 mm openings). This material may then be formulated in a variety of ways.

### Example 49

Dust

| | |
|---|---|
| high strength concentrate from Example 48 | 25.4% |
| pyrophyllite, powdered | 74.6% |

The ingredients are thoroughly blended and packaged for use.

### Example 50

Aqueous Suspension

| | |
|---|---|
| (1,1'-Biphenyl-4-yl)dimethyl(1H-1,2,4-triazol-1-ylmethyl)silane | 50.0% |
| polyacrylic acid thickener | 0.3% |
| dodecylphenyl polyethylene glycol ether | 0.5% |
| disodium phosphate | 1.0% |
| monosodium phosphate | 0.5% |
| polyvinyl alcohol | 1.0% |
| pentachlorophenyl | 0.4% |
| water | 46.3% |

The ingredients are ground together in a sand mill to produce particles substantially all under five microns in size.

Example 51

Emulsifiable Concentrate

| | |
|---|---|
| Dimethyl(phenyl)(1H-1,2,4-triazol-1-ylmethyl)silane | 20% |
| chlorobenzene | 74% |
| sorbitan monostearate and polyoxyethylene condensates thereof | 6% |

The ingredients are combined and stirred to produce a solution which can be emulsified in water for application.

Example 52

Emulsifiable Concentrate

| | |
|---|---|
| Dimethyl(4-methylphenyl)(1H-1,2,4-triazol-1-ylmethyl)silane | 30% |
| blend of oil soluble sulfonates and polyoxyethylene ethers | 4% |
| xylene | 66% |

The ingredients are combined and stirred with gentle warming to speed solution. A fine screen filter is included in packaging operation to insure the absence of any extraneous undissolved material in the product.

Example 53

Granule

| | |
|---|---|
| wettable powder of example 46 | 15% |
| gypsum | 69% |
| potassium sulfate | 16% |

The ingredients are blended in a rotating mixer and water sprayed on to accomplish granulation. When most of the material has reached the desired range of 1.0 to 0.42 mm. (U.S.S. # 18 to 40 sieves), the granules are removed, dried, and screened. Oversize material is crushed to produce additional material in the desired range. These granules contain active ingredient.

Example 54

Emulsifiable Concentrate

| | |
|---|---|
| (2,4-Dichlorophenyl)dimethyl(1H-1,2,4-triazol-1-ylmethyl)silane | 30% |
| blend of oil soluble sulfonates and polyoxyethylene ethers | 4% |
| xylene | 66% |

The ingredients are combined and stirred with gentle warming to speed solution. A fine screen filter is included in packaging operation to insure the absence of any extraneous undissolved material in the product.

Example 55

Emulsifiable Concentrate

| | |
|---|---|
| Butyl(4-chlorophenyl)methyl(1H-1,2,4-triazol-1-ylmethyl)silane | 30% |
| blend of oil soluble sulfonates and polyoxyethylene ethers | 4% |
| xylene | 66% |

The ingredients are combined and stirred with gentle warming to speed solution. A fine screen filter is included in packaging operation to insure the absence of any extraneous undissolved material in the product.

Example 56

Emulsifiable Concentrate

| | |
|---|---|
| bis(4-Chlorophenyl)methyl(1H-1,2,4-triazol-1-ylmethyl)silane | 30% |
| blend of oil soluble sulfonates and polyoxyethylene ethers | 4% |
| xylene | 66% |

The ingredients are combined and stirred with gentle warming to speed solution. A fine screen filter is included in packaging operation to insure the absence of any extraneous undissolved material in the product.

Example 57

Emulsifiable Concentrate

| | |
|---|---|
| bis(4-Fluorophenyl)methyl(1H-1,2,4-triazol-1-ylmethyl)silane | 20% |
| chlorobenzene | 74% |
| sorbitan monostearate and polyoxyethylene condensates thereof | 6% |

The ingredients are combined and stirred to produce a solution which can be emulsified in water for application.

Example 58

Emulsifiable Concentrate

| | |
|---|---|
| 4-Fluorophenyl(methyl)phenyl(1H-1,2,4-triazol-1-ylmethyl)silane | 30% |
| blend of oil soluble sulfonates and polyoxyethylene ethers | 4% |
| xylene | 66% |

The ingredients are combined and stirred with gentle warming to speed solution. A fine screen filter is included in packaging operation to insure the absence of any extraneous undissolved material in the product.

Example 59

Wettable Powder

| | |
|---|---|
| (1,1'-Biphenyl-4-yl)dimethyl(1H-imidazol-1-ylmethyl)silane | 50% |
| sodium alkylnaphthalenesulfonate | 2% |
| low viscosity methyl cellulose | 2% |
| diatomaceous earth | 46% |

The ingredients are blended, coarsely hammer-milled and then air milled to produce particles of active essentially all below 10 microns in diameter. The product is reblended before packaging.

Example 60

Wettable Powder

| | |
|---|---|
| (1,1-Biphenyl-4-yl)dimethyl(1H-imidazol-1-ylmethyl)silane | 40% |
| dioctyl sodium sulfosuccinate | 1.5% |
| sodium ligninsulfonate | 3% |
| low viscosity methyl cellulose | 1.5% |
| attapulgite | 54% |

The ingredients are thoroughly blended, passed through an air mill, to produce an average particle size under 15 microns, reblended, and sifted through a U.S.S. No. 50 sieve (0.3 mm opening) before packaging.

All compounds of the invention may be formulated in the same manner.

Example 61

Emulsifiable Concentrate

| | |
|---|---|
| (1,1'-Biphenyl-4-yl)dimethyl(1H-imidazol-1-ylmethyl)silane | 30% |
| blend of oil soluble sulfonates and polyoxyethylene ethers | 4% |
| xylene | 66% |

The ingredients are combined and stirred with gentle warming to speed solution. A fine screen filter is included in packaging operation to insure the absence of any extraneous undissolved material in the product.

Example 62

Emulsifiable Concentrate

| | |
|---|---|
| (1,1'-Biphenyl-4-yl)dimethyl(1H-imidazol-1-ylmethyl)silane | 20% |
| chlorobenzene | 74% |
| sorbitan monostearate and polyoxyethylene condensates thereof | 6% |

The ingredients are combined and stirred to produce a solution which can be emulsified in water for application.

Example 63

Aqueous Suspension

| | |
|---|---|
| (1,1'-Biphenyl-4-yl)dimethyl(1H-imidazol-1-ylmethyl)silane | 25% |
| hydrated attapulgite | 3% |
| crude calcium ligninsulfonate | 10% |
| sodium dihydrogen phosphate | 0.5% |
| water | 61.5% |

The ingredients are ground together in a ball or roller mill until the solid particles have been reduced to diameters under 10 microns.

Example 64

High Strength Concentrate

| | |
|---|---|
| (1,1'-Biphenyl-4-yl)dimethyl(1H-imidazol-1-ylmethyl)silane | 98.5% |
| silica aerogel | 0.5% |
| synthetic amorphous fine silica | 1.0% |

The ingredients are blended and ground in a hammer-mill to produce a high strength concentrate essentially all passing a U.S.S. No. 50 sieve (0.3 mm openings). This material may then be formulated in a variety of ways.

Example 65

Granule

| | |
|---|---|
| wettable powder of example 60 | 15% |
| gypsum | 69% |
| potassium sulfate | 16% |

The ingredients are blended in a rotating mixer and water sprayed on to accomplish granulation. When most of the material has reached the desired range of 1.0 to 0.42 mm. (U.S.S. # 18 to 40 sieves), the granules are removed, dried, and screened. Oversize material is crushed to produce additional material in the desired range. These granules contain active ingredient.

Example 66

Dust

| | |
|---|---|
| high strength concentrate from Example 64 | 25.4% |
| pyrophyllite, powdered | 74.6% |

The ingredients are thoroughly blended and packaged for use.

Example 67

Emulsifiable Concentrate

| | |
|---|---|
| 4-Chlorophenyl(methyl)phenyl(1H-imidazol-1-ylmethyl)silane | 20% |
| chlorobenzene | 74% |
| sorbitan monostearate and polyoxyethylene condensates thereof | 6% |

The ingredients are combined and stirred to produce a solution which can be emulsified in water for application.

Utility

The compounds of this invention are useful as plant disease control agents. They are effective in controlling a broad spectrum of plant diseases, particularly foliar pathogens of ornamental, vegetable, field, cereal and fruit crops, such as, *Puccinia recondita, Erysiphe cichoracearum, Erysiphe graminis, Venturia inaequalis, Helminthosporium maydis, Cercospora arachidicola, Uromyces phaseoli* and *Monilinia fructicola, Rhizoctonia solani, Pyricularia oryzae, Phytophthora infestans* and other *Phytophthora* species. They also control seed pathogens such as *Pythium aphanadermatum.*

Disease control is ordinarily accomplished by applying an effective amount of the compound either pre- or post-infection to the portion of the plant to be protected, such as the roots, stems, foliage, fruit, seeds, tubers or bulbs, or to the media (soil or sand) in which the plants to be protected are growing. The compound may also be applied to the seed from which the plants to be protected are to be grown.

Rates of application for these compounds can be influenced by many factors of the environment and should be determined under actual use conditions. Foliage can normally be protected when treated at a rate of from less than 1 to 500 ppm of active ingredient. Plants growing in soil treated at a concentration from 0.1 to about 20 kg/ha can be protected from disease. Seed and seedlings can normally be protected when seed is treated at a rate of from 0.06 to about 3 grams per kilogram of seed.

The compounds of this invention can be mixed with fungicides, bactericides, acaricides, nematicides, insecticides, or other biologically active compounds in order to achieve desired results with a minimum expenditure of time, effort and material. Amounts of these biologically active materials added for each part by weight of the composition of this invention may vary from 0.05 to 25 parts by weight. Suitable agents of this type are well-known to those skilled in the art. Some are listed below:

Fungicides:

methyl 2-benzimidazolecarbamate (carbendazim)
tetramethylthiuram disulfide (thiuram)
*n*-dodecylguanidine acetate (dodine)
manganese ethylenebisdithiocarbamate (maneb)
1,4-dichloro-2,5-dimethoxybenzene (chloroneb)
methyl 1-(butylcarbamoyl)-2-benzimidazolecarbamate (benomyl)
2-cyano-N-ethylcarbamoyl-2-methoxyiminoacetamide (cymoxanil)
N-trichloromethylthiotetrahydrophthalimide (captan)
N-trichloromethylthiophthalimide (folpet)
dimethyl 4,4'-(*o*-phenylene)bis(3-thioallophanate) (thiophanate-methyl)
2-(thiazol-4-yl)benzimidazole (thiabendazole)
aluminum tris(O-ethyl phosphonate) (phosethyl aluminum)
tetrachloroisophthalonitrile (chlorothalonil)
2,6-dichloro-4-nitroaniline (dichloran)
N-(2,6-dimethylphenyl)-N-(methoxyacetyl)alanine methyl ester (metalaxyl)
cis-N-[(1,1,2,2-tetrachloroethyl)thio]cyclohex-4-ene-1,2-dicarboximide (captafol)

3-(3,5-dichlorophenyl)-N-(1-methylethyl)-2,4-dioxo-1-imidazolidine carboxamide (iprodione)
3-(3,5-dichlorophenyl)-5-ethenyl-5-methyl-2,4-oxazolidinedione (vinclozolin)
kasugamycin O-ethyl-S,S-diphenylphosphorodithioate (edifenphos)

Bactericides:

tribasic copper sulfate
streptomycin sulfate
oxytetracycline

Acaricides:

senecioic acid, ester with 2-*sec*-butyl-4,6-dinitrophenol (binapacryl)
6-methyl-1,3-dithiolo[2,3-B]quinonolin-2-one (oxythioquinox)
2,2,2-trichloro-1,1-bis(4-chlorophenyl)ethanol (dicofol)
bis(pentachloro-2,4-cyclopentadien-1-yl) (dienochlor)
tricyclohexyltin hydroxide (cyhexatin)
hexakis(2-methyl-2-phenylpropyl)distannoxane (fenbutin oxide)

Nematicides:

2-[diethoxyphosphinylimino]-1,3-dithietane (fosthietan)
S-methyl-1-(dimethylcarbamoyl)-N-(methylcarbamoyloxy)thioformimidate (oxamyl)
S-methyl-1-carbamoyl-N-(methylcarbamoyloxy)thioformimidate
N-isopropylphosphoramidic acid, O-ethyl-O'-[4-(methylthio)-*m*-tolyl]diester (fenamiphos)

Insecticides:

3-hydroxy-N-methylcrotonamide(dimethylphosphate)ester (monocrotophos)
methylcarbamic acid, ester with 2,3-dihydro-2,2-dimethyl-7-benzofuranol (carbofuran)
O-[2,4,5-trichloro-α-(chloromethyl)benzyl]phosphoric acid, O',O'-dimethyl ester (tetrachlorvinphos)
2-mercaptosuccinic acid, diethyl ester, S-ester with thionophosphoric acid, dimethyl ester (malathion)
phosphorothioic acid, O,O-dimethyl, O-*p*-nitrophenyl ester (methyl parathion)
methylcarbamic acid, ester with α-naphthol (carbaryl)
methyl N-[[(methylamino)carbonyl]oxy]ethanimidothioate (methomyl)
N'-(4-chloro-*o*-tolyl)-N,N-dimethylformamidine (chlordimeform)
O,O-diethyl-O-(2-isopropyl-4-methyl-6-pyrimidyl)phosphorothioate (diazinon)
octachlorocamphene (toxaphene)
O-ethyl O-*p*-nitrophenyl phenylphosphonothioate (EPN)
cyano(3-phenoxyphenyl)-methyl 4-chloro-α-(1-methylethyl)benzeneacetate (fenvalerate)
(3-phenoxyphenyl)methyl (±)-*cis,trans*-3-(2,2-dichloroethenyl)-2,2-dimethylcyclopropanecarboxylate (permethrin)
dimethyl N,N'-[thiobis](N-methylimino)carbonyloxy]]bis[ethanimidothioate] (thiodicarb)
phosphorothiolothionic acid, O-ethyl-O-[4-(methylthio)phenyl]-S-*n*-propyl ester (sulprofos)
α-cyano-3-phenoxybenzyl 3-(2,2-dichlorovinyl)-2,2-dimethylcyclopropane carboxylate (cypermethrin)
cyano(3-phenoxyphenyl)methyl 4-(difluoromethoxy)-α-(methylethyl)benzeneacetate (flucythrinate)
O,O-diethyl-O-(3,5,6-trichloro-2-pyridyl)phosphorothioate (chlorpyrifos)
O,O-dimethyl-S-[(4-oxo-1,2,3-benzotriazin-3-(4H)-yl)methyl]phosphorodithioate (azinphos-methyl)
5,6-dimethyl-2-dimethylamino-4-pyrimidinyl dimethyl carbamate (pirimicarb)
S-(N-formyl-N-methylcarbamoylmethyl)-O,O-dimethyl phosphorodithioate (formothion)
S-2-(ethylthioethyl)-O,O-dimethyl phosphorothioate (demeton-S-methyl)
α-cyano-3-phenoxybenzyl cis-3-(2,2-dibromovinyl)-2,2-dimethylcyclopropane carboxylate (deltamethrin)
cyano(3-phenoxyphenyl)methyl ester of N-(2-chloro-4-trifluoromethylphenyl)alanine (fluvalinate)

This invention is further illustrated by the following examples.

## Example 68

Compounds of this invention were dissolved in acetone in an amount equal to 6% of the final volume and then suspended at a concentration of 100 ppm in purified water containing 250 ppm of the surfactant TREM 014 (polyhydric alcohol esters). These suspensions were sprayed to the point of run-off on wheat seedlings. The following day, the plants were inoculated with a spore suspension of *Puccinia recondita* var. *tritici*, causal agent of wheat leaf rust, and incubated in a saturated humidity chamber at 20° for 24 hours and then in a growth room for an additional 7 days, when disease ratings were made. Percent disease control is shown in the following table. Treated plants had few or no rust pustules while the untreated plants had numerous rust pustules on each leaf.

TABLE 1

| Compound | % Control Wheat Rust |
|---|---|
| (Dimethyl)phenyl(1,2,4-triazol-1-ylmethyl)silane | 90 |
| (4-Bromophenyl)dimethyl(1H-1,2,4-triazol-1-ylmethyl)silane | 80 |
| (1,1'-Biphenyl-4-yl)dimethyl(1H-1,2,4-triazol-1-ylmethyl)silane | 100 |
| (4-Chlorophenyl)dimethyl(1H-1,2,4-triazol-1-ylmethyl)silane | 100 |
| Butyl(4-chlorophenyl)methyl(1H-1,2,4-triazol-1-ylmethyl)silane | 80 |
| (3,4-Dichlorophenyl)dimethyl(1H-1,2,4-triazol-1-ylmethyl)silane | 60 |
| (2,4-Dichlorophenyl)dimethyl(1H-1,2,4-triazol-1-ylmethyl)silane | 90 |
| bis(4-Chlorophenyl)(methyl)(1H-1,2,4-triazol-1-ylmethyl)silane | 90 |
| Dimethyl(4-fluorophenyl)(1H-1,2,4-triazol-1-ylmethyl)silane | 100 |
| [4-(1,1-Dimethylethyl)phenyl]dimethyl(1H-1,2,4-triazol-1-ylmethyl)silane | 80[A] |
| Butyl(2,4-dichlorophenyl)methyl(1H-1,2,4-triazol-1-ylmethyl)silane | 100 |
| bis(2,4-Dichlorophenyl)(methyl)(1H-1,2,4-triazol-1-ylmethyl)silane | 100 |
| (2,4-Dichlorophenyl)methyl(phenyl)(1H-1,2,4-triazol-1-ylmethyl)silane | 100 |
| (4-Chlorophenyl)methyl(phenyl)(1H-1,2,4-triazol-1-ylmethyl)silane | 100 |
| (4-Fluorophenyl)methyl(phenyl)(1H-1,2,4-triazol-1-ylmethyl)silane | 90 |
| Dodecyl(dimethyl)(1H-1,2,4-triazol-1-ylmethyl)silane | 100[A] |
| [4-(4-Chlorophenoxy)phenyl]dimethyl(1H-1,2,4-triazol-1-ylmethyl)silane | 90 |
| (3,5-Dichlorophenyl)dimethyl(1H-1,2,4-triazol-1-ylmethyl)silane | 80 |
| (1,1'-Biphenyl-4-yl)butyl(methyl)(1H-1,2,4-triazol-1-ylmethyl)silane | 90 |
| bis(1,1'-Biphenyl-4-yl)(methyl)(1H-1,2,4-triazol-1-ylmethyl)silane | 80 |
| (1,1'-Biphenyl-4-yl)methyl(phenyl)(1H-1,2,4-triazol-1-ylmethyl)silane | 100 |
| (1,1'-Biphenyl-3-yl)dimethyl(1H-1,2,4-triazol-1-ylmethyl)silane | 80 |
| 2-Chlorophenyl(methyl)phenyl(1H-1,2,4-triazol-1-ylmethyl)silane | 80 |
| [bis(2-Chlorophenyl)]methyl(1H-1,2,4-triazol-1-ylmethyl)silane | 100 |
| (1,1'-Biphenyl-4-yl)dimethyl(1H-1,2,4-triazol-1-ylmethyl)silane, 4-dodecylbenzenesulfonic acid salt | 100 |
| (1,1'-Biphenyl-4-yl)dimethyl(1H-1,2,4-triazol-1-ylmethyl)silane, 1:1 complex with zinc (II) chloride | 100 |
| (1,1'-Biphenyl-4-yl)dimethyl(1H-1,2,4-triazol-1-ylmethyl)silane, 1:1 complex with manganous sulfate | 90 |
| 2-Chlorophenyl(4-chlorophenyl)methyl(1H-1,2,4-triazol-1-ylmethyl)silane | 100 |
| [bis(2-Fluorophenyl)]methyl(1H-1,2,4-triazol-1-ylmethyl)silane, 1:1 complex with cuprous chloride | 90 |

TABLE 1 (continued)

| Compound | % Control Wheat Rust |
|---|---|
| [bis(2-Fluorophenyl)]methyl(1H-1,2,4-triazol-1-ylmethyl)silane, 2:1 complex with cupric chloride | 100 |
| (1,1'-Biphenyl-4-yl)dimethyl(1H-imidazol-1-ylmethyl)silane | 100 |
| (4-Chlorophenyl)(1H-imidazol-1-ylmethyl)dimethylsilane | 50 |
| Butyl(4-chlorophenyl)(1H-imidazol-1-ylmethyl)methylsilane | 90 |
| (1H-Imidazol-1-ylmethyl)dimethyl(4-phenoxyphenyl)silane | 60 |
| Dimethyl(1H-imidazol-1-ylmethyl)(4-methoxyphenyl)silane | 60 |
| (2,4-Dichlorophenyl)dimethyl(1H-imidazol-1-ylmethyl)silane | 90 |
| bis(4-Fluorophenyl)(1H-imidazol-1-ylmethyl)methylsilane | 100 |
| Dimethyl(4-fluorophenyl)(1H-imidazol-1-ylmethyl)silane | 80 |
| Dimethyl(1H-imidazol-1-ylmethyl)(4-trifluoromethylphenyl)silane | 100[A] |
| Butyl(2,4-dichlorophenyl)(1H-imidazol-1-ylmethyl)methylsilane | 100 |
| bis(2,4-Dichlorophenyl)(1H-imidazol-1-ylmethyl)methylsilane | 100 |
| 2,4-Dichlorophenyl(1H-imidazol-1-ylmethyl)methyl(phenyl)silane | 90 |
| 4-Chlorophenyl(1H-imidazol-1-ylmethyl)methyl(phenyl)silane | 100 |
| Dodecyl(dimethyl)(1H-imidazol-1-ylmethyl)silane | 80[A] |
| [4-(4-Chlorophenoxy)phenyl]dimethyl(1H-imidazol-1-ylmethyl)silane | 90 |
| (1,1'-Biphenyl-4-yl)butyl(1H-imidazol-1-ylmethyl)methylsilane | 100 |
| (1,1'-Biphenyl-4-yl)(1H-imidazol-1-ylmethyl)methyl(phenyl)silane | 100 |
| (1,1'-Biphenyl-3-yl)dimethyl(1H-imidazol-1-ylmethyl)silane | 90 |
| (4-Bromophenyl)(1H-imidazol-1-ylmethyl)methyl(phenyl)silane | 90 |
| (1,1'-Biphenyl-4-yl)dimethyl(1H-imidazol-1-ylmethyl)silane, 1:1 complex with cuprous chloride | 100 |
| (2-Chlorophenyl)(4-chlorophenyl)(1H-imidazol-1-ylmethyl)methylsilane | 100 |
| (2-Chlorophenyl)(dimethyl)(1H-imidazol-1-ylmethyl)silane | 80 |

[A] Compound applied at a concentration of 200 ppm.

## Example 69

Compounds of this invention were dissolved in acetone in an amount equal to 6% of the final volume and then suspended at a concentration of 100 ppm in purified water containing 250 ppm of the surfactant TREM 014® (polyhydric alcohol esters). These suspensions were sprayed to the point of run-off on cucumber seedlings. The following day, the plants were inoculated with a spore suspension of the fungus *Erysiphe cichoracearum*, causal agent of cucumber powdery mildew, and incubated in a growth room for 7 days. Disease ratings were then made. Percent disease control is shown in the following table. Treated plants had little or no powdery mildew in contrast to untreated plants which were covered with powdery mildew. Phytotoxicity in the form of growth reduction or hormonal effects was observed on some of the plants in association with disease control, and is indicated by G and H respectively. The control value, with the suffix "C" was obtained by applying the indicated compound at a concentration of 400 ppm.

TABLE 2

| Compound | % Control Cucumber Powdery Mildew |
|---|---|
| (Dimethyl)phenyl(1,2,4-triazol-1-ylmethyl)silane | 100 |
| Ethyldimethyl(1H-1,2,4-triazol-1-ylmethyl)silane | 100 |
| Butyldimethyl(1H-1,2,4-triazol-1-ylmethyl)silane | 100 |
| Dimethyl(4-methylphenyl)(1H-1,2,4-triazol-1-ylmethyl)silane | 100G |
| (4-Bromophenyl)dimethyl(1H-1,2,4-triazol-1-ylmethyl)silane | 100G |
| (1,1′-Biphenyl-4-yl)dimethyl(1H-1,2,4-triazol-1-ylmethyl)silane | 100 |
| (4-Chlorophenyl)dimethyl(1H-1,2,4-triazol-1-ylmethyl)silane | 100 |
| Butyl(4-chlorophenyl)methyl(1H-1,2,4-triazol-1-ylmethyl)silane | 100G |
| Dimethyl(1-naphthalenyl)(1H-1,2,4-triazol-1-ylmethyl)silane | 100 |
| (3,4-Dichlorophenyl)dimethyl(1H-1,2,4-triazol-1-ylmethyl)silane | 100 |
| Dimethyl(4-phenoxyphenyl)(1H-1,2,4-triazol-1-ylmethyl)silane | 70 |
| Dimethyl(4-methoxyphenyl)(1H-1,2,4-triazol-1-ylmethyl)silane | 100 |
| (2,4-Dichlorophenyl)dimethyl(1H-1,2,4-triazol-1-ylmethyl)silane | 100H |
| bis(4-Chlorophenyl)(methyl)(1H-1,2,4-triazol-1-ylmethyl)silane | 100 |
| (1H-1,2,4-Triazol-1-ylmethyl)triphenylsilane | 100 |
| Methyldiphenyl(1H-1,2,4-triazol-1-ylmethyl)silane | 100G |
| (1,1′-Biphenyl-4-yl)dimethyl(4H-1,2,4-triazol-4-ylmethyl)silane | 90 |
| bis(4-Fluorophenyl)(methyl)(1H-1,2,4-triazol-1-ylmethyl)silane | 100G |
| Dimethyl(4-fluorophenyl)(1H-1,2,4-triazol-1-ylmethyl)silane | 100G |
| Dimethyl(4-methylthiophenyl)(1H-1,2,4-triazol-1-ylmethyl)silane | 100 |
| Dimethyl(1H-1,2,4-triazol-1-ylmethyl)(4-trifluoromethylphenyl)silane | 100G |
| Dimethyl(1H-1,2,4-triazol-1-ylmethyl)(3-trifluoromethylphenyl)silane | 100 |
| Dimethyl(1H-1,2,4-triazol-1-ylmethyl)(2-trifluoromethylphenyl)silane | 100 |
| (2-Methoxyphenyl)dimethyl(1H-1,2,4-triazol-1-ylmethyl)silane | 100G |

TABLE 2 (continued)

| Compound | % Control Cucumber Powdery Mildew |
|---|---|
| Butyl(2,4-dichlorophenyl)methyl(1H-1,2,4-triazol-1-ylmethyl)silane | 100G |
| bis(2,4-Dichlorophenyl)(methyl)(1H-1,2,4-triazol-1-ylmethyl)silane | 100G |
| (2,4-Dichlorophenyl)methyl(phenyl)(1H-1,2,4-triazol-1-ylmethyl)silane | 100G |
| (4-Chlorophenyl)methyl(phenyl)(1H-1,2,4-triazol-1-ylmethyl)silane | 100G |
| (4-Fluorophenyl)methyl(phenyl)(1H-1,2,4-triazol-1-ylmethyl)silane | 100 |
| Butyl(methyl)phenyl(1H-1,2,4-triazol-1-ylmethyl)silane | 100 |
| (2,3-Dimethoxyphenyl)dimethyl(1H-1,2,4-triazol-1-ylmethyl)silane | 100G |
| (2,6-Dimethoxyphenyl)dimethyl(1H-1,2,4-triazol-1-ylmethyl)silane | 100G |
| Dodecyl(dimethyl)(1H-1,2,4-triazol-1-ylmethyl)silane | 60[c] |
| (2-Chlorophenyl)dimethyl(1H-1,2,4-triazol-1-ylmethyl)silane | 100G |
| [4-(4-Chlorophenoxy)phenyl]dimethyl(1H-1,2,4-triazol-1-ylmethyl)silane | 80 |
| (1,1′-Biphenyl-4-yl)butyl(methyl)(1H-1,2,4-triazol-1-ylmethyl)silane | 100 |
| Butyl(4-fluorophenyl)methyl(1H-1,2,4-triazol-1-ylmethyl)silane | 100 |
| bis(1,1′-Biphenyl-4-yl)(methyl)(1H-1,2,4-triazol-1-ylmethyl)silane | 100 |
| (1,1′-Biphenyl-4-yl)methyl(phenyl)(1H-1,2,4-triazol-1-ylmethyl)silane | 100 |
| (1,1-Dimethylethoxy)methyl(phenyl)(1H-1,2,4-triazol-1-ylmethyl)silane | 100 |
| Methyl(phenyl)(2-propoxy)(1H-1,2,4-triazol-1-ylmethyl)silane | 100 |
| (1,1′-Biphenyl-2-yl)dimethyl(1H-1,2,4-triazol-1-ylmethyl)silane | 90 |
| 2-Chlorophenyl(methyl)phenyl(1H-1,2,4-triazol-1-ylmethyl)silane | 100 |
| 4-Bromophenyl(methyl)phenyl(1H-1,2,4-triazol-1-ylmethyl)silane | 100 |
| [bis(2-Chlorophenyl)]methyl(1H-1,2,4-triazol-1-ylmethyl)silane | 100 |
| Cyclohexyl(dimethyl)(1H-1,2,4-triazol-1-ylmethyl)silane | 100G |
| [bis(4-Bromophenyl)]methyl(1H-1,2,4-triazol-1-ylmethyl)silane | 80G |
| (1,1′-Biphenyl-4-yl)dimethyl(1H-1,2,4-triazol-1-ylmethyl)silane, 4-dodecylbenzenesulfonic acid salt | 100 |
| (1,1′-Biphenyl-4-yl)dimethyl(1H-1,2,4-triazol-1-ylmethyl)silane, 1:1 complex with cuprous chloride | 100 |
| (1,1′-Biphenyl-4-yl)dimethyl(1H-1,2,4-triazol-1-ylmethyl)silane, 1:1 complex with zinc (II) chloride | 80 |
| (1,1′-Biphenyl-4-yl)dimethyl(1H-1,2,4-triazol-1-ylmethyl)silane, 1:1 complex with manganous sulfate | 90 |
| 2-Chlorophenyl(4-chlorophenyl)methyl(1H-1,2,4-triazol-1-ylmethyl)silane | 100 |

TABLE 2 (continued)

| Compound | % Control Cucumber Powdery Mildew |
|---|---|
| Phenyl[bis(2-propoxy)](1H-1,2,4-triazol-1-ylmethyl)silane | 100 |
| [bis(2-Fluorophenyl)]methyl(1H-1,2,4-triazol-1-ylmethyl)silane, 1:1 complex with cuprous chloride | 100 |
| [bis(2-Fluorophenyl)]methyl(1H-1,2,4-triazol-1-ylmethyl)silane, 2:1 complex with cupric chloride | 100 |
| (1H-Imidazol-1-ylmethyl)dimethyl(4-methylphenyl)silane | 100G |
| (4-Bromophenyl)(1H-imidazol-1-ylmethyl)dimethylsilane | 100 |
| (1,1'-Biphenyl-4-yl)dimethyl(1H-imidazol-1-ylmethyl)silane | 100 |
| (4-Chlorophenyl)(1H-imidazol-1-ylmethyl)dimethylsilane | 100 |
| Butyl(4-chlorophenyl)(1H-imidazol-1-ylmethyl)methylsilane | 100G |
| (1H-Imidazol-1-ylmethyl)dimethyl(1-naphthalenyl)silane | 100 |
| (3,4-Dichlorophenyl)(1H-imidazol-1-ylmethyl)dimethylsilane | 100 |
| (1H-Imidazol-1-ylmethyl)dimethyl(4-phenoxyphenyl)silane | 100 |
| Dimethyl(1H-imidazol-1-ylmethyl)(4-methoxyphenyl)silane | 100 |
| (2,4-Dichlorophenyl)dimethyl(1H-imidazol-1-ylmethyl)silane | 100H |
| bis(4-Chlorophenyl)(1H-imidazol-1-ylmethyl)methylsilane | 100 |
| bis(4-Fluorophenyl)(1H-imidazol-1-ylmethyl)methylsilane | 100 |
| Dimethyl(4-fluorophenyl)(1H-imidazol-1-ylmethyl)silane | 100G |
| Dimethyl(1H-imidazol-1-ylmethyl)(4-methylthiophenyl)silane | 100 |
| Dimethyl(1H-imidazol-1-ylmethyl)(4-trifluoromethylphenyl)silane | 100 |
| Dimethyl(1H-imidazol-1-ylmethyl)(3-trifluoromethylphenyl)silane | 80 |
| [4-(1,1-Dimethylethyl)phenyl](1H-imidazol-1-ylmethyl)dimethylsilane | 80 |
| (1H-Imidazol-1-ylmethyl)dimethyl(2-trifluoromethylphenyl)silane | 100G |
| Butyl(2,4-dichlorophenyl)(1H-imidazol-1-ylmethyl)methylsilane | 100G |
| bis(2,4-Dichlorophenyl)(1H-imidazol-1-ylmethyl)methylsilane | 100 |
| (2,4-Dichlorophenyl)(1H-imidazol-1-ylmethyl)methyl(phenyl)silane | 100 |
| (4-Chlorophenyl)(1H-imidazol-1-ylmethyl)methyl(phenyl)silane | 100 |
| (4-Fluorophenyl)(1H-imidazol-1-ylmethyl)methyl(phenyl)silane | 100 |
| (1H-Imidazol-1-ylmethyl)(2-methoxyphenyl)dimethylsilane | 100G |
| (2,3-Dimethoxyphenyl)(1H-imidazol-1-ylmethyl)dimethylsilane | 100 |
| Dodecyl(dimethyl)(1H-imidazol-1-ylmethyl)silane | 55 |

TABLE 2 (continued)

| Compound | % Control Cucumber Powdery Mildew |
|---|---|
| (2-Chlorophenyl)(1H-imidazol-1-ylmethyl)dimethylsilane | 100 |
| [4-(4-Chlorophenoxy)phenyl]dimethyl(1H-imidazol-1-ylmethyl)silane | 100 |
| (1,1′-Biphenyl-4-yl)butyl(1H-imidazol-1-ylmethyl)methylsilane | 100 |
| Butyl(4-fluorophenyl)(1H-imidazol-1-ylmethyl)methylsilane | 100 |
| (1,1′-Biphenyl-4-yl)(1H-imidazol-1-ylmethyl)methyl(phenyl)silane | 100 |
| (1,1-Dimethylethoxy)(1H-imidazol-1-ylmethyl)methyl(phenyl)silane | 100 |
| (1H-Imidazol-1-ylmethyl)methyl(phenyl)(2-propoxy)silane | 90 |
| (1H-Imidazol-1-ylmethyl)[bis(4-methoxyphenyl)]methylsilane | 50 |
| (1,1′-Biphenyl-2-yl)dimethyl(1H-imidazol-1-ylmethyl)silane | 50 |
| (2-Chlorophenyl)(1H-imidazol-1-ylmethyl)methyl(phenyl)silane | 100 |
| (4-Bromophenyl)(1H-imidazol-1-ylmethyl)methyl(phenyl)silane | 100 |
| [bis(2-Chlorophenyl)](1H-imidazol-1-ylmethyl)methylsilane | 100 |
| Cyclohexyl(dimethyl(1H-imidazol-1-ylmethyl)silane | 100G |
| [bis(4-Bromophenyl)](1H-imidazol-1-ylmethyl)methylsilane | 100 |
| (1,1′-Biphenyl-4-yl)dimethyl(1H-imidazol-1-ylmethyl)silane, 1:1 complex with cuprous chloride | 100 |
| (2-Chlorophenyl)(4-chlorophenyl)(1H-imidazol-1-ylmethyl)methylsilane | 100 |
| (2-Chlorophenyl)(dimethyl)(1H-imidazol-1-ylmethyl)silane | 80 |

Example 70

Compounds of this invention were dissolved in acetone in an amount equal to 6% of the final volume and then suspended at a concentration of 100 ppm in purified water containing 250 ppm of the surfactant TREM 014 (polyhydric alcohol esters). These suspensions were sprayed to the point of run-off on barley seedlings. The following day, the plants were inoculated with a spore suspension of the fungus *Erysiphe graminis*, causal agent of barley powdery mildew, and incubated in a growth room for 7 days. Disease ratings were then made. Percent disease control is shown in the following table. Treated plants had little or no powdery mildew in contrast to untreated plants which were covered with powdery mildew.

TABLE 3

| Compound | % Control Barley Powdery Mildew |
|---|---|
| Butyl(4-chlorophenyl)methyl(1H-1,2,4-triazol-1-ylmethyl)silane | 90 |
| (3,4-Dichlorophenyl)dimethyl(1H-1,2,4-triazol-1-ylmethyl)silane | 100 |
| Dimethyl(4-methoxyphenyl)(1H-1,2,4-triazol-1-ylmethyl)silane | 100 |
| (2,4-Dichlorophenyl)dimethyl(1H-1,2,4-triazol-1-ylmethyl)silane | 100 |

TABLE 3 (continued)

| Compound | % Control Barley Powdery Mildew |
|---|---|
| bis(4-Chlorophenyl)(methyl)(1H-1,2,4-triazol-1-ylmethyl)silane | 100 |
| (1H-1,2,4-Triazol-1-ylmethyl)triphenylsilane | 100 |
| Methyldiphenyl(1H-1,2,4-triazol-1-ylmethyl)silane | 100 |
| Dimethyl(1H-1,2,4-triazol-1-ylmethyl)(2-trifluoromethylphenyl)silane | 100 |
| Dodecyl(dimethyl)(1H-1,2,4-triazol-1-ylmethyl)silane | 100[A] |
| Butyl(4-chlorophenyl)(1H-imidazol-1-ylmethyl)methylsilane | 100 |
| (3,4-Dichlorophenyl)(1H-imidazol-1-ylmethyl)dimethylsilane | 80 |
| Dimethyl(1H-imidazol-1-ylmethyl)(4-methoxyphenyl)silane | 100 |
| (2,4-Dichlorophenyl)dimethyl(1H-imidazol-1-ylmethyl)silane | 100 |
| bis(4-Chlorophenyl)(1H-imidazol-1-ylmethyl)methylsilane | 100 |
| Dimethyl(1H-imidazol-1-ylmethyl)(4-trifluoromethylphenyl)silane | 100 |
| Dodecyl(dimethyl)(1H-imidazol-1-ylmethyl)silane | 100[A] |

[A] Compound applied at a concentration of 200 ppm.

Example 71

Compounds of this invention were dissolved in acetone in an amount equal to 6% of the final volume and then suspended at a concentration of 100 ppm in purified water containing 250 ppm of the surfactant TREM 014 (polyhydric alcohol esters). These suspensions were sprayed to the point of run-off on apple seedlings. The following day, the plants were inoculated with a spore suspension of the fungus *Venturia inaequalis*, causal agent of apple scab, and incubated in a saturated humidity chamber at 20° for 24 hours and then in a growth room for an additional 10—12 days. Disease ratings were then made and recorded as shown in the following table. Treated plants had fewer apple scab lesions when compared to untreated plants which were covered with scab lesions. Phytotoxicity expressed as growth reduction (G), chlorosis (C) or burn (B) was observed on some of the plants in association with disease control, and is noted after the % control. An asterisk indicates that the compound was applied at a concentration of 400 ppm.

TABLE 4

| Compound | % Control Apple Scab |
|---|---|
| Dimethyl(4-methylphenyl)(1H-1,2,4-triazol-1-ylmethyl)silane | 50G |
| (4-Bromophenyl)dimethyl(1H-1,2,4-triazol-1-ylmethyl)silane | 90G |
| (1,1'-Biphenyl-4-yl)dimethyl(1H-1,2,4-triazol-1-ylmethyl)silane | 100 |
| (4-Chlorophenyl)dimethyl(1H-1,2,4-triazol-1-ylmethyl)silane | 100 |
| Butyl(4-chlorophenyl)methyl(1H-1,2,4-triazol-1-ylmethyl)silane | 100G |

TABLE 4 (continued)

| Compound | % Control Apple Scab |
|---|---|
| Dimethyl(1-naphthalenyl)(1H-1,2,4-triazol-1-ylmethyl)silane | 50 |
| (3,4-Dichlorophenyl)dimethyl(1H-1,2,4-triazol-1-ylmethyl)silane | 80 |
| Dimethyl(4-phenoxyphenyl)(1H-1,2,4-triazol-1-ylmethyl)silane | 100 |
| Dimethyl(4-methoxyphenyl)(1H-1,2,4-triazol-1-ylmethyl)silane | 100 |
| (2,4-Dichlorophenyl)dimethyl(1H-1,2,4-triazol-1-ylmethyl)silane | 100 |
| bis(4-Chlorophenyl)(methyl)(1H-1,2,4-triazol-1-ylmethyl)silane | 100 |
| Methyldiphenyl(1H-1,2,4-triazol-1-ylmethyl)silane | 100 |
| (1,1′-Biphenyl-4-yl)dimethyl(4H-1,2,4-triazol-1-ylmethyl)silane | 80 |
| bis(4-Fluorophenyl)(methyl)(1H-1,2,4-triazol-1-ylmethyl)silane | 100 |
| Dimethyl(4-fluorophenyl)(1H-1,2,4-triazol-1-ylmethyl)silane | 80C |
| Dimethyl(4-methylthiophenyl)(1H-1,2,4-triazol-1-ylmethyl)silane | 60 |
| Dimethyl(1H-1,2,4-triazol-1-ylmethyl)-(2-trifluoromethylphenyl)silane | 65G |
| (2-Methoxyphenyl)dimethyl(1H-1,2,4-triazol-1-ylmethyl)silane | 80 |
| Butyl(2,4-dichlorophenyl)methyl(1H-1,2,4-triazol-1-ylmethyl)silane | 100G |
| bis(2,4-Dichlorophenyl)(methyl)(1H-1,2,4-triazol-1-ylmethyl)silane | 100 |
| (2,4-Dichlorophenyl)methyl(phenyl)(1H-1,2,4-triazol-1-ylmethyl)silane | 100G |
| (4-Chlorophenyl)methyl(phenyl)(1H-1,2,4-triazol-1-ylmethyl)silane | 100 |
| (4-Fluorophenyl)methyl(phenyl)(1H-1,2,4-triazol-1-ylmethyl)silane | 100 |
| Butyl(methyl)phenyl(1H-1,2,4-triazol-1-ylmethyl)silane | 80 |
| Dodecyl(dimethyl)(1H-1,2,4-triazol-1-ylmethyl)silane | 40B* |

TABLE 4 (continued)

| Compound | % Control Apple Scab |
|---|---|
| (2-Chlorophenyl)dimethyl(1H-1,2,4-triazol-1-ylmethyl)silane | 100 |
| [4-(4-Chlorophenoxy)phenyl]dimethyl(1H-1,2,4-triazol-1-ylmethyl)silane | 100 |
| (1,1'-Biphenyl-4-yl)butyl(methyl)(1H-1,2,4-triazol-1-ylmethyl)silane | 80 |
| Butyl(4-fluorophenyl)methyl(1H-1,2,4-triazol-1-ylmethyl)silane | 100 |
| (1,1'-Biphenyl-4-yl)methyl(phenyl)(1H-1,2,4-triazol-1-ylmethyl)silane | 100 |
| (1,1'-Biphenyl-2-yl)dimethyl(1H-1,2,4-triazol-1-ylmethyl)silane | 60 |
| (1,1'-Biphenyl-3-yl)dimethyl(1H-1,2,4-triazol-1-ylmethyl)silane | 50 |
| 2-Chlorophenyl(methyl)phenyl(1H-1,2,4-triazol-1-ylmethyl)silane | 90 |
| 4-Bromophenyl(methyl)phenyl(1H-1,2,4-triazol-1-ylmethyl)silane | 100 |
| [bis(2-Chlorophenyl)]methyl(1H-1,2,4-triazol-1-ylmethyl)silane | 40 |
| [bis(4-Bromophenyl]methyl(1H-1,2,4-triazol-1-ylmethyl)silane | 80 |
| (1,1'-Biphenyl-4-yl)dimethyl(1H-1,2,4-triazol-1-ylmethyl)silane 4-dodecylbenzenesulfonic acid salt | 100 |
| (1,1'-Biphenyl-4-yl)dimethyl(1H-1,2,4-triazol-1-ylmethyl)silane, 1:1 complex with cuprous chloride | 100 |
| (1,1'-Biphenyl-4-yl)dimethyl(1H-1,2,4-triazol-1-ylmethyl)silane, 1:1 complex with zinc (II) chloride | 100 |
| (1,1'-Biphenyl-4-yl)dimethyl(1H-1,2,4-triazol-1-ylmethyl)silane, 1:1 complex with manganous sulfate | 100 |
| 2-Chlorophenyl(4-chlorophenyl)methyl-(1H-1,2,4-triazol-1-ylmethyl)silane | 90 |
| 2-Chlorophenyl(dimethyl)(1H-1,2,4-triazol-1-ylmethyl)silane | 60 |
| (1,1'-Biphenyl-4-yl)dimethyl(1H-imidazol-1-ylmethyl)silane | 80 |
| Butyl(4-chlorophenyl(1H-imidazol-1-ylmethyl)methylsilane | 90 |
| (1H-Imidazol-1-ylmethyl)dimethyl-(1-naphthalenyl)silane | 40 |

TABLE 4 (continued)

| Compound | % Control Apple Scab |
|---|---|
| (3,4-Dichlorophenyl)(1H-imidazol-1-ylmethyl)dimethylsilane | 80 |
| (1H-Imidazol-1-ylmethyl)dimethyl-(4-phenoxyphenyl)silane | 100 |
| (2,4-Dichlorophenyl)dimethyl(1H-imidazol-1-ylmethyl)silane | 100 |
| bis(4-Fluorophenyl)(1H-imidazol-1-ylmethyl) methylsilane | 100 |
| Dimethyl(1H-imidazol-1-ylmethyl)(4-trifluoromethylphenyl)silane | 60* |
| [4-(1,1-Dimethylethyl)phenyl](1H-imidazol-1-ylmethyl)dimethylsilane | 50 |
| Butyl(2,4-dichlorophenyl)(1H-imidazol-1-ylmethyl)methylsilane | 100B |
| bis(2,4-Dichlorophenyl)(1H-imidazol-1-ylmethyl)methylsilane | 40 |
| (2,4-Dichlorophenyl)(1H-imidazol-1-ylmethyl)methyl(phenyl)silane | 80 |
| (4-Chlorophenyl)(1H-imidazol-1-ylmethyl)-methyl(phenyl)silane | 100 |
| (4-Fluorophenyl)(1H-imidazol-1-ylmethyl)-methyl(phenyl)silane | 100 |
| (1H-Imidazol-1-ylmethyl)(2-methoxy-phenyl)dimethylsilane | 60 |
| (2-Chlorophenyl)(1H-imidazol-1-ylmethyl)-dimethylsilane | 90 |
| (1,1'-Biphenyl-4-yl)butyl(1H-imidazol-1-ylmethyl)methylsilane | 100 |
| Butyl(4-fluorophenyl)(1H-imidazol-1-ylmethyl)methylsilane | 80 |
| bis(1,1'-Biphenyl-4-yl)(1H-imidazol-1-ylmethyl)methylsilane | 50 |
| (1H-Imidazol-1-ylmethyl)[bis(4-methoxyphenyl)]-methylsilane | 50 |
| (1,1'-Biphenyl-2-yl)dimethyl(1H-imidazol-1-ylmethyl)silane | 90 |
| (1,1'-Biphenyl-3-yl)dimethyl(1H-imidazol-1-ylmethyl)silane | 90 |
| (2-Chlorophenyl)(1H-imidazol-1-yl-methyl)-methyl(phenyl)silane | 100 |
| (4-Bromophenyl)(1H-imidazol-1-yl-methyl)-methyl(phenyl)silane | 30 |

TABLE 4 (continued)

| Compound | % Control Apple Scab |
|---|---|
| [bis(2-Chlorophenyl)](1H-imidazol-1-ylmethyl)methylsilane | 60 |
| Dimethyl(1H-imidazol-1-ylmethyl)-(4-methylsulfonylphenyl)silane | 80 |
| Cyclohexyl(dimethyl(1H-imidazol-1-ylmethyl)silane | 100B |
| [bis(4-Bromophenyl)](1H-imidazol-1-ylmethyl)methylsilane | 50 |
| (1,1'-Biphenyl-4-yl)dimethyl(1H-imidazol-1-ylmethyl)silane, 1:1 complex with cuprous chloride | 100 |
| (2-Chlorophenyl)(4-chlorophenyl)(1H-imidazol-1-ylmethyl)methylsilane | 80 |
| (2-Chlorophenyl)(dimethyl)(1H-imidazol-1-ylmethyl)silane | 60 |

Example 72

Compounds of this invention were dissolved in acetone in an amount equal to 6% of the final volume and then suspended at a concentration of 100 ppm in purified water containing 250 ppm of the surfactant TREM 014 (polyhydric alcohol esters). These suspensions were sprayed to the point of run-off on corn seedlings. The following day, the plants were inoculated with a spore suspension of *Helminthosporium maydis*, causal agent of southern corn leaf blight, and incubated in a saturated humidity chamber at 20° for 24 hours and then in a growth room for an additional 7 days, when disease ratings were made. Percent disease control is shown in the following table. Treated plants had few or no lesions while the untreated plants had numerous lesions on each leaf. Phytotoxicity expressed as growth reduction was observed on some of the plants in association with disease control.

TABLE 5

| Compound | % Control of Southern Corn Leaf Blight |
|---|---|
| (4-Bromophenyl)dimethyl(1H-1,2,4-triazol-1-ylmethyl)silane | 90 |
| (1,1'-Biphenyl-4-yl)dimethyl(1H-1,2,4-triazol-1-ylmethyl)silane | 90 |
| (3,4-Dichlorophenyl)dimethyl(1H-1,2,4-triazol-1-ylmethyl)silane | 90 |
| Dimethyl(4-methoxyphenyl)(1H-1,2,4-triazol-1-ylmethyl)silane | 90 |
| (2,4-Dichlorophenyl)dimethyl(1H-1,2,4-triazol-1-ylmethyl)silane | 90 |
| bis(4-Chlorophenyl)(methyl)(1H-1,2,4-triazol-1-ylmethyl)silane | 80 |
| Methyldiphenyl(1H-1,2,4-triazol-1-ylmethyl)silane | 80 |

TABLE 5 (continued)

| Compound | % Control of Southern Corn Leaf Blight |
|---|---|
| (1,1'-Biphenyl-4-yl)dimethyl(4H-1,2,4-triazol-4-ylmethyl)silane | 100 |
| bis(4-Fluorophenyl)(methyl)(1H-1,2,4-triazol-1-ylmethyl)silane | 100 |
| Dimethyl(4-fluorophenyl)(1H-1,2,4-triazol-1-ylmethyl)silane | 90 |
| Dimethyl(4-methylthiophenyl)(1H-1,2,4-triazol-1-ylmethyl)silane | 80 |
| Dimethyl(1H-1,2,4-triazol-1-ylmethyl)-(4-trifluoromethylphenyl)silane | 50 |
| [4-(1,1-Dimethylethyl)phenyl]dimethyl(1H-1,2,4-triazol-1-ylmethyl)silane | 60 |
| (2-Methoxyphenyl)dimethyl(1H-1,2,4-triazol-1-ylmethyl)silane | 70 |
| Butyl(2,4-dichlorophenyl)methyl(1H-1,2,4-triazol-1-ylmethyl)silane | 100 |
| bis(2,4-Dichlorophenyl)(methyl)(1H-1,2,4-triazol-1-ylmethyl)silane | 80 |
| (4-Chlorophenyl)methyl(phenyl)(1H-1,2,4-triazol-1-ylmethyl)silane | 90 |
| (4-Fluorophenyl)methyl(phenyl)(1H-1,2,4-triazol-1-ylmethyl)silane | 90 |
| (2-Chlorophenyl)dimethyl(1H-1,2,4-triazol-1-ylmethyl)silane | 100 |
| [4-(4-Chlorophenoxy)phenyl]dimethyl(1H-1,2,4-triazol-1-ylmethyl)silane | 50 |
| (3,5-Dichlorophenyl)dimethyl(1H-1,2,4-triazol-1-ylmethyl)silane | 40 |
| (1,1'-Biphenyl-4-yl)butyl(methyl)(1H-1,2,4-triazol-1-ylmethyl)silane | 50 |
| (1,1'-Biphenyl-4-yl)methyl(phenyl)(1H-1,2,4-triazol-1-ylmethyl)silane | 90 |
| [bis(4-Methoxyphenyl)]methyl(1H-1,2,4-triazol-1-ylmethyl)silane | 90 |
| (1,1'-Biphenyl-2-yl)dimethyl(1H-1,2,4-triazol-1-ylmethyl)silane | 90 |
| (1,1'-Biphenyl-3-yl)dimethyl(1H-1,2,4-triazol-1-ylmethyl)silane | 100 |
| 2-Chlorophenyl(methyl)phenyl(1H-1,2,4-triazol-1-ylmethyl)silane | 100 |

TABLE 5 (continued)

| Compound | % Control of Southern Corn Leaf Blight |
|---|---|
| 4-Bromophenyl(methyl)phenyl(1H-1,2,4-triazol-1-ylmethyl)silane | 80 |
| [bis(2-Chlorophenyl)]methyl(1H-1,2,4-triazol-1-ylmethyl)silane | 60 |
| Cyclohexyl(dimethyl)(1H-1,2,4-triazol-1-ylmethyl)silane | 50 |
| (1,1'-Biphenyl-4-yl)dimethyl(1H-1,2,4-triazol-1-ylmethyl)silane, 4-dodecylbenzenesulfonic acid salt | 100 |
| (1,1'-Biphenyl-4-yl)dimethyl(1H-1,2,4-triazol-1-ylmethyl)silane, 1:1 complex with cuprous chloride | 100 |
| (1,1'-Biphenyl-4-yl)dimethyl(1H-1,2,4-triazol-1-ylmethyl)silane, 1:1 complex with zinc (II) chloride | 90 |
| (1,1'-Biphenyl-4-yl)dimethyl(1H-1,2,4-triazol-1-ylmethyl)silane, 1:1 complex with manganous sulfate | 100 |
| 2-Chlorophenyl(4-chlorophenyl)methyl-(1H-1,2,4-triazol-1-ylmethyl)silane | 60 |
| (1,1'-Biphenyl-4-yl)dimethyl(1H-imidazol-1-ylmethyl)silane | 90 |
| Butyl(4-chlorophenyl)(1H-imidazol-1-ylmethyl)methylsilane | 50 |
| (3,4-Dichlorophenyl)(1H-imidazol-1-ylmethyl)dimethylsilane | 70 |
| (2,4-Dichlorophenyl)dimethyl-(1H-imidazol-1-ylmethyl)silane | 70 |
| bis(4-Chlorophenyl)(1H-imidazol-1-ylmethyl)methylsilane | 60 |
| bis(4-Fluorophenyl)(1H-imidazol-1-ylmethyl)methylsilane | 60 |
| [4-(1,1-Dimethylethyl)phenyl](1H-imidazol-1-ylmethyl)dimethylsilane | 70 |
| (1H-Imidazol-1-ylmethyl)dimethyl-(2-trifluoromethylphenyl)silane | 90 |
| Butyl(2,4-dichlorophenyl)(1H-imidazol-1-ylmethyl)methylsilane | 80 |
| bis(4,5-Dichlorophenyl)(1H-imidazol-1-ylmethyl)methylsilane | 80 |
| (4-Fluorophenyl)(1H-imidazol-1-ylmethyl)methyl(phenyl)silane | 80 |
| (2,6-Dimethoxyphenyl)(dimethyl)(1H-imidazol-1-ylmethyl)silane | 50 |

TABLE 5 (continued)

| Compound | % Control of Southern Corn Leaf Blight |
|---|---|
| (1,1'-Biphenyl-4-yl)(1H-imidazol-1-ylmethyl)methyl(phenyl)silane | 80 |
| (1,1'-Biphenyl-3-yl)dimethyl(1H-imidazol-1-ylmethyl)silane | 90 |
| [bis(2-Chlorophenyl)](1H-imidazol-1-ylmethyl)methylsilane | 90 |
| Cyclohexyl(dimethyl(1H-imidazol-1-ylmethyl)silane | 50 |

Example 73

Compounds of this invention were dissolved in acetone in an amount equal to 6% of the final volume and then suspended at a concentration of 100 ppm in purified water containing 250 ppm of the surfactant TREM 014 (polyhydric alcohol esters). These suspensions were sprayed to the point of run-off on peanut seedlings. The following day, the plants were inoculated with a spore suspension of *Cercospora arachidicola*, causal agent of peanut early leafspot, and incubated in a saturated humidity chamber at 27° for 24 hours and then in a growth room for an additional 14 days, when disease ratings were made. The results are shown in the following table. Treated plants had few or no leafspots while the untreated plants had numerous leafspots. Phytotoxicity expressed as burn (B) was observed in association with disease control for some treated plants and is indicated after the % control.

The control values designated with an asterisk were obtained by applying the compound at a concentration of 400 ppm.

TABLE 6

| Compound | % Control Peanut Early Leafspot |
|---|---|
| bis(4-Chlorophenyl)(methyl)(1H-1,2,4-triazol-1-ylmethyl)silane | 100 |
| Methyldiphenyl(1H-1,2,4-triazol-1-ylmethyl)silane | 100 |
| (1,1-Biphenyl-4-yl)dimethyl(1H-1,2,4-triazol-1-ylmethyl)silane | 100 |
| (4-Chlorophenyl)dimethyl(1H-1,2,4-triazol-1-ylmethyl)silane | 90 |
| Dimethyl(1-naphthalenyl)(1H-1,2,4-triazol-1-ylmethyl)silane | 90 |
| (2,4-Dichlorophenyl)dimethyl(1H-1,2,4-triazol-1-ylmethyl)silane | 100 |
| bis(4-Fluorophenyl)(methyl)(1H-1,2,4-triazol-1-ylmethyl)silane | 100 |
| Dimethyl(4-fluorophenyl)(1H-1,2,4-triazol-1-ylmethyl)silane | 50 |
| [4-(1,1-Dimethylethyl)phenyl]dimethyl(1H-1,2,4-triazol-1-ylmethyl)silane | 35 |
| Dimethyl(1H-1,2,4-triazol-1-ylmethyl)-(2-trifluoromethylphenyl)silane | 25* |

TABLE 6 (continued)

| Compound | % Control Peanut Early Leafspot |
|---|---|
| Butyl(2,4-dichlorophenyl)methyl(1H-1,2,4-triazol-1-ylmethyl)silane | 100 |
| bis(2,4-Dichlorophenyl)(methyl)(1H-1,2,4-triazol-1-ylmethyl)silane | 100 |
| (2,4-Dichlorophenyl)methyl(phenyl)(1H-1,2,4-triazol-1-ylmethyl)silane | 100 |
| (4-Chlorophenyl)methyl(phenyl)(1H-1,2,4-triazol-1-ylmethyl)silane | 100 |
| (4-Fluorophenyl)methyl(phenyl)(1H-1,2,4-triazol-1-ylmethyl)silane | 100 |
| (2-Chlorophenyl)dimethyl(1H-1,2,4-triazol-1-ylmethyl)silane | 30 |
| (1,1'-Biphenyl-4-yl)butyl(methyl)(1H-1,2,4-triazol-1-ylmethyl)silane | 100 |
| bis(1,1'-Biphenyl-4-yl)(methyl)(1H-1,2,4-triazol-1-ylmethyl)silane | 80 |
| (1,1'-Biphenyl-4-yl)methyl(phenyl)(1H-1,2,4-triazol-1-ylmethyl)silane | 100 |
| [bis(4-Methoxyphenyl)]methyl(1H-1,2,4-triazol-1-ylmethyl)silane | 30 |
| (1,1'-Biphenyl-2-yl)dimethyl(1H-1,2,4-triazol-1-ylmethyl)silane | 100 |
| (1,1'-Biphenyl-3-yl)dimethyl(1H-1,2,4-triazol-1-ylmethyl)silane | 90 |
| 2-Chlorophenyl(methyl)phenyl(1H-1,2,4-triazol-1-ylmethyl)silane | 100 |
| 4-Bromophenyl(methyl)phenyl(1H-1,2,4-triazol-1-ylmethyl)silane | 100 |
| [bis(2-Chlorophenyl)]methyl(1H-1,2,4-triazol-1-ylmethyl)silane | 100 |
| [bis(4-Bromophenyl]methyl(1H-1,2,4-triazol-1-ylmethyl)silane | 100 |
| (1,1'-Biphenyl-4-yl)dimethyl(1H-1,2,4-triazol-1-ylmethyl)silane, 4-dodecylbenzenesulfonic acid salt | 100 |
| (1,1'-Biphenyl-4-yl)dimethyl(1H-1,2,4-triazol-1-ylmethyl)silane, 1:1 complex with cuprous chloride | 100 |
| (1,1'-Biphenyl-4-yl)dimethyl(1H-1,2,4-triazol-1-ylmethyl)silane, 1:1 complex with zinc (II) chloride | 100 |
| (1,1'-Biphenyl-4-yl)dimethyl(1H-1,2,4-triazol-1-ylmethyl)silane, 1:1 complex with manganous sulfate | 100 |

TABLE 6 (continued)

| Compound | % Control Peanut Early Leafspot |
|---|---|
| 2-Chlorophenyl(4-chlorophenyl)methyl(1H-1,2,4-triazol-1-ylmethyl)silane | 90 |
| [bis(2-Fluorophenyl)]methyl(1H-1,2,4-triazol-1-ylmethyl)silane, 1:1 complex with cuprous chloride | 100 |
| [bis(2-Fluorophenyl)]methyl(1H-1,2,4-triazol-1-ylmethyl)silane, 2:1 complex with cupric chloride | 100 |
| (1,1'-Biphenyl-4-yl)dimethyl(1H-imidazol-1-ylmethyl)silane | 100 |
| (2,4-Dichlorophenyl)dimethyl(1H-imidazol-1-ylmethyl)silane | 100 |
| Diphenyl(1H-imidazol-1-ylmethyl)methylsilane | 50 |
| bis(4-Fluorophenyl)(1H-imidazol-1-ylmethyl)-methylsilane | 100 |
| Dimethyl(4-fluorophenyl)(1H-imidazol-1-ylmethyl)silane | 60B |
| Dimethyl(1H-imidazol-1-ylmethyl)(4-trifluoromethylphenyl)silane | 36* |
| Dimethyl(1H-imidazol-1-ylmethyl)(3-trifluoromethylphenyl)silane | 50 |
| Butyl(2,4-dichlorophenyl)(1H-imidazol-1-ylmethyl)methylsilane | 100 |
| bis(2,4-Dichlorophenyl)(1H-imidazol-1-ylmethyl)methylsilane | 90 |
| (2,4-Dichlorophenyl)(1H-imidazol-1-ylmethyl)methyl(phenyl)silane | 100 |
| (4-Chlorophenyl)(1H-imidazol-1-ylmethyl)methyl(phenyl)silane | 100 |
| (4-Fluorophenyl)(1H-imidazol-1-ylmethyl)methyl(phenyl)silane | 100 |
| (2-Chlorophenyl)(1H-imidazol-1-ylmethyl)dimethylsilane | 80 |
| (1,1'-Biphenyl-4-yl)butyl(1H-imidazol-1-ylmethyl)methylsilane | 90 |
| bis(1,1'-Biphenyl-4-yl)(1H-imidazol-1-ylmethyl)methylsilane | 60 |
| (1,1'-Biphenyl-4-yl)(1H-imidazol-1-ylmethyl)methyl(phenyl)silane | 80 |
| (1,1'-Biphenyl-2-yl)dimethyl(1H-imidazol-1-ylmethyl)silane | 30 |

TABLE 6 (continued)

| Compound | % Control Peanut Early Leafspot |
|---|---|
| (1,1'-Biphenyl-3-yl)dimethyl(1H-imidazol-1-ylmethyl)silane | 80 |
| (2-Chlorophenyl)(1H-imidazol-1-ylmethyl)methyl(phenyl)silane | 100 |
| (4-Bromophenyl)(1H-imidazol-1-ylmethyl)methyl(phenyl)silane | 90 |
| [bis(2-Chlorophenyl)](1H-imidazol-1-ylmethyl)methylsilane | 100 |
| [bis(4-Bromophenyl)](1H-imidazol-1-ylmethyl)methylsilane | 50 |
| (1,1'-Biphenyl-4-yl)dimethyl(1H-imidazol-1-ylmethyl)silane, 1:1 complex with cuprous chloride | 100 |
| (2-Chlorophenyl)(4-chlorophenyl)(1H-imidazol-1-ylmethyl)methylsilane | 80 |

Example 74

Compounds of this invention were dissolved in acetone in an amount equal to 6% of the final volume and then suspended at a concentration of 80 ppm in purified water containing 250 ppm of the surfactant TREM 014 (polyhydric alcohol esters). This suspension was sprayed to the point of run-off on bean seedlings. The following day, the plants were inoculated with a spore suspension of the fungus *Uromyces phaseoli,* causal agent of bean rust, and incubated in a saturated humidity chamber at 20° for 24 hours and then in a greenhouse for 7 days. Disease ratings were then made. Percent disease control is shown in the following table. Treated plants had few or no rust pustules in contrast to untreated plants which were covered with rust pustules. Phytotoxicity in the form of growth reduction was observed in association with disease control for some treated plants, and is indicated by "G" after the % control. The values designated with an asterisk were obtained using the compound at a concentration of 16 ppm.

TABLE 7

| Compound | % Control Bean Rust |
|---|---|
| (1,1-Biphenyl-4-yl)dimethyl(1H-1,2,4-triazol-1-ylmethyl)silane | 100 |
| (2,4-Dichlorophenyl)dimethyl(1H-1,2,4-triazol-1-ylmethyl)silane | 30G |
| bis(4-Chlorophenyl)(methyl)(1H-1,2,4-triazol-1-ylmethyl)silane | 100G |
| (4-Chlorophenyl)methyl(phenyl)(1H-1,2,4-triazol-1-ylmethyl)silane | 98* |
| (4-Fluorophenyl)methyl(phenyl)(1H-1,2,4-triazol-1-ylmethyl)silane | 100* |
| bis(4-Fluorophenyl)(methyl)(1H-1,2,4-triazol-1-ylmethyl)silane | 98* |
| (1,1'-Biphenyl-4-yl)dimethyl(1H-imidazol-1-ylmethyl)silane | 100 |
| (2,4-Dichlorophenyl)dimethyl(1H-imidazol-1-ylmethyl)silane | 83 |

Example 75

Compounds of this invention were dissolved in acetone in an amount equal to 5% of the final volume and then suspended at a concentration of 100 ppm in purified water containing 700 ppm of the surfactant TREM 014 (polyhydric alcohol esters). Canned peach halves were dipped in this suspension for three minutes and then placed to air dry in sterile containers. Upon drying, the peach halves were inoculated with two pieces of *Monilinia fructicola mycelium,* causal agent of stone fruit brown rot, and incubated in the sterile containers for five days. At that time the radii of the colonies' growth were measured on each peach. Colonies on treated peaches did not grow or grew only a few milliliters in diameter while those growing on untreated peaches covered the entire surface of the peach. Percent disease control (percent growth inhibition of colonies on treated peaches as compared to that of colonies on untreated peaches) is expressed in the table below.

TABLE 8

| Compound | % Control Brown Rot |
|---|---|
| (Dimethyl)phenyl(1,2,4-triazol-1-ylmethyl)silane | 89 |
| (Butyl)dimethyl(1H-1,2,4-triazol-1-ylmethyl)silane | 95 |
| (1,1'-Biphenyl-4-yl)dimethyl(1H-1,2,4-triazol-1-ylmethyl)silane | 100 |
| Butyl(4-chlorophenyl)methyl(1H-1,2,4-triazol-1-ylmethyl)silane | 98 |
| Dimethyl(4-methoxyphenyl)(1H-1,2,4-triazol-1-ylmethyl)silane | 97 |
| (2,4-Dichlorophenyl)dimethyl(1H-1,2,4-triazol-1-ylmethyl)silane | 100 |
| bis(4-Chlorophenyl)(methyl)(1H-1,2,4-triazol-1-ylmethyl)silane | 95 |
| (1,1'-Biphenyl-4-yl)dimethyl(4H-1,2,4-triazol-1-ylmethyl)silane | 96 |
| bis(4-Fluorophenyl)(methyl)(1H-1,2,4-triazol-1-ylmethyl)silane | 100 |
| Butyl(2,4-dichlorophenyl)methyl(1H-1,2,4-triazol-1-ylmethyl)silane | 98 |
| (4-Chlorophenyl)methyl(phenyl)(1H-1,2,4-triazol-1-ylmethyl)silane | 70 |
| (4-Fluorophenyl)methyl(phenyl)(1H-1,2,4-triazol-1-ylmethyl)silane | 90 |
| Butyl(4-fluorophenyl)methyl(1H-1,2,4-triazol-1-ylmethyl)silane | 100 |
| Dibutyl(methyl)(1H-1,2,4-triazol-1-ylmethyl)silane | 81 |
| (1,1'-Biphenyl-4-yl)dimethyl(1H-imidazol-1-ylmethyl)silane | 83 |
| Butyl(4-chlorophenyl)(1H-imidazol-1-ylmethyl)methylsilane | 45 |

TABLE 8 (continued)

| Compound | % Control Brown Rot |
|---|---|
| (1H-Imidazol-1-ylmethyl)dimethyl(4-phenoxyphenyl)methylsilane | 80 |
| (2,4-Dichlorophenyl)dimethyl(1H-imidazol-1-ylmethyl)silane | 100 |
| Diphenyl(1H-imidazol-1-ylmethyl)silane | 76 |
| (4-Chlorophenyl)(1H-imidazol-1-ylmethyl)methyl(phenyl)silane | 45 |
| (4-Fluorophenyl(1H-imidazol-1-ylmethyl)methyl(phenyl)silane | 65 |

Example 76

Compounds of this invention were dissolved in acetone in an amount equal to 6% of the final volume and then suspended at a concentration of 100 ppm in purified water containing 250 ppm of the surfactant TREM 014 (polyhydric alcohol esters). This suspension was sprayed to the point of run-off on rice seedlings. The following day, the plants were inoculated with a mixture of bran and the mycelium of *Rhizoctonia solani*, causal agent of sheath blight of rice, and incubated in a growth room for 7 days. Disease ratings were then made. Percent disease control is shown in the following table. Treated plants had little sheath blight in contrast to untreated plants which were covered with sheath blight.

TABLE 9

| Compound | % Control of Rice Sheath Blight |
|---|---|
| (1,1'-Biphenyl-4-yl)dimethyl-(1H-1,2,4-triazol-1-ylmethyl)silane | 40 |
| (3,4-Dichlorophenyl)dimethyl(1H-1,2,4-triazol-1-ylmethyl)silane | 80 |
| bis(4-Fluorophenyl)(methyl)(1H-1,2,4-triazol-1-ylmethyl)silane | 80 |
| [4-(1,1-Dimethylethyl)phenyl]dimethyl(1H-1,2,4-triazol-1-ylmethyl)silane | 90 |
| Butyl(2,4-dichlorophenyl)methyl(1H-1,2,4-triazol-1-ylmethyl)silane | 50 |
| (4-Chlorophenyl)methyl(phenyl)(1H-1,2,4-triazol-1-ylmethyl)silane | 90 |
| (4-Fluorophenyl)methyl(phenyl)(1H-1,2,4-triazol-1-ylmethyl)silane | 80 |
| Butyl(methyl)phenyl(1H-1,2,4-triazol-1-ylmethyl)silane | 90 |
| (1,1'-Biphenyl-4-yl)butyl(methyl)(1H-1,2,4-triazol-1-ylmethyl)silane | 80 |
| Butyl(4-fluorophenyl)methyl(1H-1,2,4-triazol-1-ylmethyl)silane | 80 |

TABLE 9 (continued)

| Compound | % Control of Rice Sheath Blight |
|---|---|
| bis(1,1'-Biphenyl-4-yl)(methyl)(1H-1,2,4-triazol-1-ylmethyl)silane | 90 |
| [bis(4-Methoxyphenyl)]methyl(1H-1,2,4-triazol-1-ylmethyl)silane | 80 |
| 2-Chlorophenyl(methyl)phenyl(1H-1,2,4-triazol-1-ylmethyl)silane | 90 |
| 4-Bromophenyl(methyl)phenyl(1H-1,2,4-triazol-1-ylmethyl)silane | 90 |
| [bis(2-Chlorophenyl)]methyl(1H-1,2,4-triazol-1-ylmethyl)silane | 60 |
| (1,1'-Biphenyl-4-yl)dimethyl(1H-1,2,4-triazol-1-ylmethyl)silane, 1:1 complex with cuprous chloride | 90 |
| (1,1-Biphenyl-4-yl)dimethyl(1H-1,2,4-triazol-1-ylmethyl)silane, 1:1 complex with zinc (II) chloride | 90 |
| 2-Chlorophenyl(4-chlorophenyl)methyl(1H-1,2,4-triazol-1-ylmethyl)silane | 70 |
| [bis(2-Fluorophenyl)]methyl(1H-1,2,4-triazol-1-ylmethyl)silane, 1:1 complex with cuprous chloride | 90 |
| (1H-Imidazol-1-ylmethyl)dimethyl-(4-phenoxyphenyl)silane | 70 |
| bis(4-Fluorophenyl)(1H-imidazol-1-ylmethyl)silane | 90 |
| (1H-Imidazol-1-ylmethyl)dimethyl-(2-trifluoromethylphenyl)silane | 80 |
| Butyl(2,4-dichlorophenyl(1H-imidazol-1-ylmethyl)methylsilane | 90 |
| bis(2,4-Dichlorophenyl)(1H-imidazol-1-ylmethyl)methylsilane | 80 |
| (4-Fluorophenyl)(1H-imidazol-1-ylmethyl)methyl(phenyl)silane | 90 |
| (1H-Imidazol-1-ylmethyl)(2-methoxyphenyl) dimethylsilane | 90 |
| [4-(4-Chorophenoxy)phenyl]dimethyl(1H-imidazol-1-ylmethyl)silane | 70 |
| Butyl(1H-imidazol-1-ylmethyl)methyl-(phenyl)silane | 80 |
| (1,1'-Biphenyl-4-yl)butyl(1H-imidazol-1-ylmethyl)methylsilane | 90 |
| Butyl(4-fluorophenyl)(1H-imidazol-1-ylmethyl)methylsilane | 80 |

TABLE 9 (continued)

| Compound | % Control of Rice Sheath Blight |
|---|---|
| (1,1'-Biphenyl-2-yl)dimethyl(1H-imidazol-1-ylmethyl)silane | 90 |
| (1,1'-Biphenyl-3-yl)dimethyl(1H-imidazol-1-ylmethyl)silane | 90 |
| [bis(2-Chlorophenyl)](1H-imidazol-1-ylmethyl)methylsilane | 40 |
| (1,1'-Biphenyl-4-yl)dimethyl(1H-imidazol-1-ylmethyl)silane, 1:1 complex with cuprous chloride | 50 |
| (2-Chlorophenyl)(dimethyl)(1H-imidazol-1-ylmethyl)silane | 90 |

Example 77

Compounds of this invention were dissolved in acetone in an amount equal to 6% of the final volume and then suspended at a concentration of 100 ppm in purified water containing 250 ppm of the surfactant TREM 014 (polyhydric alcohol esters). These suspensions were sprayed to the point of run-off on rice seedlings. The following day, the plants were inoculated with a spore suspension of *Pyricularia oryzae*, causal agent of rice blast, and incubated in a saturated humidity chamber at 28°C for 24 hours and then in a growth room for an additional 7 days, when disease ratings were made. Percent disease control is shown in the following table. Treated plants had no or few lesions while the untreated plants had numerous lesions on each leaf.

TABLE 10 (continued)

| Compound | % Control of Rice Blast |
|---|---|
| Dimethyl(1-naphthalenyl(1H-1,2,4-triazol-1-ylmethyl)silane | 70 |
| bis(4-Chlorophenyl)(methyl)(1H-1,2,4-triazol-1-ylmethyl)silane | 90 |
| bis(4-Fluorophenyl)(methyl)(1H-1,2,4-triazol-1-ylmethyl)silane | 100 |
| [4-(1,1-Dimethylethyl)phenyl]dimethyl(1H-1,2,4-triazol-1-ylmethyl)silane | 90 |
| (4-Chlorophenyl)methyl(phenyl)(1H-1,2,4-triazol-1-ylmethyl)silane | 100 |
| Butyl(methyl)phenyl(1H-1,2,4-triazol-1-ylmethyl)silane | 90 |
| (2-Chlorophenyl)dimethyl(1H-1,2,4-triazol-1-ylmethyl)silane | 100 |
| (1,1-Biphenyl-4-yl)butyl(methyl)(1H-1,2,4-triazol-1-ylmethyl)silane | 100 |
| Butyl-4-fluorophenyl)methyl(1H-1,2,4-triazol-1-ylmethyl)silane | 100 |
| Dibutyl(methyl)(1H-1,2,4-triazol-1-ylmethyl)silane | 80 |

TABLE 10 (continued)

| Compound | % Control of Rice Sheath Blight |
|---|---|
| bis(1,1'-Biphenyl-4-yl)(methyl)(1H-1,2,4-triazol-1-ylmethyl)silane | 100 |
| (1,1'-Biphenyl-2-yl)dimethyl(1H-1,2,4-triazol-1-ylmethyl)silane | 90 |
| 2-Chlorophenyl(methyl)phenyl(1H-1,2,4-triazol-1-ylmethyl)silane | 100 |
| 4-Bromophenyl(methyl)phenyl(1H-1,2,4-triazol-1-ylmethyl)silane | 80 |
| [bis(2-Chlorophenyl)]methyl(1H-1,2,4-triazol-1-ylmethyl)silane | 90 |
| Dimethyl(4-methylsulfonylphenyl)(1H-1,2,4-triazol-1-ylmethyl)silane | 70 |
| [bis(4-Bromophenyl)]methyl(1H-1,2,4-triazol-1-ylmethyl)silane | 90 |
| (1,1'-Biphenyl-4-yl)dimethyl(1H-1,2,4-triazol-1-ylmethyl)silane, 4-dodecylbenzenesulfonic acid salt | 80 |
| (1,1'-Biphenyl-4-yl)dimethyl(1H-1,2,4-triazol-1-ylmethyl)silane, 1:1 complex with cuprous chloride | 100 |
| (1,1'-Biphenyl-4-yl)dimethyl(1H-1,2,4-triazol-1-ylmethyl)silane, 1:1 complexe with zinc (II) chloride | 100 |
| [bis(2-Fluorophenyl)]methyl(1H-1,2,4-triazol-1-ylmethyl)silane, 1:1 complex with cuprous chloride | 90 |
| [bis(2-Fluorophenyl)]methyl(1H-1,2,4-triazol-1-ylmethyl)silane, 2:1 complex with cupric chloride | 100 |
| (1H-Imidazol-1-ylmethyl)dimethyl-(4-phenoxyphenyl)silane | 70 |
| [4-(1,1-Dimethylethyl)phenyl](1H-imidazol-1-ylmethyl)-dimethylsilane | 80 |
| (4-Fluorophenyl)(1H-imidazol-1-ylmethyl)-methyl(phenyl)silane | 100 |
| [4-(4-Chlorophenoxy)phenyl]dimethyl-(1H-imidazol-1-ylmethyl)silane | 100 |
| Butyl(1H-imidazol-1-ylmethyl)methyl-(phenyl)silane | 90 |
| (1,1'-Biphenyl-4-yl)butyl(1H-imidazol-1-ylmethyl)methylsilane | 90 |
| Butyl(4-fluorophenyl)(1H-imidazol-1-ylmethyl)methylsilane | 100 |
| (1,1'-Biphenyl-2-yl)dimethyl(1H-imidazol-1-ylmethyl)silane | 90 |

TABLE 10 (continued)

| Compound | % Control of Rice Sheath Blight |
|---|---|
| (1,1'-Biphenyl-3-yl)dimethyl(1H-imidazol-1-ylmethyl)silane | 80 |
| [bis(2-Chlorophenyl)](1H-imidazol-1-ylmethyl)methylsilane | 90 |
| Dimethyl(1H-imidazol-1-ylmethyl)-(4-methylsulfonylphenyl)silane | 100 |
| [bis(4-Bromophenyl)](1H-imidazol-1-ylmethyl)methylsilane | 80 |

Example 78

Compounds of this invention were dissolved in acetone in an amount equal to 6% of the final volume and then suspended at a concentration of 100 ppm in purified water containing 250 ppm of the surfactant TREM 014 (polyhydric alcohol esters). These suspensions were sprayed to the point of run-off on tomato seedlings. The following day, the plants were inoculated with a spore suspension of *Phytophthora infestans,* causal agent of tomato late blight, and incubated in a saturated humidity chamber at 20°C for 24 hours and then in a growth room for an additional 7 days, when disease ratings were made. Percent disease control is shown in the following table. Treated plants had no or few lesions while the untreated plants had numerous lesions on each leaf.

TABLE 11

| Compound | % Control of Tomato Late Blight |
|---|---|
| Dimethyl(4-phenoxyphenyl)(1H-1,2,4-triazol-1-ylmethyl)silane | 50 |
| [4-(4-Chlorophenoxy)phenyl]dimethyl(1H-1,2,4-triazol-1-ylmethyl)silane | 50 |
| (1,1'-Biphenyl-2-yl)dimethyl(1H-1,2,4-triazol-1-ylmethyl)silane | 50 |
| (1,1'-Biphenyl-4-yl)dimethyl(1H-1,2,4-triazol-1-ylmethyl)silane, 4-dodecylbenzenesulfonic acid salt | 60 |
| (1,1-Biphenyl-4-yl)dimethyl(1H-1,2,4-triazol-1-ylmethyl)silane, 1:1 complex with cuprous chloride | 100 |
| (1,1'-Biphenyl-4-yl)dimethyl(1H-1,2,4-triazol-1-ylmethyl)silane, 1:1 complex with zinc (II) chloride | 90 |
| [bis(2-Fluorophenyl)]methyl(1H-1,2,4-triazol-1-ylmethyl)silane, 2:1 complex with cupric chloride | 40 |
| (4-Bromophenyl)(1H-imidazol-1-ylmethyl)dimethylsilane | 30 |
| (1,1'-Biphenyl-4-yl)dimethyl(1H-imidazol-1-ylmethyl)silane | 50 |
| (1H-imidazol-1-ylmethyl)dimethyl-(4-phenoxyphenyl)silane | 80 |
| Dimethyl(1H-imidazol-1-ylmethyl)(3-trifluoromethylphenylsilane | 70 |

TABLE 11 (continued)

| Compound | % Control of Tomato Late Blight |
|---|---|
| (2,6-Dimethoxyphenyl)(dimethyl)(1H-imidazol-1-ylmethyl)silane | 50 |
| [bis(2-Chlorophenyl)](1H-imidazol-1-ylmethyl)methylsilane | 60 |

Example 79

Compounds of this invention were incorporated into 45°C standard strength V-8 agar at a concentration of 200.0 ppm. The amended media were then dispensed into petri dishes and allowed to solidify. Plugs approximately 4 $mm^2$ from agar cultures of 5 *Phytophthora* species: *Phytophthora cinnamomi, P. cactorum, P. infestans, P, palmivora,* and *P. parasitica* var. *nicotianae* were placed on the media and incubated at 22°C for 6 days. Colonies whose radial growth extended 1 mm or less were considered to be controlled by a compound when compared to colonies whose radial growth extended 15 mm or more when growing on unamended media. The number of *Phytophthera* species controlled by certain compounds of this invention are listed in the table below.

TABLE 12

| Compound | # of 5 Phytophthora species controlled in vitro |
|---|---|
| (Butyl)dimethyl(1H-1,2,4-triazol-1-ylmethyl)silane | 1 |
| (3,4-Dichlorophenyl)dimethyl(1H-1,2,4-triazol-1-ylmethyl)silane | 2 |
| (1,1'-Biphenyl-4-yl)dimethyl(1H-imidazol-1-ylmethyl)silane | 3 |
| (1H-imidazol-1-ylmethyl)dimethyl-(4-phenoxyphenyl)silane | 4 |
| (2,4-Dichlorophenyl)dimethyl(1H-imidazol-1-ylmethyl)silane | 5 |
| Diphenyl(1H-imidazol-1-ylmethyl)-methylsilane | 2 |
| (4-Fluorophenyl)(1H-imidazol-1-ylmethyl)methyl(phenyl)silane | 2 |

Example 80

Compounds of this invention were incorporated into a proprietary formulation and used to coat cotton seeds at a rate of 2 gm/kg seed. After being thoroughly coated, the seeds were allowed to air dry at room temperature. The cotton seeds were then planted into soil amended with the fungus *Pythium aphanadermatum*, sand, and corn meal at a rate sufficient to kill most untreated seeds. The seeds were held at room temperature for 1 week, after which time disease ratings were made. Percent disease control is shown in the following table. Most or all seeds from treatments germinated and produced vigorous seedlings in contrast to untreated seeds which either did not germinate or produced damped off or weak seedlings.

TABLE 13

| Compound | % Control of Pythium on Cotton |
|---|---|
| Ethyldimethyl(1H-1,2,4-triazol-1-ylmethyl)silane | 48 |
| (1,1'-Biphenyl-4-yl)dimethyl(1H-1,2,4-triazol-1-ylmethyl)silane | 12 |
| (4-Chlorophenyl)dimethyl(1H-1,2,4-triazol-1-ylmethyl)silane | 53[A] |
| Dimethyl(4-phenoxyphenyl(1H-1,2,4-triazol-1-ylmethyl)silane | 18[A] |
| (1,1'-Biphenyl-4-yl)dimethyl(1H-imidazol-1-ylmethyl)silane | 18 |
| (4-Chlorophenyl(1H-imidazol-1-ylmethyl)dimethylsilane | 18[A] |
| (3,4-Dichlorophenyl)(1H-imidazol-1-ylmethyl)dimethylsilane | 15[A] |

[A]control at a rate of 0.5 gm/kg seed.

Example 81

Compounds of this invention were incorporated into a proprietary formulation and used to coat corn seeds at a rate of 2 gm/kg seed. After being thoroughly coated, the seeds were allowed to air dry at room temperature. The seeds were then planted into soil amended with a mixture of the fungus *Pythium aphanadermatum* sand, and corn meal at a rate sufficient to kill most untreated seeds. The seeds were held at 49°F (9.5°C) for 2 weeks and then at 70°F (21°C) for 1 additional week. After this time disease ratings were made. Percent disease control is shown in the following table. Most or all seeds from treatments germinated and produced vigorous seedlings in contrast to untreated seeds which either did not germinate or produced damped off or weak seedlings.

TABLE 14

| Compound | % Control of Pythium on Corn |
|---|---|
| Ethyldimethyl(1H-1,2,4-triazol-1-ylmethyl)silane | 13 |
| (1,1'-Biphenyl-4-yl)dimethyl(1H-1,2,4-triazol-1-ylmethyl)silane | 30 |
| (4-Chlorophenyl)dimethyl(1H-1,2,4-triazol-1-ylmethyl)silane | 8 |
| Dimethyl(1-naphthalenyl)(1H-1,2,4-triazol-1-ylmethyl)silane | 30 |
| (3,4-Dichlorophenyl)dimethyl(1H-1,2,4-triazol-1-ylmethyl)silane | 43 |
| Ethyl(1H-imidazol-1-ylmethyl)dimethylsilane | 70 |
| (1H-imidazol-1-ylmethyl)dimethyl-(4-methoxyphenyl)silane | 30 |
| (1,1'-Biphenyl-4-yl)dimethyl(1H-imidazol-1-ylmethyl)silane | 32 |
| (4-Chlorophenyl)(1H-imidazol-1-ylmethyl)dimethylsilane | 25 |
| (1H-Imidazol-1-ylmethyl)dimethyl-(1-naphthalenyl)silane | 27 |
| (3,4-Dichlorophenyl)(1H-imidazol-1-ylmethyl)dimethylsilane | 30 |
| (1H-Imidazol-1-ylmethyl)dimethyl-(4-phenoxyphenyl)silane | 5 |
| Dimethyl(4-fluorophenyl)(1H-imidazol-1-ylmethyl)silane | 15 |

**Claims for the Contracting States: BE CH DE FR GB IT LI LU NL SE**

1. A compound of the formula:

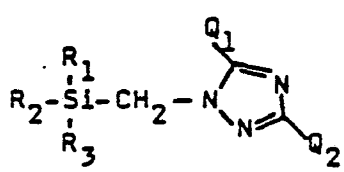

I

wherein
$Q_1$ and $Q_2$ are independently H or $CH_3$;
$R_1$ is $C_2$—$C_{18}$ alkyl, $C_3$—$C_6$ cycloalkyl, naphthyl, or

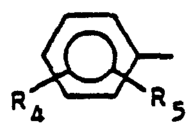

;

where

$R_4$ and $R_5$ are independently —H; halogen; —$OCH_3$; —$OCF_3$; —$SCH_3$; —$SO_2CH_3$; phenyl; phenyl substituted with halogen and/or $C_1$—$C_4$ alkyl and/or —$CF_3$; phenoxy; phenoxy substituted with halogen and/or $C_1$—$C_4$ alkyl and/or —$CF_3$; —$CF_3$; $C_1$—$C_4$ alkyl; or cyclohexyl;

$R_2$ and $R_3$ are independently $C_1$—$C_6$ alkyl, $C_3$—$C_6$ cycloalkyl, $OR_6$, or

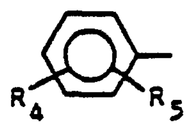 ;

where

$R_6$ is $C_1$—$C_4$ alkyl, or one $R_6$ group may be H and/or one $R_6$ group may be

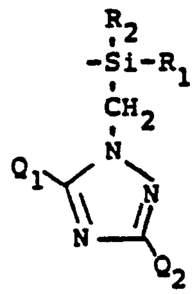

and $R_2$ and $R_3$ together may be a 1,2- or 1,3- or 1,4-glycol bridge or a 1,4 unsaturated glycol bridge which may optionally be substiuted by up to four alkyl groups $R_7$—$R_{10}$ that have a total of up to four carbon atoms,

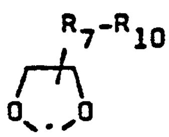 or 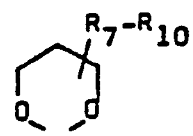 or

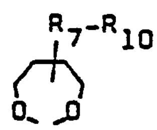 or 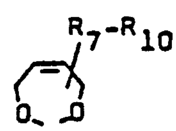

and salts thereof with protic acids and complexes with metal ions.

2. A compound of the formula:

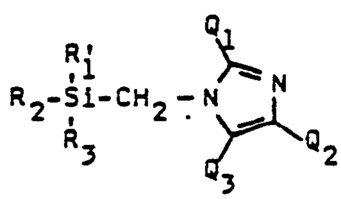 II

wherein

$Q_1$, $Q_2$ and $Q_3$ are independently H or $CH_3$;

$R'_1$ is $C_6$—$C_{18}$ alkyl, $C_3$—$C_6$ cycloalkyl, naphthyl or

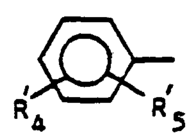 ;

where

$R'_4$ and $R'_5$ are independently halogen; —$OCH_3$; —$OCF_3$; —$SCH_3$; —$SO_2CH_3$; phenyl; phenyl substituted with halogen and/or $C_1$—$C_4$ alkyl and/or —$CF_3$; phenoxy; phenoxy substituted with halogen and/or $C_1$—$C_4$ alkyl and/or —$CF_3$; —$CF_3$; $C_1$—$C_4$ alkyl; or cyclohexyl;
or one of $R'_4$ and $R'_5$ may additionally be H; and

$R_2$ and $R_3$ are independently $C_1$—$C_6$ alkyl, $C_3$—$C_6$ cycloalkyl, $OR_6$, or

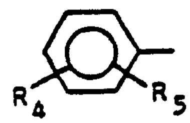

;

where

$R_4$, $R_5$ and $R_6$ are as defined in Claim 1, and $R_2$ and $R_3$ together may be a 1,2- or 1,3- or 1,4-glycol bridge or a 1,4 unsaturated glycol bridge which may optionally be substituted by up to four alkyl groups $R_7$—$R_{10}$ that have a total of up to four carbon atoms, viz.

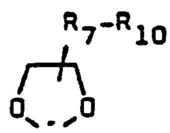

or

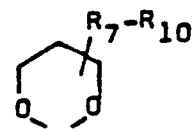

. or

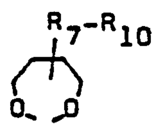

or

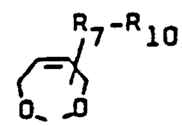

and salts thereof with protic acids and complexes with metal ions.

3. A compound of claim 1 or 2 wherein $Q_1$ and $Q_2$ are H.

4. A compound of claim 3 wherein $R_1$ or $R'_1$ is

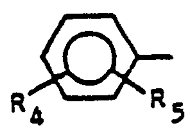

or

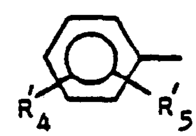

.

$R_2$ is $C_1$—$C_4$ alkyl or

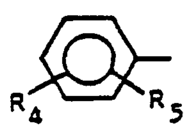

and $R_3$ is $C_1$—$C_4$ alkyl.

5. A compound of claim 4 wherein

$R_1$ and $R'_1$ are

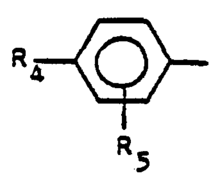

or

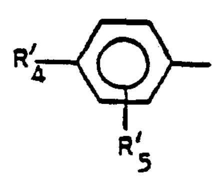

where

$R_4$ and $R'_4$ are H, F, Cl, Br or phenyl;

$R_5$ is H, F, Cl or Br;

$R'_5$ is F, Cl or Br or may be H if $R'_4$ is not H; and

$R_2$ is

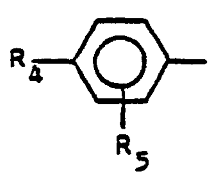

or $C_1$—$C_4$ alkyl; and

$R_3$ is $C_1$—$C_4$ alkyl.

6. The compound of Claim 1 which is (1,1'-bi-phenyl-4-yl)dimethyl(1H-1,2,4-triazol-1-ylmethyl)silane.

7. The compound of Claim 1 which is bis(4-chlorophenyl)methyl(1H-1,2,4-triazol-1-ylmethyl)silane.

8. The compound of Claim 1 which is [bis(4-fluorophenyl)]methyl(1H-1,2,4-triazol-1-ylmethyl)silane.

9. The compound of Claim 1 which is 4-fluorophenyl(methyl)phenyl(1H-1,2,4-triazol-1-ylmethyl)silane.

10. The compound of claim 2 which is (2,4-dichlorophenyl)dimethyl(1H-imidazol-1-ylmethyl)silane.

11. A compound of claim 1 wherein:
$Q_1$ and $Q_2$ are H;
$R_1$ is $C_2$—$C_{18}$ alkyl, $C_3$—$C_6$ cycloalkyl, naphthyl, or

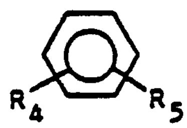

where
$R_4$ and $R_5$ are independently —H, halogen, phenyl, —$OCH_3$, —$SCH_3$, phenoxy, —$CF_3$ or $C_1$—$C_4$ alkyl; and
$R_2$ and $R_3$ are independently $C_1$—$C_6$ alkyl, $C_3$—$C_6$ cycloalkyl, or $OR_6$, where $R_6$ is H or $C_1$—$C_4$ alkyl.

12. A compound of claim 2 wherein
$Q_1$, $Q_2$ and $Q_3$ are H;
$R'_1$ is

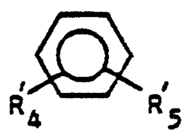

$R_2$ and $R_3$ are independently $C_1$—$C_4$ alkyl or $OR_6$, where $R_6$ is H or $C_1$—$C_4$ alkyl.

13. A composition for controlling fungus diseases comprising an effective amount of a fungicidal compound and at least one of the following: surfactant, solid or liquid inert diluent, characterised in
that said fungicidal compound comprises a compound of any of claims 1 to 12.

14. A method for controlling fungus diseases by applying to the locus to be protected an effective amount of a fungicidal compound, characterised in
that said fungicidal compound comprises a compound of any of claims 1 to 12.

15. A process for preparing a compound of claim 1 or 2 which comprises reacting a silane derivative of formula

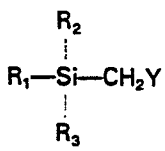

or

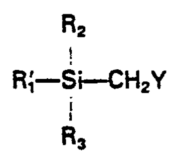

wherein
$R_1$, $R'_1$, $R_2$ and $R_3$ are as defined in claims 1 and 2 and Y is chlorine, bromine, iodine or arylsulfonyloxy, with a 1,2,4-triazole or imidazole of formula

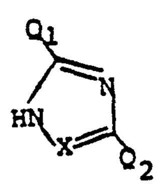

wherein
$Q_1$ and $Q_2$ are independently H or $CH_3$ and X is N, CH or $CCH_3$, or with an alkali metal salt thereof.

16. A process for preparing a compound of claims 1 or 2 wherein $R_2$ and/or $R_3$ is $OR_6$ which comprises reacting a corresponding compound of formula

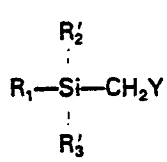

wherein
$R'_2$ is halogen or $R_2$ and $R'_3$ is halogen or $R_3$, at least one of $R'_2$ and $R'_3$ being halogen, and Y is as defined in claim 15, with a triazole or imidazole sodium salt of formula

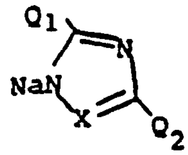

wherein

X is N, CH or $CCH_3$, and reacting the intermediate so obtained with $R_6$ OH.

17. A process for preparing a compound of claim 1 which comprises reacting 1) an intermediate selected from the group

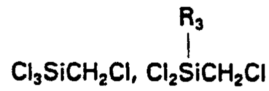 and 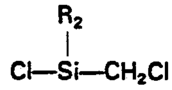

in a suitable solvent with $R_1M$ where M is Na, Li or MgX where X is Br, Cl, I, at a temperature of from −80° to 40°C to form a chloromethylsilane; and 2) reacting the chloromethylsilane with 1,2,4-triazole, its 3-methyl or 3,5-dimethyl derivative, or their alkali metal salts in polar aprotic solvents, ethers or ketones at 0° to 200°C.

18. A process for preparing a compound of Claim 1 which comprises 1) reacting

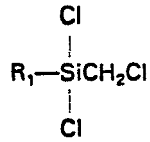 or 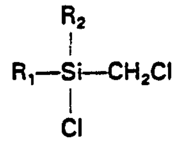

with $R_6OH$ in a suitable solvent with a suitable base at a temperature of 0°—100°C to form an alkoxy or dialkoxy chloromethylsilane; and 2) reacting the chloromethylsilanes with 1,2,4-triazole, its 3-methyl or 3,5-dimethyl derivative, or their alkali metal salts in polar aprotic solvents, ethers or ketones at 0° to 200°C.

19. A process for preparing a compound of claim 2 which comprises reacting 1) an intermediate selected from the group

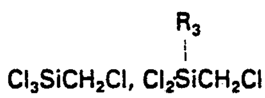 and 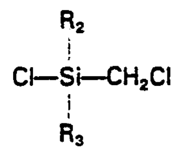

in a suitable solvent with $R_1'M$ where M is Na, Li or MgX where X is Br, Cl, I, at a temperature of from −80° to 40°C to form a chloromethylsilane; and 2) reacting the chloromethylsilane with imidazole, its 2-methyl, 2,4-dimethyl, 4,5-dimethyl, and 2,4,5-trimethyl derivatives, or their alkali metal salts in polar aprotic solvents, ethers or ketones at 0° to 200°C.

20. A process for preparing a compound of claim 2 which comprises 1) reacting

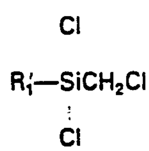 and 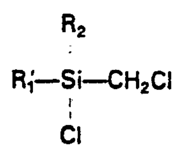

with $R_6OH$ in a suitable solvent with a suitable base at a temperature of 0° to 100°C to form an alkoxy or dialkoxy chloromethylsilane; and 2) reacting the chloromethylsilane with imidazole, its 2-methyl, 2,4-methyl, 4,5-methyl, and 2,4,5-trimethyl derivatives, or their alkali metal salts in polar aprotic solvents, ethers or ketones at 0° to 200°C.

**Claims for the Contracting State: AT**

1. A process for the preparation of a compound of the formula:

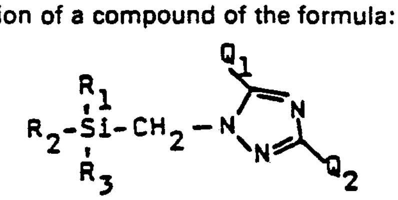 I

wherein

$Q_1$ and $Q_2$ are independently H or $CH_3$;

$R_1$ is $C_2$—$C_{18}$ alkyl, $C_3$—$C_6$ cycloalkyl, naphthyl, or

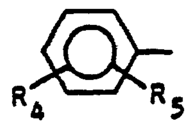 ;

where

$R_4$ and $R_5$ are independently —H; halogen; —$OCH_3$; —$OCF_3$; —$SCH_3$; —$SO_2CH_3$; phenyl; phenyl substituted with halogen and/or $C_1$—$C_4$ alkyl and/or —$CF_3$; phenoxy; phenoxy substituted with halogen and/or $C_1$—$C_4$ alkyl and/or —$CF_3$; —$CF_3$; $C_1$—$C_4$ alkyl; or cyclohexyl;

$R_2$ and $R_3$ are independently $C_1$—$C_6$ alkyl, $C_3$—$C_6$ cycloalkyl, $OR_6$, or

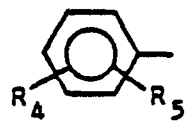 ;

where

$R_6$ is $C_1$—$C_4$ alkyl, or one $R_6$ group may be H and/or $R_6$ group may be

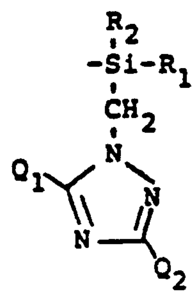

and $R_2$ and $R_3$ together may be a 1,2- or 1,3- or 1,4-glycol bridge or a 1,4 unsaturated glycol bridge which may optionally be substituted by up to four alkyl groups $R_7$—$R_{10}$ that have a total of up to four carbon atoms,

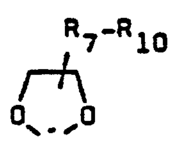 or 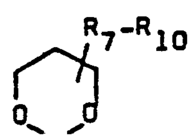 or

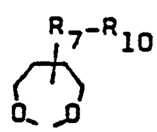 or 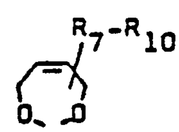

and salts thereof with protic acids and complexes with metal ions, whcih comprises

(a) reaction of a silane derivative of formula

$$R_1\text{—}\overset{\displaystyle R_2}{\underset{\displaystyle R_3}{Si}}\text{—}CH_2Y$$

wherein $R_1$, $R_2$ and $R_3$ are as defined above

and Y is chlorine, bromine or arylsulfonyloxy, with a 1,2,4-triazole of formula

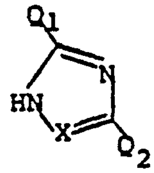

wherein $Q_1$ and $Q_2$ are as defined above or with an alkali metal salt thereof; or

(b) reacting a corresponding compound of formula

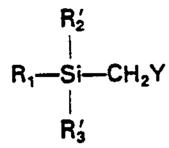

wherein

$R_1$ and Y are as defined above, $R_2'$ is halogen or $R_2$ and $R_3'$ is halogen or $R_3$, at least one of $R_2'$ and $R_3'$ being halogen, with a triazole sodium salt of formula

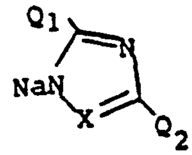

wherein

$Q_1$ and $Q_2$ are as defined above, and reacting the intermediate so obtained with $R_6OH$ to obtain a product of formula I wherein $R_2$ and/or $R_3$ is $R_6O$.

2. A process for the preparation of a compound of formula I as defined in claim 1, which comprises reacting 1) an intermediate selected from the group

$Cl_3SiCH_2Cl$, 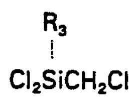 and 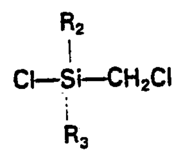

in a suitable solvent with $R_1M$ where M is Na, Li or MgX where X is Br, Cl, I, at a temperature of from −80° to 40°C to form a chloromethylsilane; and 2) reacting the chloromethylsilane with 1,2,4-triazole, its 3-methyl or 3,5-dimethyl derivative, or their alkali metal salts in polar aprotic solvents, ethers or ketones at 0° to 200°C.

3. The process of claim 1 or claim 2 wherein:

$Q_1$ and $Q_2$ are H;

$R_1$ is $C_2$—$C_{18}$ alkyl, $C_3$—$C_6$ cycloalkyl, naphthyl, or

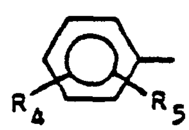

where

$R_4$ and $R_5$ are independently —H, halogen, phenyl, —$OCH_3$; —$SCH_3$, phenoxy, —$CF_3$ or $C_1$—$C_4$ alkyl; and $R_2$ and $R_3$ are independently $C_1$—$C_6$ alkyl, $C_3$—$c_6$ cycloalkyl, or $OR_6$, where $R_6$ is H or $C_1$—$C_4$ alkyl.

4. A process for the preparation of a compound of the formula:

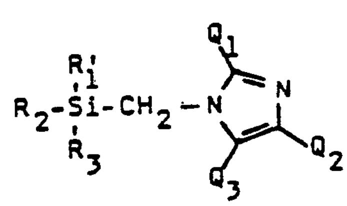

II

wherein

$Q_1$, $Q_2$ and $Q_3$ are independently H or $CH_3$;

$R'_1$ is $C_6$—$C_{18}$ alkyl, $C_3$—$C_6$ cycloalkyl, naphthyl or

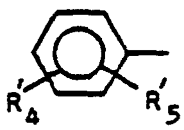 ;

where

$R'_4$ and $R'_5$ are independently halogen; $-OCH_3$; $-OCF_3$; $-SCH_3$; $-SO_2CH_3$; phenyl; phenyl substituted with halogen and/or $C_1-C_4$ alkyl and/or $-CF_3$; phenoxy; phenoxy substituted with halogen and/or $C_1-C_4$ alkyl and/or $-CF_3$; $-CF_3$; $C_1-C_4$ alkyl; or cyclohexyl;

or one of $R'_4$ and $R'_5$ may additionally be H; and

$R_2$ and $R_3$ are independently $C_1-C_6$ alkyl, $C_3-C_6$ cycloalkyl, $OR_6$, or

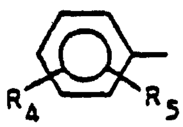 ;

where

$R_4$, $R_5$ and $R_6$ are as defined in claim 1; and $R_2$ and $R_3$ together may be a 1,2- or 1,3- or 1,4-glycol bridge or a 1,4 unsaturated glycol bridge which may optionally be substituted by up to four alkyl groups $R_7-R_{10}$ that have a total of up to four carbon atoms, viz

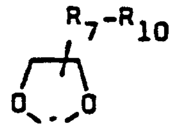 or 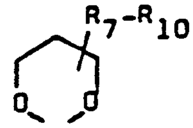 or

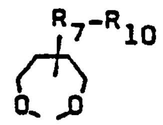 or 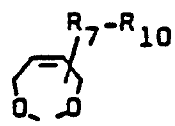

and salts thereof with protic acids and complexes with metal ions, which comprises

(a) reacting a silane derivative of formula

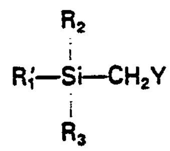

wherein

$R'_1$, $R_2$ and $R_3$ are as defined above and Y is chlorine, bromine, iodine or arylsulfonyloxy, with an imidazole or formula

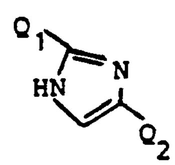

wherein $Q_1$ and $Q_2$ are as defined above, or with an alkali metal salt thereof, or

(b) reacting a corresponding compound of formula

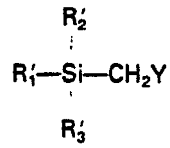

wherein

$R'_1$ and Y are as defined above, $R'_2$ is halogen or $R_2$, $R'_3$ is halogen or $R_3$, at least one of $R'_2$ and $R'_3$ being halogen, with an imidazole sodium salt of formula

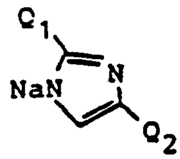

wherein $Q_1$ and $Q_2$ are as defined above, and reacting the intermediate so obtained with $R_6OH$ to obtain a compound of formula II wherein $R_2$ and/or $R_3$ is $R_6O$.

5. A process for the preparation of a compound of formula II as defined in claim 4 which comprises reacting

1) an intermediate selected from the group

$Cl_3SiCH_2Cl$, 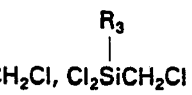 and 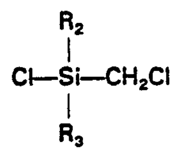

in a suitable solvent with $R_1'M$ where M is Na, Li or MgX where X is Br, Cl, I, at a temperature of from −80° to 40°C to form a chloromethylsilane; and 2) reacting the chloromethylsilane with imidazole, its 2-methyl, 2,4-dimethyl, 4,5-dimethyl, and 2,4,5-trimethyl derivatives, or their alkali metal salts in polar aprotic solvents, ethers or ketones at 0° to 200°C; $R_1'$, $R_2$ and $R_3$ being as defined in claim 4.

6. The process of claims 4 and 5 wherein

$Q_1$, $Q_2$ and $Q_3$ are H;

$R_1'$ is

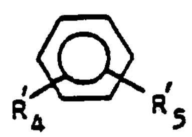

where $R_4'$ and $R_5'$ are as defined in claim 4; and

$R_2$ and $R_3$ are independently $C_1$—$C_4$ alkyl or $OR_6$, where $R_6$ is H is $C_1$—$C_4$ alkyl.

7. The process of any of claims 1—6 wherein $Q_1$ and $Q_2$ are H, $R_1$ or $R_1'$ is

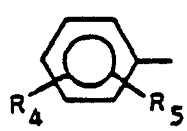 or 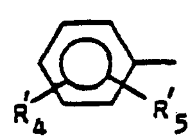

$R_2$ is $C_1$—$C_4$ alkyl or

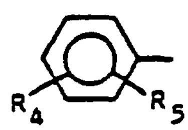

and $R_3$ is $C_1$—$C_4$ alkyl.

8. The process of claim 7 wherein

$R_1$ and $R_2'$ are

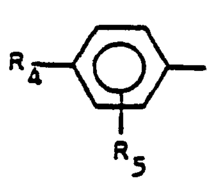 or 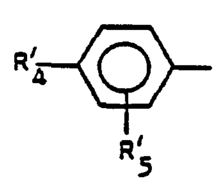

where

$R_4$ and $R_4'$ are F, Cl, Br or phenyl;

$R_5$ is H, F, Cl or Br;

$R_5'$ is F, Cl, Br, or may be H if $R_4'$ is not H;

$R_2$ is

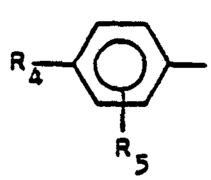

or $C_1$—$C_4$ alkyl; and

$R_3$ is $C_1$—$C_4$ alkyl.

9. The process of claim 1 or 4 wherein the product is selected from:

(1,1'-bi-phenyl-4-yl)dimethyl(1H-1,2,4-triazol-1-ylmethyl)silane;

bis(4-chlorophenyl)methyl(1H-1,2,4-triazol-1-ylmethyl)silane;

[bis(4-fluorophenyl)]methyl(1H-1,2,4-triazol-1-ylmethyl)silane;

4-fluorophenyl(methyl)phenyl(1H-1,2,4-triazol-1-ylmethyl)silane; and

(2,4-dichlorophenyl)dimethyl(1H-imidazol-1-ylmethyl)silane.

10. A method for controlling fungus diseases by applying to the locus to be protected an effective amount of a fungicidal compound, characterised in

that said fungicidal compound comprises a compound of formula I as defined in any of claims 1—3 or 7—9.

11. A method for controlling fungus diseases by applying to the locus to be protected an effective amount of a fungicidal compound, characterised in

that said fungicidal compound comprises a compound of formula II as defined in any of claim 4—9.

12. A method for controlling fungus diseases by applying to the locus to be protected an effective amount of a fungicidal compound, characterised in

that said fungicidal compound comprises a compound of formula:

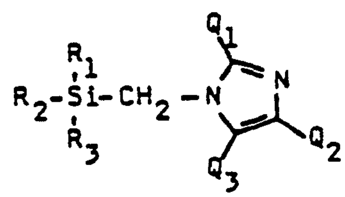

II

wherein

$Q_1$, $Q_2$, $Q_3$, $R_2$, $R_3$ and $R_6$ are as defined in claim 4, and

$R_1'$ is $C_2$—$C_{18}$ alkyl, $C_3$—$C_6$ cycloalkyl, naphthyl or

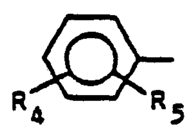

;

where

$R_4$ and $R_5$ are independently —H; halogen; —$OCH_3$; —$OCF_3$; —$SCH_3$; —$SO_2CH_3$; phenyl; phenyl substituted with halogen and/or $C_1$—$C_4$ alkyl and/or —$CF_3$; phenoxy; phenoxy substituted with halogen and/or $C_1$—$C_4$ alkyl and/or —$CF_3$; —$CF_3$; $C_1$—$C_4$ alkyl, or cyclohexyl; or a salt thereof with a protic acid or a complex thereof with a metal ion.

**Patentansprüche für die Vertragsstaaten: BE CH DE FR GB IT LI LU NL SE**

1. Eine Verbindung der Formel

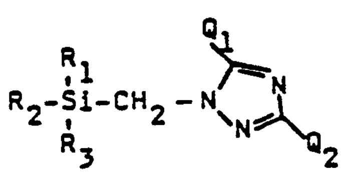

I

worin

$Q_1$ und $Q_2$ unabhängig H oder $CH_3$ sind;

$R_1$ $C_2$—$C_{18}$-Alkyl, $C_3$—$C_6$-Cycloalkyl, Naphthyl oder

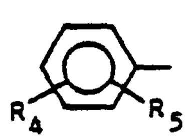

ist;

wobei

$R_4$ und $R_5$ unabhängig —H; Halogen; —$OCH_3$; —$OCF_3$; —$SCH_3$; —$SO_2CH_3$; Phenyl; mit Halogen und/oder $C_1$—$C_4$-Alkyl und/oder —$CF_3$ substituiertes Phenyl; Phenoxy; mit Halogen und/oder $C_1$—$C_4$-Alkyl und/oder —$CF_3$ substituiertes Phenoxy; —$CF_3$; $C_1$—$C_4$-Alkyl; oder Cyclohexyl sind;

$R_2$ und $R_3$ unabhängig $C_1$—$C_6$-Alkyl, $C_3$—$C_6$-Cycloalkyl, $OR_6$, oder

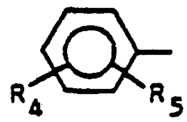

sind;
wobei
$R_6$ $C_1$—$C_4$-Alkyl ist, oder eine $R_6$-Gruppe H sein kann und/oder eine $R_6$-Gruppe

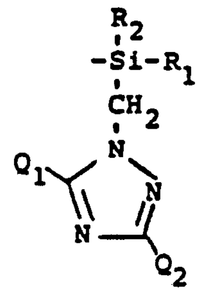

sein kann und $R_2$ und $R_3$ zusammen eine 1,2- oder 1,3- oder 1,4-Glykol-Brücke oder eine 1,4-ungesättigte Glykolbrücke sein können, die gegebenenfalls durch bis zu 4 Alkylgruppen $R_7$—$R_{10}$ substituiert sein kann, die insgesamt bis zu 4 Kohlenstoffatome enthalten.

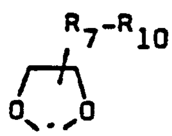 oder 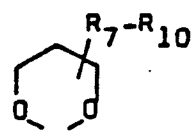 oder

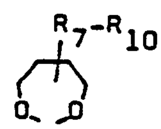 oder 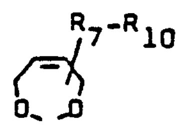

und Salze derselben mit protischen Säuren und Komplexe mit Metallionen.

2. Verbindung der Formel

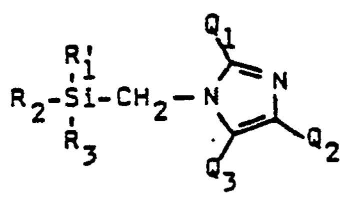 II

worin
$Q_1$, $Q_2$ und $Q_3$ unabhängig H oder $CH_3$ sind;
$R'_1$ $C_6$—$C_{18}$-Alkyl, $C_3$—$C_6$-Cycloalkyl, Naphthyl oder

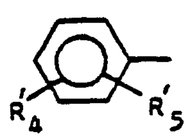

ist,
wobei
$R'_4$ und $R'_5$ unabhängig Halogen; —$OCH_3$, —$OCF_3$; —$SCH_3$; —$SO_2CH_3$; Phenyl; mit Halogen und/oder $C_1$—$C_4$-Alkyl und/oder —$CF_3$ substituiertes Phenyl; Phenoxy; mit Halogen und/oder $C_1$—$C_4$-Alkyl und/oder —$CF_3$ substituiertes Phenoxy; —$CF_3$; $C_1$—$C_4$-Alkyl; oder Cyclohexyl sind;
oder eines von $R'_4$ und $R'_5$ zusätzlich H sein können; und
$R_2$ und $R_3$ unabhängig $C_1$—$C_6$-Alkyl, $C_3$—$C_6$-Cycloalkyl, $OR_6$, oder

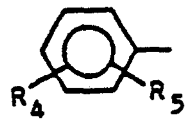

sind;
wobei

$R_4$, $R_5$ und $R_6$ wie in Anspruch 1 definiert sind, und $R_2$ und $R_3$ zusammen eine 1,2- oder 1,3- oder 1,4-Glykolbrücke oder eine 1,4-ungesättigte Glykolbrücke sein können, die gegebenenfalls substituiert sein kann durch bis zu 4 Alkylgruppen $R_7$—$R_{10}$, die insgesamt bis zu 4 Kohlenstoffatome enthalten, nämlich

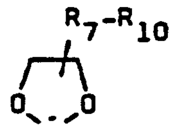 oder 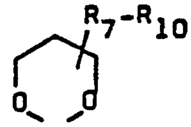 oder

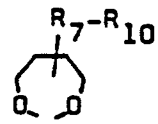 oder 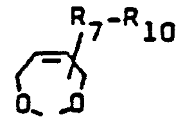

oder Salze derselben mit protischen Säuren und Komplexe mit Metallionen.

3. Verbindung von Anspruch 1 oder 2, in der $Q_1$ und $Q_2$ H sind.

4. Verbindung von Anspruch 3, in der $R_1$ oder $R'_1$

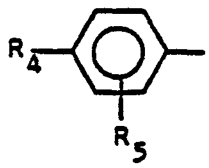 oder 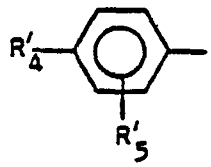

ist,
wobei $R_2$ $C_1$—$C_4$-Alkyl oder

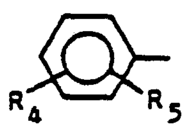

und $R_3$ $C_1$—$C_4$-Alkyl ist.

5. Verbindung von Anspruch 4, in der
$R_1$ und $R'_1$

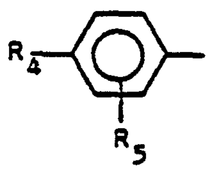 oder 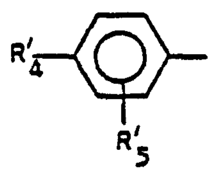

sind
wobei
$R_4$ und $R'_4$ H, F, Cl Br oder Phenyl sind;
$R_5$ H, F, Cl oder Br ist;
$R'_5$ F, Cl oder Br ist oder H sein kann, wenn $R'_4$ nicht H ist;
$R_2$

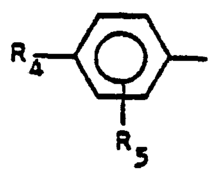

oder $C_1$—$C_4$-Alkyl ist; und
$R_3$ $C_1$—$C_4$-Alkyl ist.

6. Verbindung von Anspruch 1, nämlich (1,1'-Biphenyl-4-yl)dimethyl(1H-1,2,4-triazol-1-ylmethyl)silan.

7. Verbindung von Anspruch 1, nämlich Bis(4-Chlorphenyl)methyl(1H-1,2,4-triazol-1-ylmethyl)silan.

8. Verbindung von Anspruch 1, nämlich [Bis(4-Fluorphenyl)]methyl(1H-1,2,4-triazol-1-ylmethyl)silan.

9. Verbindung von Anspruch 1, nämlich 4-Fluorphenyl(methyl)phenyl(1H-1,2,4-triazol-1-ylmethyl)silan.

10. Verbindung von Anspruch 2, nämlich (2,4-Dichlorphenyl)dimethyl(1H-imidazol-1-ylmethyl)silan.

11. Verbindung von Anspruch 1, worin
$Q_1$ und $Q_2$ H sind;
$R_1$ $C_2$—$C_{18}$-Alkyl, $C_3$—$C_6$-Cycloalkyl, Naphthyl, oder

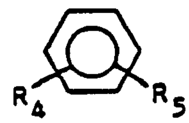

ist,
wobei
$R_4$ und $R_5$ unabhängig —H, Halogen, Phenyl, —$OCH_3$, —$SCH_3$, Phenoxy, —$CF_3$ oder $C_1$—$C_4$-Alkyl sind und
$R_2$ und $R_3$ unabhängig $C_1$—$c_6$-Alkyl, $C_3$—$C_6$-Cycloalkyl oder $OR_6$ sind, wobei $R_6$ H oder $C_1$—$C_4$-Alkyl ist.

12. Verbindung von Anspruch 2, worin
$Q_1$, $Q_2$ und $Q_3$ H sind;
$R_1'$

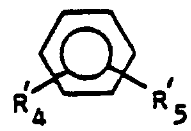

ist; und
$R_2$ und $R_3$ unabhängig $C_1$—$C_4$-Alkyl oder $OR_6$ sind, wobei $R_6$ H oder $C_1$—$C_4$-Alkyl ist.

13. Zusammensetzung zur Kontrolle von Pilzkrankheiten, enthaltend eine wirksame Menge einer fungiziden Verbindung und mindestens eines der nachfolgenden Zusatzmittel: oberflächenaktives Mittel, festes oder flüssiges inertes Verdünnungsmittel, dadurch gekennzeichnet, dass die fungizide Verbindung eine Verbindung nach einem der Ansprüche 1 bis 12 ist.

14. Verfahren zur Kontrolle von Pilzkrankheiten durch Aufbringung einer wirksamen Menge einer fungiziden Verbindung auf die zu schützende Stelle, dadurch gekennzeichnet, dass die fungizide Verbindung eine Verbindung nach einem der Ansprüche 1 bis 12 ist.

15. Verfahren zur Herstellung einer Verbindung von Anspruch 1 oder 2, bei dem man ein Silanderivat der Formel

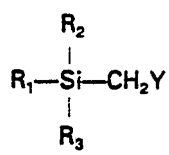 oder 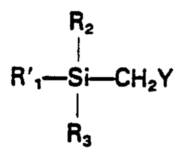

worin
$R_1$, $R'_1$, $R_2$ und $R_3$ wie in den Ansprüchen 1 und 2 definiert sind und Y Chlor, Brom, Jod oder Arylsulfonyloxy ist,
mit einem 1,2,4-Triazol oder -Imidazol der Formel

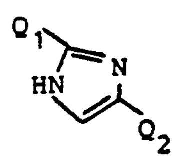

umsetzt, worin $Q_1$ und $Q_2$ unabhängig H oder $CH_3$ sind und X, N, CH oder $CCH_3$ ist, oder mit einem Alkalisalz derselben.

16. Verfahren zur Herstellung einer Verbindung der Ansprüche 1 oder 2, bei dem $R_2$ und/oder $R_3$ $OR_6$ ist, bei dem man eine entsprechende Verbindung der Formel

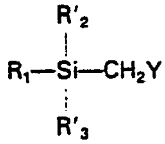

worin

$R'_2$ Halogen oder $R_2$ ist, und $R'_3$ Halogen oder $R_3$ ist, und mindestens eines von $R'_2$ und $R'_3$ Halogen ist, und Y wie in Anspruch 15 definiert ist,

mit einem Triazol-oder Imidazolnatriumsalz der Formel

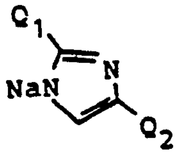

umsetzt,

worin X N, CH oder $CCH_3$ ist

und das so erhaltene Zwischenprodukt mit $R_6$ OH umsetzt.

17. Verfahren zur Herstellung eine Verbindung von Anspruch 1, bei dem man

1) ein Zwischenprodukt, ausgewählt aus der Gruppe

$Cl_3SiCH_2Cl$, 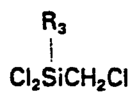 und 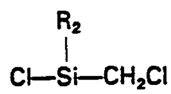

in einem geeigneten Lösungsmittel mit $R_1M$, worin M Na, Li oder MgX ist und wobei X Br, Cl, I ist, bei einer Temperatur von −80 bis 40°C in Reaktion bringt, um ein Chlormethylsilan zu bilden und

2) das Chlormethylsilan mit 1,2,4-Triazol, seinem 3-Methyl- oder 3,5-Dimethylderivat oder deren Alkalisalzen in polaren aprotischen Lösungsmitteln, Ethern oder Ketonen bei 0° bis 200°C in Reaktion bringt.

18. Verfahren zur Herstellung einer Verbindung von Anspruch 1, bei dem man

1)

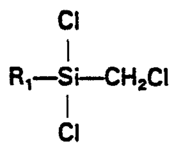 oder 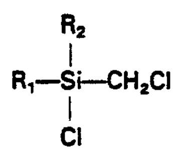

mit $R_6OH$ in einem geeigneten Lösungsmittel mit einer geeigneten Base bei einer Temperatur von 0°—100°C in Reaktion bringt, um ein Alkoxy- oder Dialkoxychlormethylsilan zu bilden, und

2) die Chlormethylsilane mit 1,2,4-Triazol, ihrem 3-Methyl oder 3,5-Dimethylderivat oder deren Alkalisalzen in polaren aprotischen Lösungsmitteln, Ethern oder Ketonen bei 0° bis 200°C in Reaktion bringt.

19. Verfahren zur Herstellung einer Verbindung von Anspruch 2, bei dem man

1) ein Zwischenprodukt, ausgewählt aus der Gruppe

$Cl_3SiCH_2Cl$, 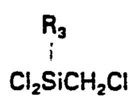 und 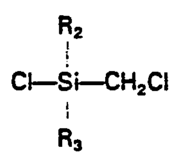

in einem geeigneten Lösungsmittel mit $R'_1M$, worin M Na, Li oder MgX ist und wobei X Br, Cl, I ist, bei einer Temperatur von −80° bis 40°C in Reaktion bringt, um ein Chlormethylsilan zu bilden und

2) das Chlormethylsilan mit Imidazol, seinen 2-Methyl-2,4-Dimethyl-, 4,5-Dimethyl- und 2,4,5-Trimethylderivaten oder deren Alkalisalzen in polaren aprotischen Lösungsmitteln, Ethern, oder Ketonen bei 0° bis 200°C in Reaktion bringt.

20. Verfahren zur Herstellung einer Verbindung von Anspruch 2, bei dem man

1)

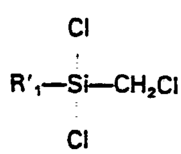 und 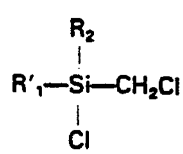

mit $R_6OH$ in einem geeigneten Lösungsmittel mit einer geeigneten Base bei einer Temperatur von 0° bis 100°C in Reaktion bringt, um ein Alkoxy- oder Dialkoxychlormethylsilan zu bilden, und

2) das Chlormethylsilan mit Imidazol, seinen 2-Methyl-, 2,4-Methyl-, 4,5-Methyl- und 2,4,5-Trimethylderivaten oder deren Alkalisalzen in polaren aprotischen Lösungsmitteln, Ethern oder Ketonen bei 0° bis 200°C in Reaktion bringt.

**Patentansprüche für den Vertragsstaat: AT**

1. Verfahren zur Herstellung einer Verbindung der Formel

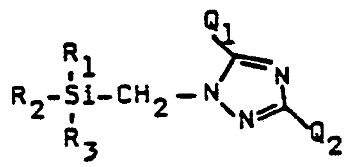

I

worin

$Q_1$ und $Q_2$ unabhängig H oder $CH_3$ sind;

$R_1$ $C_2$—$C_{18}$-Alkyl, $C_3$—$C_6$-Cycloalkyl, Naphthyl oder

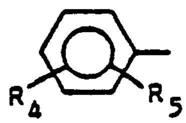

ist;

wobei

$R_4$ und $R_5$ unabhängig —H; Halogen; —$OCH_3$; —$OCF_3$; —$SCH_3$; —$SO_2CH_3$; Phenyl; mit Halogen und/oder $C_1$—$C_4$-Alkyl und/oder —$CF_3$ substituiertes Phenyl; Phenoxy; mit Halogen und/oder $C_1$—$C_4$-Alkyl und/oder —$CF_3$ substituiertes Phenoxy; —$CF_3$; $C_1$—$C_4$-Alkyl; oder Cyclohexyl sind;

$R_2$ und $R_3$ unabhängig $C_1$—$C_6$-Alkyl, $C_3$—$C_6$-Cycloalkyl, $OR_6$, oder

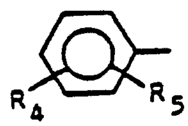

sind;

wobei

$R_6$ $C_1$—$C_4$-Alkyl ist, oder eine $R_6$-Gruppe H sein kann und/oder eine $R_6$-Gruppe

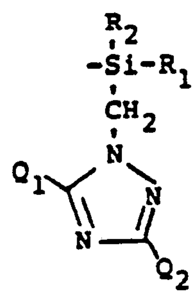

sein kann und $R_2$ und $R_3$ zusammen eine 1,2- oder 1,3- oder 1,4-Glykol-Brücke oder eine 1,4-ungesättigte Glykolbrücke sein können, die gegebenenfalls durch bis zu 4 Alkylgruppen $R_7$—$R_{10}$ substituiert sein kann, die insgesamt bis zu 4 Kohlenstoffatome enthalten,

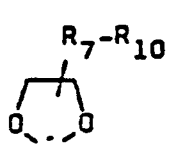

oder

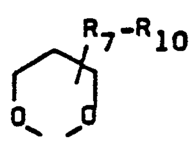

oder

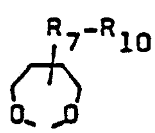

oder

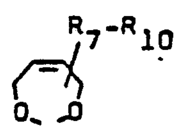

und Salze derselben mit protischen Säuren und Komplexe mit Metallionen, umfassend

(a) die Reaktion eines Silanderivats der Formel

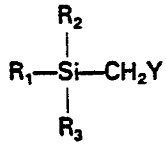

worin $R_1$, $R_2$ und $R_3$ wie oben definiert sind und Y Chlor, Brom oder Arylsulfonyloxy bedeutet, mit einem 1,2,4-Triazol der Formel

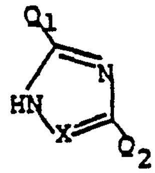

worin $Q_1$ und $Q_2$ wie oben definiert sind oder mit einem Alkalisalz davon, oder

(b) Umsetzung einer entsprechenden Verbindung der Formel

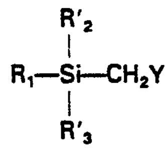

worin $R_1$ und Y wie oben definiert sind, $R'_2$ Halogen oder $R_2$ und $R'_3$ Halogen oder $R_3$ ist, wobei mindestens eines von $R'_2$ und $R'_3$ Halogen ist, mit einem Triazolnatriumsalz der Formel

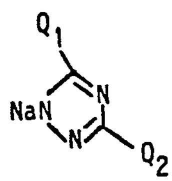 ,

worin $Q_1$ und $Q_2$ wie oben definiert sind, und Umsetzung des so erhaltenen Zwischenproduktes mit $R_6OH$, um ein Produkt der Formel I zu erhalten, in welchem $R_2$ und/oder $R_3$ $R_6O$ ist.

2. Verfahren zur Herstellung einer Verbindung der Formel I wie in Anspruch 1 definiert, bei dem man

1) ein Zwischenprodukt, ausgewählt aus der Gruppe

$Cl_3SiCH_2Cl$, 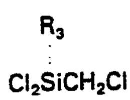 und 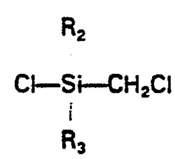

in einem geeigneten Lösungsmittel bei einer Temperatur von −80°C bis 40°C mit $R_1M$ umsetzt, worin M Na, Li oder MgX und wobei X Br, Cl, I ist, um ein Chlormethylsilan zu bilden; und

2) das Chlormethylsilan in polaren aprotischen Lösungsmitteln, Ethern oder Ketonen bei 0° bis 200°C mit 1,2,4-triazol, seinem 3-Methyl- oder 3,5-Dimethylderivat oder deren Alkalisalzen umsetzt.

3. Verfahren nach Anspruch 1 oder 2, worin

$Q_1$ und $Q_2$ H sind;

$R_1$ $C_2$—$C_{18}$-Alkyl, $C_3$—$C_6$-Cycloalkyl, Naphthyl, oder

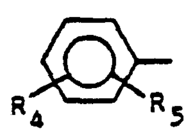

ist, wobei $R_4$ und $R_5$ unabhängig —H, Halogen, Phenyl, —$OCH_3$, —$SCH_3$, Phenoxy, —$CF_3$ oder $C_1$—$C_4$-Alkyl und

$R_2$ und $R_3$ unabhängig $C_1$—$C_6$-Alkyl, $C_3$—$C_6$-Cycloalkyl oder $OR_6$ sind, wobei $R_6$ H oder $C_1$—$C_4$-Alkyl ist.

4. Verfahren zur Herstellung einer Verbindung der Formel

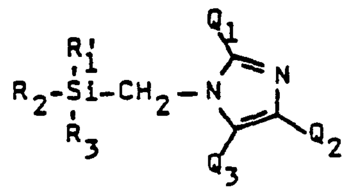

II

worin

$Q_1$, $Q_2$ und $Q_3$ unabhängig H oder $CH_3$ sind;

$R'_1$ $C_6$—$C_{18}$-Alkyl, $C_3$—$C_6$-Cycloalkyl, Naphthyl oder

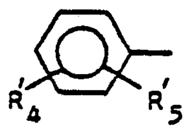

ist,

wobei

$R'_4$ und $R'_5$ unabhängig Halogen; —$OCH_3$; —$OCF_3$; —$SCH_3$, —$SO_2CH_3$; Phenyl; mit Halogen und/oder $C_1$—$C_4$-Alkyl und/oder —$CF_3$ substituiertes Phenyl; Phenoxy; mit Halogen und/oder $C_1$—$C_4$-Alkyl und/oder —$CF_3$ substituiertes Phenoxy; —$CF_3$; $C_1$—$C_4$-Alkyl oder Cyclohexyl sind,

oder eines von $R'_4$ und $R'_5$ zusätzlich H sein können; und $R_2$ und $R_3$ unabhängig $C_1$—$C_6$-Alkyl, $C_3$—$C_6$-Cycloalkyl, $OR_6$ oder

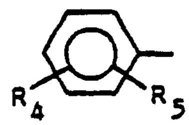

sind, wobei $R_4$, $R_5$ und $R_6$ wie in Anspruch 1 definiert sind; und $R_2$ und $R_3$ zusammen eine 1,2- oder 1,3- oder 1,4-Glykolbrücke oder eine 1,4-ungesättigte Glykolbrücke sein können, die gegebenenfalls durch bis zu 4 Alkylgruppen $R_7$—$R_{10}$ substituiert sein kann, die insgesamt bis zu 4 Kohlenstoffatomen haben, nämlich

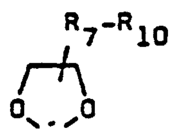

oder

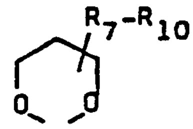

oder

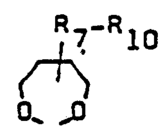

oder

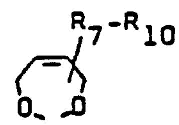

und Salze davon mit protischen Säuren und Komplexe mit Metallionen sein können, wobei man

(a) eine Silanderivat der Formel

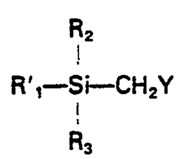

worin $R'_1$, $R_2$ und $R_3$ wie oben definiert sind und Y Chlor, Brom, Jod oder Arylsulfonyloxy bedeutet, mit einem Imidazol der Formel

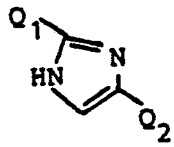

oder mit einem Alkalisalz derselben umsetst, worin $Q_1$ und $Q_2$ wie oben definiert sind, oder

(b) eine entsprechende Verbindung der Formel

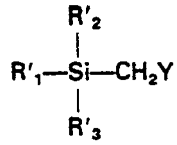

worin

$R'_1$ und Y wie oben definiert sind, $R'_2$ Halogen oder $R_2$ und $R'_3$ Halogen oder $R_3$ bedeutet und mindestens eine von $R'_2$ und $R'_3$ Halogen ist, mit einem Imidazolnatriumsalz der Formel

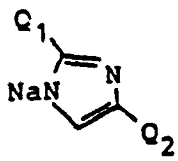

umsetzt, worin $Q_1$ und $Q_2$ wie oben definiert sind und das so erhaltene Zwischenprodukt mit $R_6OH$ in Reaktion bringt, um eine Verbindung der Formel II zu erhalten, in der $R_2$ und/oder $R_3$ $R_6O$ ist.

5. Verfahren zur Herstellung einer Verbindung der Formel II wie in Anspruch 4 definiert, wobei man

1) eine Zwischenprodukt aus der Gruppe

$Cl_3SiCH_2Cl$, 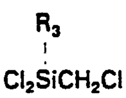 und 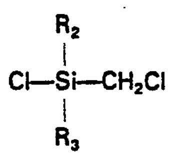

in einem geeigneten Lösungsmittel bei einer Temperatur von −80°C bis 40°C mit $R'_1M$ umsetzt, worin M Na, Li oder MgX und wobei X Br, Cl, I ist, um ein Chlormethylsilan zu bilden, und

2) das Chlormethylsilan in polaren aprotischen Lösungsmitteln, Ethern oder Ketonen bei 0° bis 200°C mit Imidazol, seinen 2-Methyl-, 2,4-Dimethyl-, 4,5-Dimethyl- und 2,4,5-Trimethylderivaten oder deren Alkalisalzen umsetzt, wobei $R'_1$, $R_2$ und $R_3$ wie in Anspruch 4 definiert sind.

6. Verfahren nach Anspruch 4 oder 5, worin

$Q_1$, $Q_2$ und $Q_3$ H sind,

$R'_1$

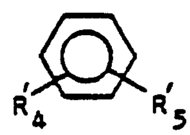

ist,

wobei

$R'_4$ und $R'_5$ wie in Anspruch 4 definiert sind und

$R_2$ und $R_3$ unabhängig $C_1$—$C_4$-Alkyl oder $OR_6$ sind, wobei $R_6$ H oder $C_1$—$C_4$-Alkyl ist.

7. Verfahren nach einem der Ansprüche 1 bis 6, worin $Q_1$ und $Q_2$ H sind, $R_1$ oder $R_1'$

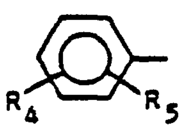

oder

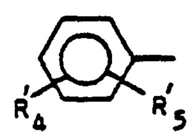

ist,

$R_2$ $C_1$—$C_4$-Alkyl oder

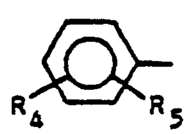

und $R_3$ $C_1$—$C_4$-Alkyl ist.

8. Verfahren nach Anspruch 7, worin

$R_1$ und $R'_2$

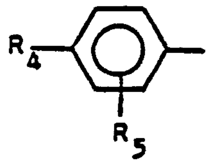

oder

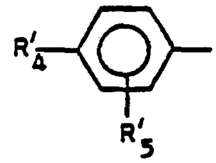

sind,

wobei

$R_4$ und $R'_4$ F, Cl, Br oder Phenyl sind;

$R_5$ H, F, Cl oder Br ist;

$R'_5$ F, Cl, Br ist oder H sein kann, wenn $R'_4$ nicht H ist; und

$R_2$

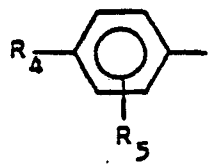

oder $C_1$—$C_4$-Alkyl und

$R_3$ $C_1$—$C_4$-Alkyl ist.

9. Verfahren der Ansprüche 1 oder 4, bei welchem das Produkt ausgewählt wird aus

(1,1'-Bi-phenyl-4-yl)dimethyl(1H-1,2,4-triazol-1-ylmethyl)silan;

Bis(4-Chlorphenyl)methyl(1H-1,2,4-triazol-1-ylmethyl)silan;

[Bis(4-Fluorphenyl)]methyl(1H-1,2,4-triazol-1-ylmethyl)silan;

4-Fluorphenyl(methyl)phenyl(1H-1,2,4-triazol-1-ylmethyl)silan; und

(2,4-Dichlorophenyl)dimethyl(1H-imidazol-1-ylmethyl)silan.

10. Verfahren zur Kontrolle von Pilzkrankheiten durch Aufbringung einer wirksamen Menge einer fungiziden Verbindung auf die zu schützende Stelle, dadurch gekennzeichnet, dass die fungizide Verbindung eine Verbindung der Formel I wie in einem der Ansprüche 1 bis 3 oder 7 bis 9 definiert enthält.

11. Verfahren zur Kontrolle von Pilzkrankheiten durch Aufbringung einer wirksamen Menge einer fungiziden Verbindung auf die zu schützende Stelle, dadurch gekennzeichnet, dass die fungizide Verbindung eine Verbindung der Formel II wie in einem der Ansprüche 4 bis 9 definiert enthält.

12. Verfahren zur Kontrolle von Pilzkrankheiten durch Aufbringung einer wirksamen Menge einer fungiziden Verbindung auf die zu schützende Stelle, dadurch gekennzeichnet, dass die fungizide Verbindung eine Verbindung der Formel

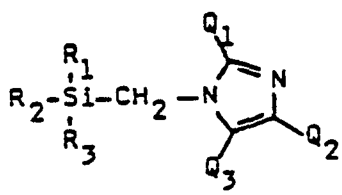

enthält,

worin

$Q_1$, $Q_2$, $Q_3$, $R_2$, $R_3$ und $R_6$ wie in Anspruch 4 definiert sind und

$R'_1$ $C_2$—$C_{18}$-Alkyl, $C_3$—$C_6$-Cycloalkyl, Naphthyl oder

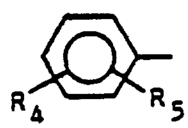

ist,

wobei

$R_4$ und $R_5$ unabhängig —H; Halogen; —$OCH_3$; —$OCF_3$; —$SCH_3$; —$SO_2CH_3$; Phenyl; mit Halogen und/oder $C_1$—$C_4$-Alkyl und/oder —$CF_3$ substitutiertes Phenyl; Phenoxy; mit Halogen und/oder $C_1$—$C_4$-Alkyl und/oder —$CF_3$ substituiertes Phenoxy; —$CF_3$; $C_1$—$C_4$-Alkyl oder Cyclohexyl oder ein Salz davon mit einer protischen Säure oder ein Komplex mit einem Metallion ist.

**Revendications pour les Etats contractants: BE CH DE FR GB IT LI LU NL SE**

1. Un composé de la formule:

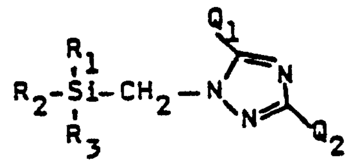

I

où

$Q_1$ et $Q_2$ sont indépendamment H ou $CH_3$;

$R_1$ est un radical alcoyle en $C_2$—$C_{18}$, cycloalcoyle en $C_3$—$C_6$, naphtyle ou

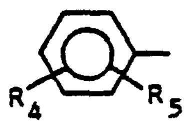

;

où

$R_4$ et $R_5$ sont indépendamment —H; un halogène; —$OCH_3$; —$OCF_3$; —$SCH_3$; —$SO_2CH_3$; un radical phényle; phényle substitué par un halogène et/ou un radical alcoyle en $C_1$—$C_4$ et/ou —$CF_3$; phénoxy; phénoxy substitué par un halogène et/ou un radical alcoyle en $C_1$—$C_4$ et/ou —$CF_3$; —$CF_3$; un radical alcoyle en $C_1$—$C_4$; ou un radical cyclohexyle;

$R_2$ et $R_3$ sont indépendamment un radical alcoyle en $C_1$—$C_6$, cycloalcoyle en $C_3$—$C_6$, $OR_6$, ou

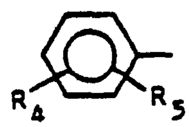

;

où $R_6$ est un radical alcoyle en $C_1$—$C_4$, ou un groupe $R_6$ peut être H et/ou un groupe $R_6$ peut être

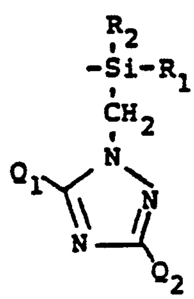

et $R_2$ et $R_3$ ensemble peuvent être un pont de 1,2-, 1,3- ou 1,4-glycol ou un pont de 1,4-glycol insaturé qui peut éventuellement être substitué par jusqu'à quatre groupes alcoyle $R_7$—$R_{10}$ qui ont un total de jusqu'à quatre atomes de carbone,

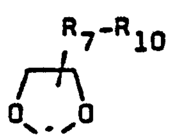

ou

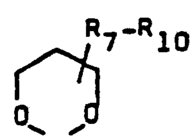

ou

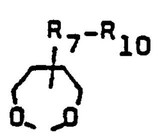

ou

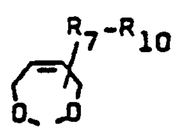

et ses sels avec des acides protiques et ses complexes avec des ions de métaux.

2. Un composé de la formule:

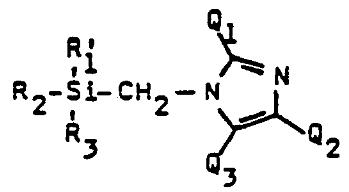

II

où

$Q_1$, $Q_2$ et $Q_3$ sont indépendamment H ou $CH_3$;

$R'_1$ est un radical alcoyle en $C_6$—$C_{18}$, cycloalcoyle en $C_3$—$C_6$, naphtyle ou

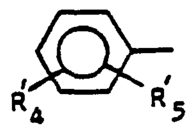

;

où

$R'_4$ et $R'_5$ sont indépendamment un halogène; —$OCH_3$; —$OCF_3$; —$SCH_3$; —$SO_2CH_3$; un radical phényle; phényle substitué par un halogène et/ou un radical alcoyle en $C_1$—$C_4$ et/ou —$CF_3$; phénoxy; phénoxy substitué par un halogène et/ou un radical alcoyle en $C_1$—$C_4$ et/ou —$CF_3$; —$CF_3$; alcoyle en $C_1$—$C_4$; ou cyclohexyle;

ou l'une de $R'_4$ et $R'_5$ peut en outre être H; et

$R_2$ et $R_3$ sont indépendamment un radical alcoyle en $C_1$—$C_6$, cycloalcoyle en $C_3$—$C_6$, $OR_6$, ou

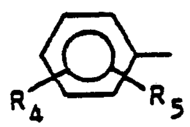

;

où $R_4$, $R_5$ et $R_6$ sont tels que définis dans la revendication 1; et $R_2$ et $R_3$ ensemble peuvent être un pont de 1,2-, 1,3- ou 1,4-glycol ou un pont de 1,4-glycol insaturé qui peut éventuellement être substitué par jusqu'à quatre groupes alcoyle $R_7$—$R_{10}$ qui ont un total de jusqu'à quatre atomes de carbone, à savoir

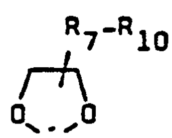

ou

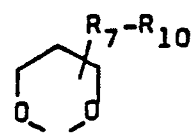

ou

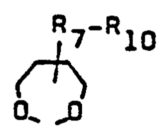

ou

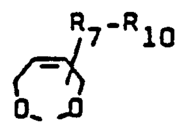

et ses sels avec des acides protiques et ses complexes avec des ions de métaux.

3. Un composé selon la revendication 1 ou 2, dans lequel $Q_1$ et $Q_2$ sont H.

4. Un composé selon la revendication 3, dans lequel $R_1$ ou $R'_1$ est

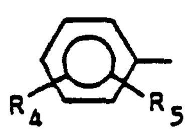

ou

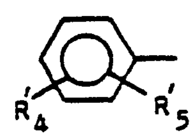

$R_2$ est un radical alcoyle en $C_1$—$C_4$ ou

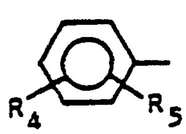

et $R_3$ est un radical alcoyle en $C_1$—$C_4$.

5. Un composé selon la revendication 4, dans lequel

$R_1$ et $R'_1$ sont

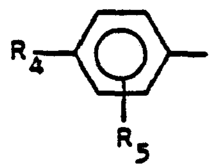

ou

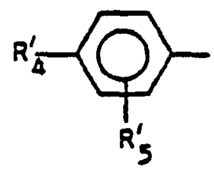

où

$R_4$ et R4 sont H, F, Cl, Br ou un radical phényle;

$R_5$ est H, F, Cl ou Br;

$R'_5$ est F, Cl ou Br ou peut être H si $R'_4$ n'est pas H; et

$R_2$ est

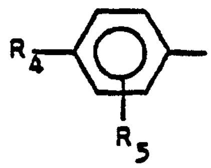

ou un radical alcoyle en $C_1$—$C_4$; et

$R_3$ est un radical alcoyle en $C_1$—$C_4$.

6. Le composé selon la revendication 1 qui est le (1,1'-biphényl-4-yl)diméthyl(1H-1,2,4-triazol-1-ylméthyl)silane.

7. Le composé selon la revendication 1 qui est le bis (4-chlorophényl)méthyl(1H-1,2,4-triazol-1-ylméthyl)silane.

8. Le composé selon la revendication 1 qui est le [bis(4-fluorophényl)]méthyl(1H-1,2,4-triazol-1-ylméthyl)silane.

9. Le composé selon la revendication 1 qui est le 4-fluorophényl(méthyl)phényl(1H-1,2,4-triazol-1-ylméthyl)silane.

10. Le composé selon la revendication 2 qui est le (2,4-dichlorophényl)diméthyl(1H-imidazol-1-ylméthyl)silane.

11. Un composé selon la revendication 1, dans lequel:

$Q_1$ et $Q_2$ sont H;

$R_1$ est un radical alcoyle en $C_2$—$C_{18}$, cycloalcoyle en $C_3$—$C_6$, naphtyle, ou

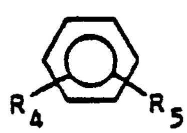

où

$R_4$ et $R_5$ sont indépendamment —H, un halogène, un radical phényle, —$OCH_3$, —$SCH_3$, un radical phénoxy, —$CF_3$ ou un radical alcoyle en $C_1$—$C_4$; et

$R_2$ et $R_3$ sont indépendamment un radical alcoyle en $C_1$—$C_6$, cycloalcoyle en $C_3$—$C_6$ ou $OR_6$, où $R_6$ est H ou un radical alcoyle en $C_1$—$C_4$.

12. Un composé selon la revendication 2, dans lequel

$Q_1$, $Q_2$ et $Q_3$ sont H;

$R'_1$ est

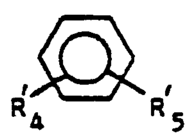

et $R_2$ et $R_3$ sont indépendamment un radical alcoyle en $C_1$—$C_4$ ou $OR_6$, où $R_6$ est H ou un radical alcoyle en $C_1$—$C_4$.

13. Une composition pour lutter contre les maladies fongiques comprenant une quantité efficace d'un composé fongicide et au moins un des ingrédients suivants: agent tensio-actif, diluant inerte solide ou liquide, caractérisée en ce que le composé fongicide comprend un composé selon l'une quelconque des revendications 1 à 12.

14. Un procédé de lutte contre les maladies fongiques en appliquant au lieu à protéger une quantité efficace d'un composé fongicide, caractérisé en ce que le composé fongicide comprend un composé selon l'une quelconque des revendications 1 à 12.

15. Un procédé de préparation d'un composé selon la revendication 1 ou 2, qui comprend la réaction d'un dérivé de silane de formule

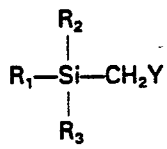

ou

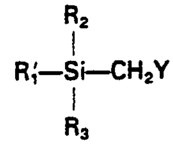

où $R_1$, $R'_1$, $R_2$ et $R_3$ sont tels que définis dans les revendications 1 et 2 et Y est du chlore, du brome, de l'iode ou un radical arylsulfonyloxy, avec un 1,2,4-triazole ou imidazole de formule

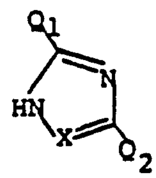

où $Q_1$ et $Q_2$ sont indépendamment H ou $CH_3$ et X est N, CH ou $CCH_3$, ou avec un sel de métal alcalin d'un tel composé.

16. Un procédé de préparation d'un composé selon la revendication 1 ou 2 dans lequel $R_2$ et/ou $R_3$ sont $OR_6$, qui comprend la réaction d'un composé correspondant de formule

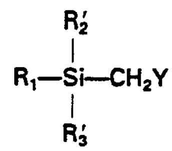

où $R'_2$ est un halogène ou $R_2$ et $R'_3$ est un halogène ou $R_3$, au moins l'un de $R'_2$ et $R'_3$ étant un halogène, et Y est tel que défini dans la revendication 15, avec un sel de sodium de triazole ou d'imidazole de formule

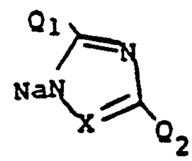

où X est N, CH ou $CCH_3$, et la réaction du produit intermédiaire ainsi obtenu avec $R_6OH$.

17. Un procédé de préparation d'un composé selon la revendication 1, qui comprend 1) la réaction d'un produit intermédiaire choisi dans le groupe

$Cl_3SiCH_2Cl$, 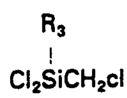 et 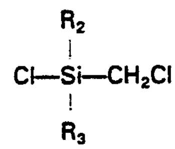

dans un solvant approprié avec $R_1M$ où M est Na, Li ou MgX où X est Br, Cl, I, à une température comprise entre −80°C et 40°C pour former un chlorométhylsilane; et 2) la réaction du chlorométhylsilane avec le 1,2,4-triazole, son dérivé 3-méthylé ou 3,5-diméthylé, ou leurs sels de métaux alcalins, dans des solvants aprotiques polaires, des éthers ou des cétones entre 0°C et 200°C.

18. Un procédé de préparation d'un composé selon la revendication 1, qui comprend 1) la réaction de

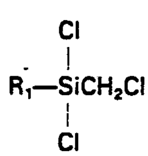

ou

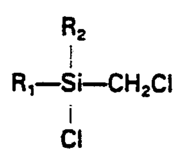

avec $R_6$ OH dans un solvant approprié avec une base appropriée à une température de 0—100°C pour former un alcoxy ou dialcoxy chlorométhylsilane; et 2) la réaction du chlorométhylsilane avec 1,2,4-triazole, son dérivé 3-méthylé ou 3,5-diméthylé ou leurs sels de métaux alcalins, dans des solvants aprotiques polaires, des éthers ou des cétones entre 0°C et 200°C.

19. Un procédé de préparation d'un composé selon la revendication 2, qui comprend 1) la réaction d'un produit intermédiaire choisi dans le groupe

$Cl_3SiCH_2Cl$, 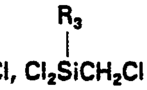 et 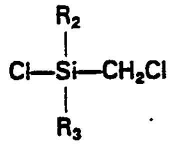

dans un solvant approprié avec $R_1'M$ où M est Na, Li ou MgX où X est Br, Cl ou I, à une température comprise entre −80°C et 40°C pour former un chlorométhylsilane; et 2) la réaction du chlorométhylsilane avec l'imidazole, ses dérivés 2-méthylé, 2,4-diméthylé, 4,5-diméthylé et 2,4,5-triméthylé ou leurs sels de métaux alcalins, dans des solvants aprotiques polaires, des éthers ou des cétones entre 0°C et 200°C.

20. Un procédé de préparation d'un composé selon la revendication 2, qui comprend 1) la réaction de

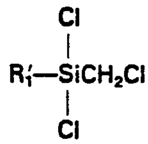 et 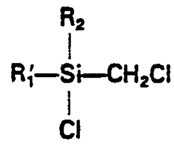

avec $R_6OH$ dans un solvant approprié avec une base appropriée à une température de 0°C á 100°C pour former un alcoxy ou dialcoxy chlorométhylsilane; et 2) la réaction du chlorométhylsilane avec l'imidazole, ses dérivés 2-méthylé, 2,4-méthylé, 4,5-méthylé et 2,4,5-triméthylé ou leurs sels de métaux alcalins, dans des solvants aprotiques polaires, des éthers ou des cétones entre 0°C et 200°C.

**Revendications pour l'Etat contractant: AT**

1. Un procédé de préparation d'un composé de la formule:

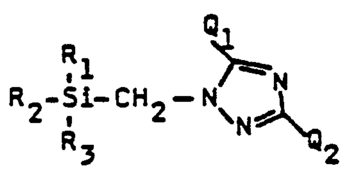

I

où

$Q_1$ et $Q_2$ sont indépendamment H ou $CH_3$

$R_1$ est un radical alcoyle en $C_2$—$C_{18}$, cycloalcoyle en $C_3$—$C_6$, naphtyle ou

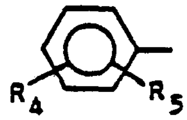

où

$R_4$ et $R_5$ sont indépendamment —H; un halogène; —$OCH_3$; —$OCF_3$; —$SCH_3$; —$SO_2CH_3$; un radical phényle, phényle substitué par un halogène et/ou un radical alcoyle en $C_1$—$C_4$ et/ou —$CF_3$; phénoxy; phénoxy substitué par un halogène et/ou un radical alcoyle en $C_1$—$C_4$ et/ou —$CF_3$; —$CF_3$; un radical alcoyle en $C_1$—$C_4$; ou un radical cyclohexyle;

$R_2$ et $R_3$ sont indépendamment un radical alcoyle en $C_1$—$C_6$, cycloalcoyle en $C_3$—$C_6$, $OR_6$, ou

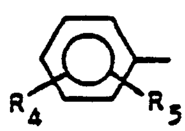 ;

où $R_6$ est un radical alcoyle en $C_1$—$C_4$, ou un groupe $R_6$ peut être H et/ou un groupe $R_6$ peut être

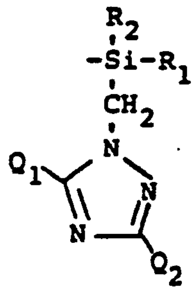

et $R_2$ et $R_3$ ensemble peuvent être un pont de 1,2-, 1,3- ou 1,4-glycol ou un pont de 1,4-glycol insaturé qui peut éventuellement être substitué par jusqu'a quatre groupes alcoyle $R_7$—$R_{10}$ qui ont un total de jusqu'a autre atomes de carbone,

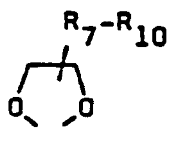 ou 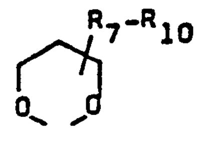 ou

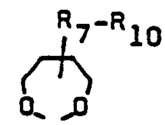 ou 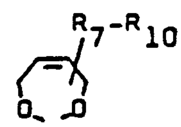

et ses sels avec des acides protiques et ses complexes avec des ions de métaux, qui comprend

(a) la réaction d'un dérivé de silane de formule

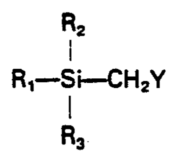

où $R_1$, $R_2$ et $R_3$ sont tels que définis ci-dessus et Y est du chlore, du brome ou un radical arylsulfonyloxy, avec un 1,2,4-triazole de formule

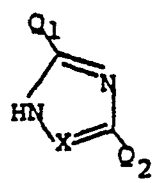

où $Q_1$ et $Q_2$ sont tels que définis ci-dessus ou avec un sel de métal alcalin d'un tel composé; ou

(b) la réaction d'un composé correspondant de formule

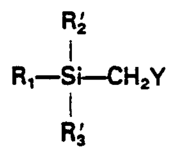

où $R_1$ et Y son tels que définis ci-dessus, $R_2'$ est un halogène ou $R_2$ et $R_3'$ est un halogène ou $R_3$, au moins l'un de $R_2'$ et $R_3'$ étant un halogène, avec un sel de sodium de triazole de formule

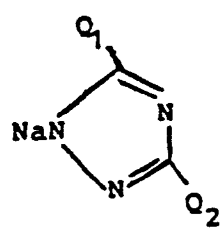

où $Q_1$ et $Q_2$ sont tels que définis ci-dessus, et la réaction du produit intermédiaire ainsi obtenu avec $R_6OH$ pour obtenir un produit de formule I dans lequel $R_2$ et/ou $R_3$ sont $R_6O$.

2. Un procédé de préparation d'un composé de formule I tel que défini dans la revendication 1, qui comprend 1) la réaction d'un produit intermédiaire choisi dans le groupe

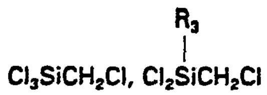

et

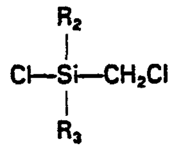

dans un solvant approprié avec $R_1M$ où M est Na, Li ou MgX où X est Br, Cl, I, à une température comprise entre −80°C et 40°C pour former un chlorométhylsilane; et 2) la réaction du chlorométhylsilane avec le 1,2,4-triazole, son dérivé 3-méthylé ou 3,5-diméthylé, ou leurs sels de métaux alcalins, dans des solvants aprotiques polaires, des éthers ou des cétones entre 0°C et 200°C.

3. Un procédé selon la revendication 1 ou 2, dans lequel

$Q_1$ et $Q_2$ sont H;

$R_1$ est un radical alcoyle en $C_2$— $C_{18}$, cycloalcoyle en $C_3$—$C_6$, naphtyle, ou

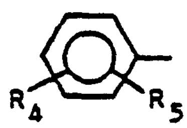

où $R_4$ et $R_5$ sont indépendamment —H, un halogène, un radical phényle, —$OCH_3$, —$SCH_3$, un radical phénoxy, —$CF_3$ ou un radical alcoyle en $C_1$—$C_4$; et $R_2$ et $R_3$ sont indépendamment un radical alcoyle en $C_1$—$C_6$, cycloalcoyle en $C_3$—$C_6$, où $OR_6$ où $R_6$ est H ou un radical alcoyle en $C_1$—$C_4$.

4. Un procédé de préparation d'un composé de la formule:

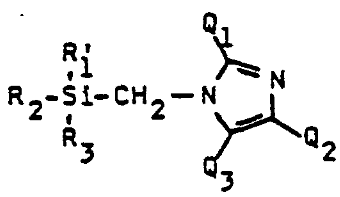

II

où

$Q_1$, $Q_2$ et $Q_3$ sont indépendamment H ou $CH_3$;

$R_1'$ est un radical alcoyle en $C_6$—$C_{18}$, cycloalcoyle en $C_3$—$C_6$, naphtyle ou

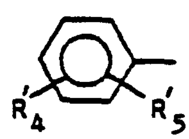

;

où $R_4'$ et $R_5'$ sont indépendamment un halogène; —$OCH_3$; —$OCF_3$; —$SCH_3$, —$SO_2CH_3$; un radical phényle; phényle substitué par un halogène et/ou un radical alcoyle en $C_1$—$C_4$ et/ou —$CF_3$; phénoxy; phénoxy substitué par un halogène et/ou un radical alcoyle en $C_1$—$C_4$ et/ou —$CF_3$; —$CF_3$; alcoyle $C_1$—$C_4$; ou cyclohexyle; ou l'un de $R_4'$ et $R_5'$ peut en outre être H; et

$R_2$ et $R_3$ sont indépendamment un radical alcoyle en $C_1$—$C_6$, cycloalcoyle en $C_3$—$C_6$, $OR_6$, ou

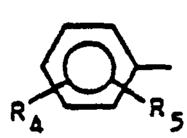

;

où $R_4$, $R_5$ et $R_6$ sont tels que définis dans la revendication 1; et $R_2$ et $R_3$ ensemble peuvent être un pont de 1,2-, 1,3- ou 1,4-glycol ou un pont de 1,4-glycol insaturé qui peut éventuellement être substitué par jusqu'à quatre groupes alcoyle $R_7$—$R_{10}$ qui ont un total de jusqu'à quatre atomes de carbone, à savoir

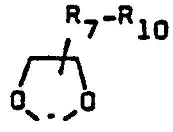 ou 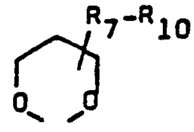 ou

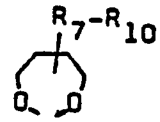 ou 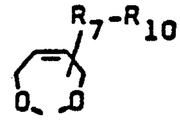

et ses sels avec des acides protiques et ses complexes avec des ions de métaux, qui comprend

(a) la réaction d'un dérivé de silane de formule

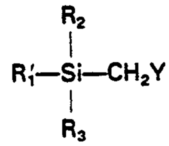

où $R_1'$, $R_2$ et $R_3$ sont tels que définis ci-dessus et Y est du chlore, du brome, de l'iode ou un radical arylsulfonyloxy, avec un imidazole de formule

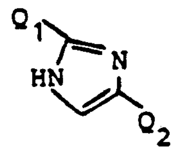

où $Q_1$ et $Q_2$ sont tels que définis ci-dessus, ou avec un sel de métal alcalin de celui-ci, ou

(b) la réaction d'un composé correspondant de formule

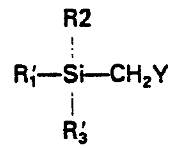

où $R_1'$ et Y sont tels que définis ci-dessus, $R_2'$ est un halogène ou $R_2$, $R_3'$ est un halogène ou $R_3$, au moins l'un de $R_2'$ et $R_3'$ étant un halogène, avec un sel de sodium d'imidazole de formule

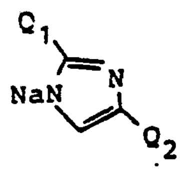

où $Q_1$ et $Q_2$ sont tels que définis ci-dessus, et la réaction du produit intermédiaire ainsi obtenu avec $R_6OH$ pour que l'on obtienne un composé de formule II dans lequel $R_2$ et/ou $R_3$ sont $R_6O$.

5. Un procédé de préparation d'un composé de formule II tel que défini dans la revendication 4, qui comprend 1) la réaction d'un produit intermédiaire choisi dans le groupe

$Cl_3SiCH_2Cl$, 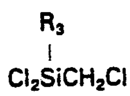 et 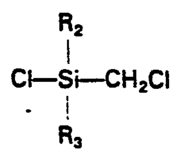

dans un solvant approprié avec R1M où M est Na, Li ou MgX où X est Br, Cl ou I, à une température comprise entre −80°C et 40°C pour former un chlorométhylsilane; et 2) la réaction du chlorométhylsilane avec l'imidazole, ses dérivés 2-méthylé, 2,4-diméthylé, 4,5-diméthylé et 2,4,5-triméthylé ou leurs sels de métaux alcalins, dans des solvants aprotiques polaires, des éthers ou des cétones entre 0°C et 200°C; $R_1'$, $R_2'$ et $R_3$ étant tels que définis dans la revendication 4.

6. Un procédé selon la revendication 4 ou 5, dans lequel $Q_1$, $Q_2$ et $Q_3$ sont H;

$R_1'$ est

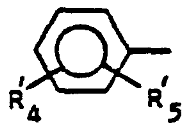

où $R'_4$ et $R'_5$ sont tels que définis dans la revendication 4; et $R_2$ et $R_3$ sont indépendamment un radical alcoyle en $C_1$—$C_4$ ou $OR_6$, où $R_6$ est H ou un radical alcoyle en $C_1$—$C_4$.

7. Un procédé selon l'une quelconque des revendications 1—6, dans lequel $Q_1$ et $Q_2$ sont H, $R_1$ ou $R'_1$ est

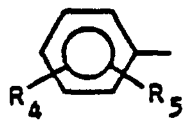

ou

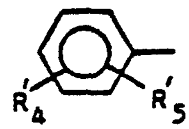

$R_2$ est un radical alcoyle en $C_1$—$C_4$ ou

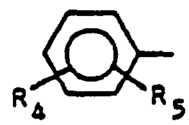

et $R_3$ est un radical alcoyle en $C_1$—$C_4$.

8. Un procédé selon la revendication 7, dans lequel $R_1$ et $R'_2$ sont

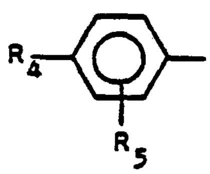

ou

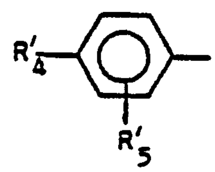

où

$R_4$ et $R'_4$ sont F, Cl, Br ou un radical phényle;

$R_5$ est H, F, Cl ou Br;

$R'_5$ est F, Cl, Br ou peut être H si $R'_4$ n'est pas H; et $R_2$ est

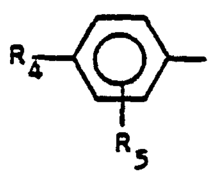

ou un radical alcoyle en $C_1$—$C_4$; et

$R_3$ est un radical alcoyle en $C_1$—$C_4$.

9. Un procédé selon la revendication 1 ou 4, dans lequel le produit est choisi parmi:
le (1,1'-bi-phényl-4-yl)diméthyl(1H-1,2,4-triazol-1-ylméthyl)-silane;
le bis(4-chlorophényl)méthyl(1H-1,2,4-triazol-1-ylméthyl)-silane;
le [bis(4-fluorophènyl)]méthyl(1H-1,2,4-triazol-1-ylméthyl)-silane;
le 4-fluorophényl(méthyl)phényl(1H-1,2,4-triazol-1-ylméthyl)-silane; et
le (2,4-dichlorophényl)diméthyl(1H-imidazol-1-ylméthyl)silane.

10. Un procédé de lutte contre les maladies fongiques en appliquant au lieu à protéger une quantité efficace d'un composé fongicide, caractérisé en ce que le composé fongicide comprend un composé de formule I tel que défini dans l'une quelconque des revendications 1—3 ou 7—9.

11. Un procédé de lutte contre les maladies fongiques en appliquant au lieu à protéger une quantité efficace d'un composé fongicide, caractérisé en ce que le composé fongicide comprend un composé de formule II tel que défini dans l'une quelconque des revendications 4—9.

12. Un procédé de lutte contre les maladies fongiques en appliquant au lieu à protéger une quantité efficace d'un composé fongicide, caractérisé en ce que le composé fongicide comprend un composé de formule:

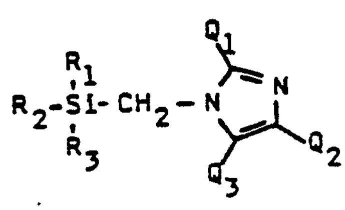

II

où

$Q_1$, $Q_2$, $Q_3$, $R_2$, $R_3$ et $R_6$ sont tels que définis dans la revendication 4; et
$R_1'$ est un radical alcoyle en $C_2$—$C_{18}$, cycloalcoyle en $C_3$—$C_6$, naphtyle ou

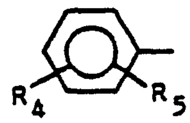 ;

où

$R_4$ et $R_5$ sont indépendamment —H; un halogène; —$OCH_3$; —$OCF_3$; —$SCH_3$; —$SO_2CH_3$; un radical phényle; phényle substitué par un halogène et/ou un groupe alcoyle en $C_1$—$C_4$ et/ou —$CF_3$; phéonxy; phénoxy substitué par un halogène et/ou un radical alcoyle en $C_1$—$C_4$ et/ou —$CF_3$; —$CF_3$; un radical alcoyle en $C_1$—$C_4$ ou un radical cyclohexyle; ou un sel d'un tel composé avec un acide protique ou un complexe d'un tel composé avec un ion de métal.